# EUROPÄISCHE PATENTSCHRIFT

(11) **EP 3 556 643 B1**
(45) Veröffentlichungstag und Bekanntmachung des Hinweises auf die Patenterteilung: **15.06.2022**
(21) Anmeldenummer: 19000139.6
(22) Anmeldetag: 20.03.2019
(51) Int. Cl.: B62K 25/02, B62M 9/125

(54) **SCHALTAUGE ZUR MONTAGE EINES HINTEREN SCHALTWERKS AN EINEM FAHRRADRAHMEN UND SET VON KOMPONENTEN ZUR WAHLWEISEN MONTAGE ALTERNATIVER HINTERER SCHALTWERKE AN DEM FAHRRADRAHMEN**
HANGER FOR MOUNTING A REAR DERAILLEUR ON A BICYCLE FRAME AND SET OF COMPONENTS FOR SELECTIVELY INSTALLING ALTERNATIVE REAR DERAILLEURS TO A BICYCLE FRAME
PATTE DE DÉRAILLEUR DESTINÉ AU MONTAGE D'UN MÉCANISME DE COMMUTATION ARRIÈRE À UN CADRE DE BICYCLETTE ET ENSEMBLE DE COMPOSANTS DESTINÉ AU MONTAGE SÉLECTIF DE MÉCANISMES ALTERNATIFS DE COMMUTATION ARRIÈRE AU CADRE DE BICYCLETTE

(30) Priorität: 20.04.2018 DE 102018206104
(43) Veröffentlichungstag der Anmeldung: 23.10.2019
(73) Patentinhaber: SRAM Deutschland GmbH, 97424 Schweinfurt (DE)
(72) Erfinder: Braedt, Henrik, 97456 Dittelbrunn-OT Hambach (DE)

(56) Entgegenhaltungen:
- EP-A1- 1 342 658
- EP-A1- 2 557 029
- EP-A1- 2 716 534
- EP-A1- 2 982 587
- US-A1- 2013 241 175
- US-A1- 2014 306 512

## Beschreibung

Die vorliegende Erfindung betrifft die Montage des hinteren Schaltwerks am zugeordneten hinteren, typischerweise rechten Halterungsabschnitt (im Folgenden entsprechend der üblichen Fachsprache auch als "Ausfallende" bezeichnet) des Fahrradrahmens mittels eines sogenannten Schaltauges.

Üblicherweise werden hintere Schaltwerke am rechten Ausfallende des Rahmens mit Hilfe eines Schaltauges befestigt. Bei dem Schaltauge handelt es sich regelmäßig um ein gegenüber dem Fahrradrahmen gesondertes Halterungselement (vgl. beispielsweise DE 20 2009 000 904 U1, EP 3 095 684 B1, EP 3 187 402 B1, und US 2013/0241175 A1), welches am rechten Ausfallende montiert wird und eine gegenüber der Hinterradachse radial versetzte Montageöffnung zur Anbringung des Basiselements des Schaltwerks aufweist. Auch wenn der Begriff Schaltauge sich ursprünglich auf die Montageöffnung selbst bezogen haben mag, wird fachsprachlich das die Montageöffnung aufweisende Halterungselement als "Schaltauge" bezeichnet. In der englischen Fachsprache ist für das Haltungselement der Begriff "hanger" üblich. Bekannt sind auch Fahrradrahmen mit in das rechte Ausfallende integriertem, insbesondere einteiligem Schaltauge (vgl. beispielsweise US 4,565,383 und DE-OS 2 260 252), die im Kontext der vorliegenden Erfindung aber von geringerem Interesse sind.

Für die Montage des hinteren Schaltwerks wird das gegenüber dem Fahrradrahmen gesonderte Schaltauge regelmäßig an seinem einen Ende koaxial mit der Hinterradachse am Rahmen festgelegt und an seinem anderen Ende mit dem Basiselement (auch als "B-Knuckle" bekannt) des Schaltwerks verbunden. Das Basiselement ist relativ zum Schaltauge um eine Drehachse (B-Achse) drehbar, um das Schaltwerk in eine relative SollPosition in Bezug auf die Hinterachse und damit ein Ritzelpaket eines hinteren Laufrads dreheinstellen zu können. So kann eine an einem beweglichen Element (auch als "P-Knuckle" bekannt) um eine Drehachse (P-Achse) drehbar gelagerte Kettenführungsanordnung in die richtige Ausgangsstellung gebracht werden. Das bewegliche Element ist über einen Bewegungsmechanismus, insbesondere Schwenkmechanismus, mit dem Basiselement verbunden.

Schaltaugen unterscheiden sich je nach Hersteller und Anbringungsart stark voneinander. Sie können - wie schon erwähnt - einteilig mit dem Rahmen ausgebildet sein oder - wie hier von besonderem Interesse - als separates Bauteil vorliegen. Separate Schaltaugen werden in der Regel entweder über Schnellspannachsen oder über Steckachsen am Rahmen geklemmt. Es ist sowohl die Klemmung auf der Rahmenaußenseite, als auch auf der Rahmeninnenseite möglich. Das führt dazu, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden. Durch das zusätzliche Bauteil kommen Toleranzen hinzu, die sich negativ auf die Positionierungsgenauigkeit des Schaltwerks auswirken.

Außerdem sind Schaltaugen, gerade als separate Bauteile, schadensanfällig und oftmals instabil. Bei großen Ritzelpaketen und entsprechend großen Schaltwerksdimensionen treten erhöhte Hebelkräfte auf, die von einem austauschbaren Schaltauge nur ungenügend aufgenommen werden können. Darüber hinaus wirken sich die vergrößerten Schaltwerksdimensionen mit den verlängerten Hebelverhältnissen zusätzlich negativ auf die Positionierungsgenauigkeit des Schaltwerks aus. Im Konflikt dazu steht, dass gerade eine erhöhte Anzahl von eng nebeneinander angeordneten Ritzeln eine erhöhte Positionierungsgenauigkeit verlangt.

Das Hinterrad umfasst unter anderem eine Hinterradnabe mit einer hohlen Nabenachse (auch Hohlachse genannt). Zur Befestigung des Hinterrads am Rahmen wird eine separate Steckachse oder Schnellspannerachse durch die Nabenachse der Hinterradnabe geführt und mit dem Rahmen verspannt.

Dokument EP2557029A1 zeigt die Präambel des Anspruchs 1.

Es sind auch Schaltwerker zur koaxialen Montage an der Hinterradachse bekannt, die ohne ein Schaltauge auskommen. Beispielsweise beschreiben die EP 0 875 444 A1, die EP 1 342 658 A1 und die EP 1 764 297 A1 solche Schaltwerke, bei denen das separate Schaltauge entfällt. Die Drehachse des Basiselements verläuft entlang der Hinterradachse, ist also mit dieser koaxial.

Üblicherweise umfassen die bekannten Schaltwerke zur koaxialen Montage an der Hinterradachse ein Basiselement mit einem Befestigungsende, welches eine Öffnung zur Aufnahme einer Achse aufweist. Das Befestigungsende wird ähnlich wie ein Schaltauge entweder außen oder innen am Rahmen befestigt. Dazu wird es am Rahmen kraftschlüssig mittels Steckachse oder Schnellspannachse geklemmt. Diese bekannten koaxialen Ausführungen weisen jedoch Mängel auf.

Zum einen ist die mangelnde Stabilität der Anordnung zu nennen. Moderne Ritzelpakete umfassen eine immer weiter steigende Anzahl von elf oder mehr Ritzeln. Um diese mit dem koaxial zu Hinterradachse montierten Schaltwerk bedienen zu können, wird die Schaltwerksdimension erhöht. Damit einhergehend steigen auch die auf das Schaltwerk wirkenden Hebelkräfte, so dass das Schaltwerk zum Verkippen gegenüber den Rotationsebenen der Ritzel neigt. Nur ein exakt vertikal unter dem Ritzelpaket stehendes Schaltwerk lässt sich präzise schalten.

Zum anderen ist die Abhängigkeit von Rahmentoleranzen problematisch. Da herkömmliche Schaltwerke für die zur Hinterradachse koaxiale Montage direkt am Rahmen befestigt und gegenüber diesem referenziert sind, wirken sich Fertigungstoleranzen des Rahmens auch direkt auf das Schaltwerk aus.

Darunter leidet die Positionierungsgenauigkeit und Einstellbarkeit des Schaltwerks.

Im Hinblick auf diese und andere Nachteile des Stands der Technik hat die Anmelderin SRAM Deutschland GmbH einen neuen Typ eines hinteren Schaltwerks zur koaxialen Montage an einer Hinterradachse entwickelt, auf welches anhängige Patentanmeldungen gerichtet sind, nämlich die am 16. Februar 2018 eingereichte Deutsche Patentanmeldung Az. 10 2018 001 253.1, die die innere Priorität der am 20. März 2017 eingereichten Deutschen Patentanmeldung Az. 10 2017 002 629.7 in Anspruch nimmt, und die am 14. März 2018 eingereichte Europäische Patentanmeldung Az. 18 000 255.2, die die Prioritäten dieser beiden Deutschen Patentanmeldungen in Anspruch nimmt. Ferner wurden entsprechende Anmeldungen in Taiwan (TW, Az. 107 107 712, Anmeldetag 07.03.2018), in China (CN, Az. 2018 1021 7966.9, Anmeldetag 16.03.2018) und in den USA (US, Az. 15/926,194, Anmeldetag 20.03.2018) eingereicht.

Die Bereitstellung eines mit einer ein solches hinteres Schaltwerk des neuen Typs aufweisenden Kettenschaltung ausgestatteten Fahrrads kann zweckmäßig auf Grundlage der folgenden und weiterer üblicher Komponenten erfolgen:
- ein hinteres Laufrad (Hinterrad) mit einer eine Hinterradachsanordnung umfassenden Statoranordnung und einer Rotoranordnung, die relativ zur Statoranordnung drehbar gelagert oder lagerbar ist und eine ein Ritzelpaket der Kettenschaltung tragende Laufradnabe umfasst; und
- ein Fahrradrahmen, welcher einen linken hinteren Halterungsabschnitt und einen rechten hinteren Halterungsabschnitt für eine innere Achse der Hinterradachsanordnung des hinteren Laufrads aufweist, welche einen vorbestimmten definierten Axialabstand längs einer geometrischen Achse der mittels der Halterungsabschnitte an dem Rahmen montierten inneren Achse aufweisen und jeweils ein Gegenlager für eine an der inneren Achse angeordnete, im montierten Zustand zwischen den Halterungsabschnitten eingespannte und eine Baugruppe der Statoranordnung umfassende Komponentengruppe bilden;
sowie das hintere Schaltwerk des neuen Typs (im Folgenden auch als hinteres Schaltwerk eines zweiten Typs bezeichnet) zur koaxialen Montage in Bezug auf die geometrische Achse, umfassend:
- ein Basiselement,
- einen vorzugsweise als Schwenkmechanismus ausgeführten Bewegungsmechanismus,
- ein bewegliches Element, und
- eine Kettenführungsanordnung,
wobei der Bewegungsmechanismus das Basiselement mit dem beweglichen Element verbindet, und die Kettenführungsanordnung um eine Drehachse drehbar mit dem beweglichen Element verbunden ist. Diese Schaltwerk des neuen (zweiten) Typs zeichnet sich dadurch aus, dass das Basiselement ein erstes Anschlussende zur koaxialen Montage an der Hinterradachse und ein zweites Anschlussende zur Kopplung mit dem Bewegungsmechanismus umfasst, wobei das erste Anschlussende einen Einspannabschnitt aufweist, der im Falle der Montage des hinteren Schaltwerks des zweiten Typs am Fahrradrahmen auf der axialen Innenseite des zugeordneten der hinteren Halterungsabschnitte positioniert ist und zu der im montierten Zustand zwischen den Halterungsabschnitten eingespannten Komponentengruppe gehört.

Trotz des sehr vorteilhaften hinteren Schaltwerks des neuen (zweiten) Typs wird auch weiterhin Bedarf für Fahrräder bestehen, welche mit einer ein herkömmliches hinteres Schaltwerk aufweisenden Kettenschaltung ausgestattet sind. Diesbezüglich wird im Kontext hier speziell an Kettenschaltungen gedacht, deren hinteres Schaltwerk mittels eines gegenüber dem Fahrradrahmen gesonderten Schaltauges der oben angesprochenen Art am Rahmen montiert wird, und zwar nicht-koaxial in Bezug auf die Hinterradachse. Die Bereitstellung eines mit einer ein solches herkömmliches hinteres Schaltwerk aufweisenden Kettenschaltung ausgestatteten Fahrrads kann zweckmäßig (wie an sich bekannt) auf Grundlage der folgenden und weiterer üblicher Komponenten erfolgen:
- ein hinteres Laufrad (Hinterrad) mit einer eine Hinterradachsanordnung umfassenden Statoranordnung und einer Rotoranordnung, die relativ zur Statoranordnung drehbar gelagert oder lagerbar ist und eine ein Ritzelpaket der Kettenschaltung tragende Laufradnabe umfasst; und
- ein Fahrradrahmen, welcher einen linken hinteren Halterungsabschnitt und einen rechten hinteren Halterungsabschnitt für eine innere Achse der Hinterradachsanordnung des hinteren Laufrads aufweist, welche einen vorbestimmten definierten Axialabstand längs einer geometrischen Achse der mittels der Halterungsabschnitte an dem Rahmen montierten inneren Achse aufweisen und jeweils ein Gegenlager für eine an der inneren Achse angeordnete, im montierten Zustand zwischen den Halterungsabschnitten eingespannte und eine Baugruppe der Statoranordnung umfassende Komponentengruppe bilden;
sowie das hintere Schaltwerk des herkömmlichen Typs (im Folgenden auch als hinteres Schaltwerk eines ersten Typs bezeichnet) zur nicht-koaxialen Montage in Bezug auf die geometrische Achse, umfassend:
- ein Basiselement,
- einen vorzugsweise als Schwenkmechanismus ausgeführten Bewegungsmechanismus,
- ein bewegliches Element, und
- eine Kettenführungsanordnung,
wobei der Bewegungsmechanismus das Basiselement mit dem beweglichen Element verbindet, und die Kettenführungsanordnung um eine Drehachse drehbar mit dem beweglichen Element verbunden ist. Bei dem hier angesprochenen herkömmlichen (ersten) Typ des hinteren Schaltwerks umfasst das Basiselement ein erstes Anschlussende zur gegenüber der geometrischen Achse radial versetzten Montage an dem Fahrradrahmen und ein zweites Anschlussende zur Kopplung mit dem Bewegungsmechanismus. Ein gegenüber dem Fahrradrahmen gesondertes, fachsprachlich als Schaltauge bezeichenbares Halterungselement dient zur Montage des hinteren Schaltwerks des ersten Typs an dem Fahrradrahmen, wobei hier speziell an ein an einer axialen Innenseite eines zugeordneten der hinteren Halterungsabschnitte positionierbares bzw. positioniertes Halterungselement gedacht wird. Im Falle der Montage des hinteren Schaltwerks dieses herkömmlichen (ersten) Typs am Fahrradrahmen gehört ein solches Halterungselement (Schaltauge) zu der im montierten Zustand zwischen den Halterungsabschnitten eingespannten Komponentengruppe. Eine Montageöffnung des Halterungselements, mittels der das erste Anschlussende des Basiselements an dem Halterungselement festlegbar ist, ist dann gegenüber der geometrischen Achse radial versetzt.

Es wird nun vorgeschlagen, dass ein hinsichtlich der Auslegung der hinteren Halterungsabschnitte und speziell deren axialer Abstand entlang der geometrischen Achse für die Ausstattung mit dem hinteren Schaltwerk des neuen (zweiten) Typs vorgesehener Fahrradrahmen wahlweise mit dem hinteren Schaltwerk des herkömmlichen (ersten) Typs oder mit dem hinteren Schaltwerk des neuen (zweiten) Typs ausgestattet wird. Es werden also die gleichen Rahmentypen sowohl mit einer Kettenschaltung mit einem hinteren Schaltwerk des herkömmlichen (ersten Typs) als auch mit einer Kettenschaltung mit dem hinteren Schaltwerk des neuen (zweiten) Typs ausgestattet, und es werden auch konkrete Lösungen bereitgestellt, wie dies besonders vorteilhaft realisierbar ist. Die Anzahl von verschiedenen Rahmentypen, die hergestellt und bereitgehalten werden müssen, ist somit deutlich reduziert.

Es handelt sich hierbei nicht um eine triviale oder naheliegende technische Lehre, alleine schon weil ein hinteres Schaltwerk des neuen (zweiten) Typs mit dem Einspannabschnitt seines fachmännisch dimensionierten Basiselements regelmäßig mehr axialen Platz zwischen den hinteren Halterungsabschnitten einnehmen dürfte als ein herkömmliches, an der Innenseite des zugeordneten Halterungsabschnitts angeordnetes Halterungselement (Schaltauge) für die Montage des hinteren Schaltwerk des herkömmlichen (ersten) Typs. Auch weitere Ausgestaltungen der in den angesprochenen anhängigen Patentanmeldungen beschriebenen konkreten Ausführungsformen des hinteren Schaltwerks des neuen (zweiten) Typs weisen in Richtung der Verwendung eines Rahmens, der an seinen hinteren Halterungsabschnitten speziell für die Montage des hinteren Schaltwerks des neuen (zweiten) Typs ausgelegt ist und eigentlich nicht für die Montage eines Halterungselements (Schaltauge) vorgesehen ist, welches die nicht-koaxiale Montage eines hinteren Schaltwerk des herkömmlichen (ersten) Typs als Alternative ermöglichen könnte.

Konkreter wird ein Set von Komponenten vorgeschlagen, jedoch nicht beansprucht, welches zur Bereitstellung eines mit einer Kettenschaltung ausgestatteten Fahrrads dient, wobei die Kettenschaltung wahlweise mit einem hinteren Schaltwerk des ersten Typs oder mit einem hinteren Schaltwerk des zweiten Typs ausführbar ist, umfassend:
- wenigstens ein hinteres Laufrad mit einer eine Hinterradachsanordnung umfassenden Statoranordnung und einer Rotoranordnung, die relativ zur Statoranordnung drehbar gelagert oder lagerbar ist und eine ein Ritzelpaket der Kettenschaltung tragende Laufradnabe umfasst;
- wenigstens einen Fahrradrahmen, welcher einen linken hinteren Halterungsabschnitt und einen rechten hinteren Halterungsabschnitt für eine innere Achse der Hinterradachsanordnung des hinteren Laufrads aufweist, welche einen vorbestimmten definierten Axialabstand längs einer geometrischen Achse der mittels der Halterungsabschnitte an dem Rahmen montierten inneren Achse aufweisen und jeweils ein Gegenlager für eine an der inneren Achse angeordnete, im montierten Zustand zwischen den Halterungsabschnitten eingespannte und eine Baugruppe der Statoranordnung umfassende Komponentengruppe bilden;
- wenigstens ein hinteres Schaltwerk des ersten Typs zur nicht-koaxialen Montage in Bezug auf die geometrische Achse, umfassend:
   - ein Basiselement,
   - einen vorzugsweise als Schwenkmechanismus ausgeführten Bewegungsmechanismus,
   - ein bewegliches Element, und
   - eine Kettenführungsanordnung,
      wobei der Bewegungsmechanismus das Basiselement mit dem beweglichen Element verbindet, und die Kettenführungsanordnung um eine Drehachse drehbar mit dem beweglichen Element verbunden ist, und
      wobei das Basiselement ein erstes Anschlussende zur gegenüber der geometrischen Achse radial versetzten Montage an dem Fahrradrahmen und ein zweites Anschlussende zur Kopplung mit dem Bewegungsmechanismus umfasst; und
- wenigstens ein gegenüber dem Fahrradrahmen gesondertes, an einer axialen Innenseite eines zugeordneten der hinteren Halterungsabschnitte positionierbares Halterungselement, welches zur Montage des hinteren Schaltwerks des ersten Typs an dem Fahrradrahmen dient. Im Falle der Montage des hinteren Schaltwerks des ersten Typs am Fahrradrahmen gehört das Halterungselement zu der im montierten Zustand zwischen den Halterungsabschnitten eingespannten Komponentengruppe und eine Montageöffnung des Halterungselements, mittels der das erste Anschlussende des Basiselements an dem Halterungselement festlegbar ist, ist gegenüber der geometrischen Achse radial versetzt.

Es gehört zu diesem Set von Komponenten zusätzlich:
- wenigstens ein hinteres Schaltwerk des zweiten Typs zur koaxialen Montage in Bezug auf die geometrische Achse, umfassend:
   - ein Basiselement,
   - einen vorzugsweise als Schwenkmechanismus ausgeführten Bewegungsmechanismus,
   - ein bewegliches Element, und
   - eine Kettenführungsanordnung,
      wobei der Bewegungsmechanismus das Basiselement mit dem beweglichen Element verbindet, und die Kettenführungsanordnung um eine Drehachse drehbar mit dem beweglichen Element verbunden ist, und
      wobei das Basiselement ein erstes Anschlussende zur koaxialen Montage an der Hinterradachse und ein zweites Anschlussende zur Kopplung mit dem Bewegungsmechanismus umfasst, wobei das erste Anschlussende einen Einspannabschnitt aufweist, der im Falle der Montage des hinteren Schaltwerks des zweiten Typs am Fahrradrahmen auf der axialen Innenseite des zugeordneten der hinteren Halterungsabschnitte positioniert ist und zu der im montierten Zustand zwischen den Halterungsabschnitten eingespannten Komponentengruppe gehört.

Auf Basis des Sets von Komponenten kann ein Fahrradhersteller oder Fahrradausrüster ein jeweiliges Fahrrad unter Verwendung des gleichen Rahmentyps wahlweise unter Verwendung einer den ersten Typ von hinterem Schaltwerk aufweisenden Kettenschaltung oder unter Verwendung einer den zweiten Typ von hinterem Schaltwerk aufweisenden Kettenschaltung aufbauen, was die Flexibilität erhöht und große Kostenvorteile ergibt. Die verschiedenen Komponenten des Sets können unabhängig voneinander hergestellt, beschafft und vorgehalten werden, ohne ausdrücklich aufeinander bezogen und als Komponenten eines Sets von Komponenten identifiziert zu sein. Ein Fahrradhersteller oder Fahrradausrüster hat ein Set von Komponenten in seinem Besitz, wenn er auf die in der Definition des Sets von Komponenten angesprochenen Komponenten ohne weiteres zugreifen kann, insbesondere weil sich diese Komponenten in seinem Besitz befinden, ohne dass diese Komponenten notwendigerweise an einem gemeinsamen Ort bereitgestellt sein müssen, und wenn der Fahrradhersteller oder Fahrradausrüster mit ausgewählten dieser Komponenten, unter Verwendung eines gleichen Typs von Fahrradrahmens, ein jeweiliges Fahrrad mit einer Kettenschaltung ausrüsten kann, welche entweder das hintere Schaltwerk des ersten Typs oder das hintere Schaltwerk des zweiten Typs aufweist. Es ist nicht nötig, dass zu einem Zeitpunkt oder in einem in Betracht gezogenen Zeitraum tatsächlich beide Typen des hinteren Schaltwerks zum Einsatz kommen und an einem jeweiligen Fahrradrahmen montiert werden.

Bevorzugte Ausgestaltungen des hinteren Schaltwerks des zweiten Typs und damit des Sets von Komponenten ergeben sich aus den oben angesprochenen anhängigen Patentanmeldungen.

Bevorzugte , jedoch nicht beanspruchte Ausgestaltungen des hinteren Schaltwerks des zweiten Typs und damit des Sets von Komponenten sowie bevorzugte Ausgestaltungen des hinteren Schaltwerks des ersten Typs und damit des Sets von Komponenten sowie zu dem Set bevorzugt zugehörige weitere Komponenten ergeben sich ferner aus den folgenden Ausführungen.

Betreffend das hintere Schaltwerk des zweiten Typs ist es bevorzugt, dass das erste Anschlussende einen den Einspannabschnitt bildenden ersten Arm und einen zweiten Arm aufweist, die in axialer Richtung voneinander beabstandet angeordnet sind, vorzugsweise derart dass der zweite Arm im Falle der Montage des hinteren Schaltwerks des zweiten Typs am Fahrradrahmen auf einer axialen Außenseite des Rahmens positioniert ist. Mittels der beiden voneinander beabstandeten Arme des Basiselements können zwei axial beabstandete Befestigungspunkte bereitgestellt werden, die im montierten Zustand des Schaltwerks eine stabile Ausrichtung des Schaltwerks parallel zur Rotationsebene der Ritzel und damit senkrecht zur Hinterradachse gewährleisten. Auch kann so ein Verkippen des Schaltwerks aus dieser Ebene selbst bei größeren Kräften wirksam verhindert werden. Die zwei axial beabstandeten Befestigungspunkte des Basiselements, die direkt oder indirekt an der Hinterradachse oder dem Rahmen angreifen, können die am Schaltwerk angreifenden Kräfte deutlich besser aufnehmen als es bei bekannten Schaltwerken mit nur einem Befestigungsende möglich ist.

Zweckmäßig kann das Set von Komponenten wenigstens einen in eine Rahmenöffnung des dem Halterungselement und dem Einspannabschnitt zugeordneten der hinteren Halterungsabschnitte einsetzbaren, mittels einer vorzugsweise als Schraubverbindung ausgeführten Formschlussverbindung an diesem Halterungsabschnitt fixierbaren Adapter umfassen, der im Falle der Montage des hinteren Schaltwerks des ersten Typs am Fahrradrahmen dafür vorgesehen ist, in eine zugeordnete Öffnung oder Aussparung des Halterungselements einzugreifen oder sich durch diese zu erstrecken und der im Falle der Montage des hinteren Schaltwerks des zweiten Typs am Fahrradrahmen dafür vorgesehen ist, in eine zugeordnete Öffnung oder Aussparung des Einspannabschnitts bzw. des ersten Arms einzugreifen oder sich durch diese zu erstrecken sowie gewünschtenfalls in eine zugeordnete Öffnung oder Aussparung des zweiten Arms (wenn vorgesehen) einzugreifen oder sich durch diese zu erstrecken.

Ein für die Montage beider Typen von hinteren Schaltwerken geeigneter Adapter ist aber nicht zwingend. Alternativ wird daran gedacht, dass das Set von Komponenten wenigstens einen in eine Rahmenöffnung des dem Halterungselement und dem Einspannabschnitt zugeordneten der hinteren Halterungsabschnitte einsetzbaren, mittels einer vorzugsweise als Schraubverbindung ausgeführten Formschlussverbindung an diesem Halterungsabschnitt fixierbaren Adapter eines ersten Typs aufweist, der im Falle der Montage des hinteren Schaltwerks des ersten Typs am Fahrradrahmen dafür vorgesehen ist, in eine zugeordnete Öffnung oder Aussparung des Halterungselements einzugreifen oder sich durch diese zu erstrecken. Ferner wird daran gedacht, dass das Set von Komponenten wenigstens einen in eine Rahmenöffnung des dem Halterungselement und dem Einspannabschnitt zugeordneten der hinteren Halterungsabschnitte einsetzbaren, mittels einer vorzugsweise als Schraubverbindung ausgeführten Formschlussverbindung an diesem Halterungsabschnitt fixierbaren Adapter eines zweiten Typs aufweist, der im Falle der Montage des hinteren Schaltwerks des zweiten Typs am Fahrradrahmen dafür vorgesehen ist, in eine zugeordnete Öffnung oder Aussparung des Einspannabschnitts bzw. des ersten Arms einzugreifen oder sich durch diese zu erstrecken sowie gewünschtenfalls in eine zugeordnete Öffnung oder Aussparung des zweiten Arms (wenn vorgesehen) einzugreifen oder sich durch diese zu erstrecken. Bevorzugt weist das Set von Komponenten wenigstens einen Adapter des ersten Typs und wenigstens einen Adapter des zweiten Typs auf.

Vorteilhaft kann der Adapter an einem Bolzenabschnitt mit einem Anlagebereich und einem Ausgleichsbereich ausgeführt sein. Der Anlagebereich ist vorzugsweise so dimensioniert, dass er am Innendurchmesser der Rahmenöffnung anliegt. Der Ausgleichsbereich kann demgegenüber beispielsweise konisch zulaufen und etwas mehr Spiel gegenüber der Rahmenöffnung aufweisen. Aufgrund des erhöhten Spiels kann der Bolzenabschnitt und damit der gesamte Adapter gegenüber der Rahmenöffnung ausgerichtet werden. Rahmenungenauigkeiten können so ausgeglichen werden. Der Adapter kann sich so koaxial mit der Hinterradachse ausrichten, auch wenn die Rahmenöffnungsachse toleranzbedingt von dieser abweicht.

Vorteilhaft kann man vorsehen, dass der Adapter bzw. der Adapter des ersten Typs einerseits und die zugeordnete Öffnung oder Aussparung des Halterungselements andererseits derart relativ zueinander dimensioniert sind, dass der Adapter bzw. der Adapter des ersten Typs im montierten Zustand das Halterungselement in Bezug auf die geometrische Achse zentriert. Eine solche Zentrierung ist für die ordnungsgemäße Positionierung des hinteren Schaltwerks in Bezug auf das Ritzelpaket des hinteren Laufrad bedeutsam.

Im Falle der angesprochenen Ausbildung ersten Anschlussendes mit dem zweiten Arm kann der Adapter bzw. der Adapter des zweiten Typs im Falle der Montage des hinteren Schaltwerks des zweiten Typs am Fahrradrahmen zweckmäßig in eine zugeordnete Öffnung oder Aussparung des zweiten Arms eingreifen oder sich durch diese erstrecken, wodurch das Basiselement des Schaltwerks des zweiten Typs besonders sicher und positionsgenau in seiner zur Hinterradachse koaxialen und in Bezug auf das Ritzelpaket richtigen Stellung am Rahmen gehalten werden kann. In diesem Zusammenhang mag man ferner vorgesehen, dass im montierten Zustand der sich durch die zugeordnete Öffnung oder Aussparung des zweiten Arms erstreckende Adapter eine Außenseite des zweiten Arms bereichsweise übergreift und über diesen eine Spannkraft gegen den zugeordneten hinteren Halterungsabschnitt ausübt. Beide Arme des Basiselements des Schaltwerks wären dann zusammen mit dem zugeordneten hinteren Halterungsabschnitt im montierten Zustand eingespannt, wodurch das Basiselement besonders fest und sicher am hinteren Halterungselement festgelegt werden könnte. Es spricht aber auch einiges dafür, auf eine solche Festlegung durch Festspannen des Basiselements am zugeordneten hinteren Halterungsabschnitt mittels des Adapters zu verzichten, um im Zuge der Montage nach dem Montieren des Adapters eine Justage-Verdrehbarkeit des Basiselements relativ zur Hinterachse vorzusehen.

Vorteilhaft können der Adapter bzw. der Adapter des zweiten Typs einerseits und die zugeordnete Öffnung oder Aussparung des Einspannabschnitts bzw. ersten Arms oder/und die zugeordnete Öffnung oder Aussparung des zweiten Arms andererseits derart relativ zueinander dimensioniert sein, dass der Adapter bzw. der Adapter des zweiten Typs im montierten Zustand das Anschlussende des Basiselements in Bezug auf die geometrische Achse zentriert. Eine solche Zentrierung ist für die ordnungsgemäße Positionierung des hinteren Schaltwerks in Bezug auf das Ritzelpaket des hinteren Laufrad bedeutsam, wie schon in Bezug auf das Halterungselement erwähnt. Eine gute und der Wirkung von auf das Basiselement wirkenden Kräften in hohem Maße widerstehen der Zentrierung wird erreicht, wenn der erste Arm als auch der zweite Arm auf diese Weise zentriert wird.

Bevorzugt ist vorgesehen, dass sich im montierten Zustand die innere Achse durch den Axialbereich des Halterungselements bzw. des Einspannabschnitts bzw. ersten Arms erstreckt, vorzugsweise hindurch durch eine/die Öffnung oder Aussparung des Halterungselements bzw. durch eine/die Öffnung oder Aussparung des Einspannabschnitts bzw. ersten Arms. Dabei wird vor allem daran gedacht, dass die innere Achse als Steckachse ausgeführt ist. Es kommt aber auch eine Ausführung der inneren Achse als Schnellspannachse in Betracht, die dann ein gegenüber dem Adapter gesondertes, auf diesem außen aufliegendes Spann- oder Gegenlagerelement aufweisen könnte. Der im Folgenden als zweckmäßig vorgeschlagene Schraubeingriff zwischen der inneren Achse und dem Adapter bzw. dem Adapter des ersten Typs bzw. dem Adapter des zweiten Typs bräuchte dann nicht realisiert sein und die Spannkraft könnte auf wie bei Schnellspannachsen an sich bekannte Art und Weise aufgebracht werden.

Weiterbildend wird vorgeschlagen, dass die insbesondere als Steckachse ausgeführte innere Achse an einem Gewindeeingriffsende mit einem zugeordneten Gewinde des Adapters bzw. des Adapters des ersten Typs bzw. des Adapters des zweiten Typs verschraubt oder verschraubbar ist, wobei vorzugsweise die im montierten Zustand die die Baugruppe der Statoranordnung umfassende Komponentengruppe zwischen den Halterungsabschnitten einspannende Spannkraft durch Verschrauben des Gewindeeingriffsendes mit dem zugeordneten Gewinde des Adapters bzw. des Adapters des ersten Typs bzw. des Adapters des zweiten Typs aufbringbar ist. Dabei kann man vorteilhaft vorsehen, dass der Adapter bzw. der Adapter des ersten Typs und das Halterungselement durch einen Formschlußeingriff aneinander axial festlegbar, beispielsweise miteinander verschraubbar sind, oder/und dass der Adapter bzw. der Adapter des zweiten Typs und der Einspannabschnitt bzw. der erste Arm durch einen Formschlußeingriff aneinander axial festlegbar, beispielsweise miteinander verschraubbar sind.

Zu letzteren Ausgestaltungsmöglichkeiten gibt es viele Möglichkeiten der konkreten Realisierung, wobei im Zusammenhang mit der Montage des Schaltwerks des ersten Typs und im Zusammenhang mit der Montage des Schaltwerks des zweiten Typs unterschiedliche Lösungen in Betracht kommen und auch favorisiert werden, aber nicht zwingend sind.

So könnte im Zusammenhang mit der Montage des Schaltwerks des ersten Typs der Adapter bzw. der erste Adapter unmittelbar mit dem Halterungselement verschraubt werden, wofür dieses eine Einschrauböffnung aufweisen könnte, in die ein ein Außengewinde aufweisender Schraubbolzenabschnitt des Adapters eingeschraubt wird. Der hierzu vorzugsweise einteilig ausgeführte Adapter bzw. erste Adapter könnte dann unter Vermittlung des Halterungselements am zugeordneten hinteren Halterungsabschnitt des Rahmens fixiert sein. Dies ist die bevorzugte Ausgestaltung im Falle der Verwendung des Schaltwerks des ersten Typs.

Der Adapter bzw. der erste Adapter könnte im Zusammenhang mit der Montage des Schaltwerks des ersten Typs aber auch zweiteilig sein, mit einem ersten Adapterelement, welches mit einem ein Außengewinde aufweisenden Schraubbolzenabschnitt ausgeführt ist, und einem zweiten Adapterelement, welches mit einem eine Einschrauböffnung aufweisenden Mutterabschnitt ausgeführt ist. Zur Fixierung des Adapters bzw. ersten Adapters am zugeordneten Halterungsabschnitt könnte dann das erste Adapterelement mit seinem Schraubbolzen von der Außenseite des zugeordneten Halterungsabschnitts in die Einschrauböffnung des auf der Innenseite des Halterungsabschnitt positionieren zweiten Adapterelements eingeschraubt werden. Eine von der im montierten Zustand wirkenden Spannkraft unabhängige unmittelbare axiale und rotatorische Festlegung des Adapters bzw. Adapters des ersten Typs und des Halterungselements aneinander bzw. mit dem hinteren Halterungsabschnitts des Rahmens durch gegenseitiges Festspannen bräuchte dann nicht zwingend realisiert sein, käme aber als durchaus zweckmäßig in Betracht, wofür das zweite Adapterelement auf einer Innenseite des Halterungselements angeordnet sein könnte.

So könnte der Adapter bzw. der zweite Adapter im Zusammenhang mit der Montage des Schaltwerks des zweiten Typs zweiteilig sein, mit einem ersten Adapterelement, welches mit einem ein Außengewinde aufweisenden Schraubbolzenabschnitt ausgeführt ist, und einem zweiten Adapterelement, welches mit einem eine Einschrauböffnung aufweisenden Mutterabschnitt ausgeführt ist. Zur Fixierung des Adapters bzw. zweiten Adapters am zugeordneten Halterungsabschnitt könnte dann das erste Adapterelement mit seinem Schraubbolzen von der Außenseite des zugeordneten Halterungsabschnitts bzw. von der Außenseite des außen auf dem Halterungsabschnitt angeordneten zweiten Arms in die Einschrauböffnung des auf der Innenseite des Halterungsabschnitt positionieren zweiten Adapterelements eingeschraubt werden. Dies ist die bevorzugte Ausgestaltung im Falle der Verwendung des Schaltwerks des zweiten Typs. Eine von der im montierten Zustand wirkenden Spannkraft unabhängige unmittelbare axiale und rotatorische Festlegung des Adapters bzw. Adapters des zweiten Typs und des Einspannabschnitts bzw. ersten Arms aneinander bzw. mit dem hinteren Halterungsabschnitt des Rahmens durch gegenseitiges Festspannen wäre dann vorzugsweise nicht realisiert, kommt aber ebenfalls in Betracht, wofür das zweite Adapterelement auf einer Innenseite des Einspannabschnitts bzw. ersten Arms angeordnet sein könnte. Es spricht aber einiges dafür, auf eine solche Festlegung durch Festspannen des Basiselements am zugeordneten hinteren Halterungsabschnitt mittels des Adapters zu verzichten, um im Zuge der Montage nach dem Montieren des Adapters eine Justage-Verdrehbarkeit des Basiselements relativ zur Hinterachse vorzusehen. Für eine solche Realisierung wird weiterbildend vorgeschlagen, dass das Basiselement wenigstens einen Anschlag und der Adapter wenigstens einen Gegenanschlag aufweisen, die eine solche Relativverdrehung begrenzen. Wird der Adapter im Zuge der Montage in einer vorgegebenen Drehrichtung (etwa im Uhrzeigersinn (UZS)) gedreht, trifft er mit seinem Gegenanschlag auf den Anschlag des Basiselements und dreht dieses mit. Die Verdrehung des Adapters gegenüber dem Basiselement wird durch die Anschläge begrenzt. Der Anschlag am Basiselement kann beispielsweise von einer Stiftanordnung, etwa zwei Stiften, am ersten Arm des Basiselements gebildet sein, die mit einer Vorsprunganordnung, etwa zwei Vorsprüngen, des zweiten Adapterelements zusammenwirken.

Nach einer bevorzugten , jedoch nicht beanspruchten Ausgestaltung des zweiteiligen Adapters bzw zweiten Adapters im Zusammenhang mit der Montage des Schaltwerks des zweiten Typs ist vorgesehen, dass im Zuge der Montage und im montierten Zustand der Adapter mit einem Kopfabschnitt des ersten Adapterelements unmittelbar auf der Außenseite des zugeordneten hinteren Halterungsabschnitts angeordnete wird bzw. ist, innerhalb der Öffnung oder Aussparung des ebenfalls unmittelbar auf der Außenseite des zugeordneten hinteren Halterungsabschnitts angeordneten zweiten Arms des Basiselements, und dass im Zuge der Montage und im montierten Zustand der Adapter mit dem Mutterabschnitt des zweiten Adapterelements unmittelbar auf der Innenseite des zugeordneten hinteren Halterungsabschnitts angeordnete wird bzw. ist, innerhalb der Öffnung oder Aussparung des ebenfalls unmittelbar auf der Innenseite des zugeordneten hinteren Halterungsabschnitts angeordneten ersten Arms des Basiselements. Alternativ kann man aber auch vorsehen, dass das zweite Adapterelement zumindest mit einem Abschnitt axial zwischen dem ersten Arm und dem zugeordneten hinteren Halterungsabschnitt angeordnet wird bzw. ist oder/und dass das erste Adapterelement zumindest mit einem Abschnitt axial zwischen dem zweiten Arm und dem zugeordneten hinteren Halterungsabschnitt angeordnet wird bzw. ist. Auch soll nicht ausgeschlossen sein, dass der erste Arm zumindest mit einem Abschnitt axial zwischen dem zweiten Adapterelement und dem zugeordneten hinteren Halterungsabschnitt angeordnet wird bzw. ist oder/und dass der zweite Arm zumindest mit einem Abschnitt axial zwischen dem ersten Adapterelement und dem zugeordneten hinteren Halterungsabschnitt angeordnet wird bzw. ist.

Unabhängig von diesen Ausgestaltungsmöglichkeiten bilden die beiden Adapterelemente des Adapters bzw. zweiten Adapter im Zuge der Montage vorzugsweise eine Art Drehlager für das Basiselement, bevor dieses durch Aufbringen der am ersten Arm wirkenden Spannkraft kraftschlüssig rotatorisch und gegebenenfalls auch axial festgelegt wird, soweit nötig auch unter Herstellung einer Soll-Orientierung des Basiselements in Bezug auf die geometrische Achse.

Der Adapter bzw. der zweite Adapter könnte im Zusammenhang mit der Montage des Schaltwerks des zweiten Typs aber auch unmittelbar mit dem Einspannabschnitt bzw. ersten Arm verschraubt werden, wofür dieser eine Einschrauböffnung aufweisen könnte, in die ein ein Außengewinde aufweisender Schraubbolzenabschnitt des Adapters eingeschraubt wird. Der hierzu vorzugsweise einteilig ausgeführte Adapter bzw. zweite Adapter könnte dann unter Vermittlung des Einspannabschnitt bzw. ersten Arm am zugeordneten hinteren Halterungsabschnitt des Rahmens fixiert sein.

Nach einer bevorzugten , jedoch nicht beanspruchten Ausgestaltung weist die Steckachse eine Zentrieroberfläche an einem Außenumfang auf, die im montierten Zustand mit einer Zentrieroberfläche an einem Innenumfang des Einspannabschnitts bzw. ersten Arms im Bereich dessen Öffnung oder Aussparung zur Zentrierung des Basiselements in Bezug auf die Steckachse zusammenwirkt. Es kann somit eine Zentrierung des Basiselements vermittels des Adapters oder/und vermittels der Steckachse vorgesehen sein, wobei jeweils vor allem an einen direkten Zentriereingriff zwischen dem Einspannabschnitt bzw. ersten Arm einerseits und dem Adapter bzw. der Steckachse andererseits gedacht wird.

Die Statorbaugruppe wird in der Regel ein Anschlagelement (beispielsweise eine sogenannte Nabenendkappe oder eine Achsmutter oder ein vergleichbares Funktionsteil) oder Anschlagende (etwa ein Endabschnitt einer die Laufradnabe über eine Drehlageranordnung tragenden, auch Hohlachse genannten hohlen Nabenachse) aufweisen, welches zur Abstützung der zwischen den Halterungsabschnitten wirkenden Spannkraft dient.

Im Falle der Ausführung der Kettenschaltung mit dem hinteren Schaltwerk des ersten Typs liegt das Anschlagelement oder Anschlagende im montierten Zustand bevorzugt an einer Anlagefläche des Adapters bzw. des Adapters des ersten Typs an und stützt die wirkende Spannkraft an dieser Anlagefläche ab, wobei der Adapter bzw. der Adapter des ersten Typs die Spannkraft vorzugsweise unter Vermittlung des daran axial festgelegten Halterungselements an dem zugeordneten der hinteren Halterungsabschnitte direkt oder indirekt abstützt. In diesem Zusammenhang wird daran gedacht, dass der Adapter bzw. Adapter des ersten Typs im montierten Zustand unmittelbar mit dem Halterungselement verschraubt ist, wobei die Anlagefläche des Adapters bzw. des Adapters des ersten Typs vorzugsweise bündig ist zu einer Oberfläche des Halterungselements an einem Abschnitt, der der die Komponentengruppe zwischen den Halterungsabschnitten einspannenden Spannkraft ausgesetzt ist.

Es wird im Zusammenhang mit der Ausführung der Kettenschaltung mit dem hinteren Schaltwerk des ersten Typs alternativ aber auch daran gedacht, dass das Anschlagelement im montierten Zustand an einer Anlagefläche des Halterungselements anliegt und die wirkende Spannkraft an dieser Anlagefläche und damit unter Vermittlung des Halterungselements an dem zugeordneten der hinteren Halterungsabschnitte direkt oder indirekt abstützt. Auch für diese Ausgestaltung wird daran gedacht, dass der Adapter bzw. Adapter des ersten Typs im montierten Zustand unmittelbar mit dem Halterungselement verschraubt ist.

Im Falle der Ausführung der Kettenschaltung mit dem hinteren Schaltwerk des zweiten Typs liegt das Anschlagelement oder Anschlagende im montierten Zustand bevorzugt an einer Anlagefläche des Einspannabschnitts bzw. ersten Arms an und die wirkende Spannkraft wird an dieser Anlagefläche und wird damit unter Vermittlung des Einspannabschnitts bzw. ersten Arms an dem zugeordneten der hinteren Halterungsabschnitte direkt oder indirekt abstützt. Eine indirekte Abstützung am hinteren Halterungsabschnitt könnte unter Vermittlung des Adapters bzw. zweiten Adapters erfolgen. Es soll im Zusammenhang mit der Ausführung der Kettenschaltung mit dem hinteren Schaltwerk des zweiten Typs aber nicht ausgeschlossen sein, dass das Anschlagelement oder Anschlagende im montierten Zustand im montierten Zustand an einer Anlagefläche des Adapters bzw. des Adapters des zweiten Typs anliegt und die wirkende Spannkraft an dieser Anlagefläche abstützt. In diesem Fall könnte der Adapter bzw. der Adapter des zweiten Typs die Spannkraft unter Vermittlung des Einspannabschnitts bzw. ersten Arms an dem zugeordneten der hinteren Halterungsabschnitte direkt oder indirekt abstützen.

Bevorzugt , jedoch nicht beansprucht, ist vorgesehen, dass der Einspannabschnitt bzw. erste Arm benachbart zu oder im Bereich dessen Öffnung oder Aussparung wenigstens eine Führungs- oder/und Zentrierungsoberfläche oder Führungs- oder/und Zentrierungsstruktur aufweist, zur Führung- oder/und Zentrierung der Statorbaugruppe insbesondere an deren Anschlagelement oder Anschlagende. So kann die Montage erleichtert oder/und eine ordnungsgemäße Zentrierung der Statorbaugruppe sichergestellt werden. Vor allem wird daran gedacht, dass die Montage des Hinterrads durch wenigstens eine allgemein als Führung (ggf. Nabenführung) bezeichenbare Führungsfläche oder Führungsstruktur erleichtert wird, indem die Statorbaugruppe, insbesondere deren Anschlagelement oder Anschlagende, oder allgemein die Nabe, entlang der Führung, insbesondere vermittels aufeinander zulaufender Führungsflächen der Führung, in ihre Endposition gleiten kann.

Um die alternative wahlweise Montage eines hinteren Schaltwerks des ersten Typs mittels des gesonderten Halterungselements oder eines hinteren Schaltwerks des zweiten Typs ohne das gesonderte Halterungselement an einem Fahrradrahmen des gleichen Typs mit einem vorgegebenen axialen Abstand zwischen den hinteren Halterungsabschnitten (Ausfallenden) des Rahmens auf einfache Weise zu ermöglichen, weisen der Einspannabschnitt bzw. erste Arm einerseits und das Halterungselement andererseits an ihren im montierten Zustand der die Komponentengruppe zwischen den Halterungsabschnitten einspannenden Spannkraft ausgesetzten Abschnitten bevorzugt jeweils zumindest näherungsweise die gleiche axiale Dicke auf.

Man kann aber auch vorsehen, dass der im montierten Zustand der die Komponentengruppe zwischen den Halterungsabschnitten einspannenden Spannkraft ausgesetzte Abschnitt des Einspannabschnitts bzw. ersten Arms axial dicker ist als der im montierten Zustand der die Komponentengruppe zwischen den Halterungsabschnitten einspannenden Spannkraft ausgesetzte Abschnitt des Halterungselements. In diesem Fall kann das Set von Komponenten wenigstens ein dem Halterungselement zugeordnetes oder zugehöriges Abstandselement umfassen, welches im Falle der Montage des hinteren Schaltwerks des ersten Typs am Fahrradrahmen zu der im montierten Zustand zwischen den Halterungsabschnitten eingespannten Komponentengruppe gehört und der die Komponentengruppe zwischen den Halterungsabschnitten einspannenden Spannkraft ausgesetzt ist. Das Abstandselement kann dann vorteilhaft so dimensioniert sein, dass der im montierten Zustand der die Komponentengruppe zwischen den Halterungsabschnitten einspannenden Spannkraft ausgesetzte Abschnitt des Halterungselements zusammen mit dem wenigstens einen Abstandselement eine axiale Dicke aufweist, die zumindest näherungsweise gleich der axialen Dicke des im montierten Zustand der die Komponentengruppe zwischen den Halterungsabschnitten einspannenden Spannkraft ausgesetzten Abschnitt des Einspannabschnitts bzw. ersten Arms ist.

Als sehr zweckmäßig wird vorgeschlagen, dass das Halterungselement an seinem im montierten Zustand der die Komponentengruppe zwischen den Halterungsabschnitten einspannenden Spannkraft ausgesetzten Abschnitt axial dicker ist als an seinem die Montageöffnung aufweisenden Abschnitt, derart dass eine die Montageöffnung umgebende Anlagefläche dieses Abschnitts, auf der im montierten Zustand das erste Anschlussende des Basiselements des Schaltwerks des ersten Typs aufsitzt, gegenüber einer die Spannkraft im montierten Zustand direkt oder indirekt am zugeordneten der hinteren Halterungsabschnitte abstützenden Anlagefläche des der Spannkraft ausgesetzten Abschnitts axial versetzt ist in Richtung zu dem anderen der hinteren Halterungsabschnitte. So kann auf einfache Weise einerseits eine optimale axiale Montageposition für das Basiselement des hinteren Schaltwerks des ersten Typs in Bezug auf das zugeordnete Ritzelpaket gewährleistet werden, und anderseits ist zugleich eine hinreichend stabile Ausführung des der Spannkraft ausgesetzten Abschnitts des Halterungselement und damit auch des alternativ an der gleichen Stelle positionierbaren, bevorzugt etwa die gleiche axiale Dicke aufweisenden Einspannabschnitts bzw. ersten Arms im Falle der Verwendung des hinteren Schaltwerks des zweiten Typs oder/und eine hinreichende axiale Dicke zur Erzielung der nötigen Spannkraft des im montierten Zustand der Spannkraft ausgesetzten Abschnitts des Halterungselements ermöglicht.

Angemerkt sei, dass das Einspannelement bzw. der erste Arm zweckmäßig eine axiale Dicke im Bereich von etwa 7 bis 9 mm, konkreter beispielsweise eine axiale Dicke von etwa 8 mm aufweisen könnte. Speziell eine Dicke von 8 mm ist - ohne Beschränkung der Allgemeinheit - besonders favorisiert.

Vorteilhaft kann das Halterungselement an einem dem zugeordneten der hinteren Halterungsabschnitte unmittelbar benachbarten Randbereich seines im montierten Zustand der die Komponentengruppe zwischen den Halterungsabschnitten einspannenden Spannkraft ausgesetzten Abschnitt mit einem in Richtung zu dem anderen der hinteren Halterungsabschnitte axial vorstehenden Kragen ausgeführt ist. Ein solcher Kragen kann auf die Geometrie einer Schnittstelle des zugeordneten hinteren Halterungsabschnitts zu dem Halterungselement, etwa einer Aufnahme für einen zugordneten Bereich des Halterungselements, abgestimmt sein und auch als Montagehilfe dienen, etwa indem der Kragen des schon montierten Halterungselements bei der weiteren Montage als Positionierungsführung oder Einfädelschräge für wenigstens eine Komponente der Hinterradachsanordnung benutzt wird. Es kann so ein hilfreicher Effekt ähnlich wie durch die angesprochene Führung (ggf. Nabenführung) des Einspannabschnitts bzw. ersten Arms im Falle der Verwendung des hinteren Schaltwerks des zweiten Typs erreicht werden.

Nach einer nicht beanspruchten Ausgestaltung ist das Halterungselement mehrteilig ausgeführt, mit einem vorzugsweise beidseitig planen laschenartigen Metallteil, welches in einem ersten Bereich, der im montierten Zustand der die Komponentengruppe zwischen den Halterungsabschnitten einspannenden Spannkraft ausgesetzt ist und eine dem Adapter oder Adapter des ersten Typs oder/und der inneren Achse zugeordnete Öffnung oder Aussparung aufweist, und welches in einem zweiten Bereich die Montageöffnung aufweist, und mit wenigstens einer weiteren, dem Metallteil zugeordneten Komponente. So kann als dem Metallteil zugeordnete Komponente vorteilhaft wenigstens ein mit dem Metallteil an dessen ersten Bereich kombiniertes oder kombinierbares Kunststoffteil vorgesehen sein, welches einen vorzugsweise beidseitig planen Abstandshalterbereich aufweist, der eine dem Adapter oder Adapter des ersten Typs oder/und der inneren Achse zugeordnete Öffnung oder Aussparung aufweist und im montierten Zustand auf dem ersten Bereich des Metallteils aufliegt und der die Komponentengruppe zwischen den Halterungsabschnitten einspannenden Spannkraft ausgesetzt ist. Vorteilhaft kann das Kunststoffteil den axial vorstehenden Kragen (wenn vorgesehen) aufweisen und mit einem Übergangsbereich zwischen dem Kragen und dem Abstandshalterbereich einen Randbereich des Metallteils zumindest abschnittsweise überdecken. Das Kunststoffteil ermöglicht in Bezug auf ein gegebenes Metallteil eine Anpassung an die Geometrie einer/der Schnittstelle des zugeordneten hinteren Halterungsabschnitts für das Halterungselement, etwa einer/der Aufnahme für einen zugordneten Bereich des Halterungselements, sowie auch eine Anpassung an den Axialabstand zwischen den hinteren Halterungsabschnitten eines gegebenen Fahrradrahmens zur Erzielung der gewünschten Spannkraft im montierten Zustand. Mittels des Kragens und des Abstandshalterbereichs kann eine Einspann- oder Einschnappverbindung mit dem vorzugsweise zumindest an einem Randbereich dazwischen aufgenommenen bzw. aufnehmbaren ersten Bereich des Metallteils vorgesehen sein, so dass das resultierende Halterungselement als eine Einheit handhabbar ist.

Man kann als besonders zweckmäßig vorsehen, dass der Adapter bzw. Adapter des ersten Typs im montierten Zustand mit dem laschenartigen Metallteil verschraubt ist. Man kann alternativ aber auch vorsehen, dass der Adapter bzw. Adapter des ersten Typs im montierten Zustand mit dem Kunststoffteil verschraubt ist. Hierzu könnte das Kunststoffteil einen axial vorstehenden, im montieren Zustand in die Rahmenöffnung des zugeordneten hinteren Halterungsabschnitts eingeführten Hülsenabschnitt mit einem Innengewinde zum Verschrauben mit dem Adapter bzw. Adapter des ersten Typs aufweisen.

Im Hinblick auf die vorstehend angesprochene Anpassungsfunktion wird weiterbildend vorgeschlagen, dass das Set von Komponenten wenigstens ein laschenartiges Metallteil und einen Satz von alternativ mit diesem kombinierbaren Kunststoffteilen umfasst, die an unterschiedliche Einsatz- oder Montagesituationen angepasst sind. So kann das laschenartige Metallteil zur Montage eines hinteren Schaltwerks des ersten Typs an Rahmen unterschiedlicher Typen verwendet werden, die sich hinsichtlich der Schnittstelle des zugeordneten hinteren Halterungsabschnitts oder/und hinsichtlich des axialen Abstands der hinteren Halterungsabschnitte unterscheiden.

Alternativ oder zusätzlich kann als dem Metallteil zugeordnete Komponente vorteilhaft wenigstens ein mit dem Metallteil an dessen ersten Bereich oder an einem zu diesem benachbarten dritten Bereich des Metallteils kombiniertes oder kombinierbares Hilfsteil vorgesehen sein, welches zur Anpassung an eine Schnittstelle des zugeordneten hinteren Halterungsabschnitts oder/und als Drehanschlag zur Abstützung von Drehkräften in an wenigstens einer zugeordneten Anschlagfläche des zugeordneten hinteren Halterungsabschnitts dient und vorzugsweise als Kunststoffteil ausgeführt ist. Es wird dabei vor allem daran gedacht, dass das Hilfsteil im Falle der Ausführung als Kunststoffteil ein gegenüber dem den Abstandshalterbereich aufweisenden Kunststoffteil gesondertes Kunststoffteil ist, sofern das den Abstandshalterbereich aufweisende Kunststoffteil vorhanden ist. Es soll aber nicht ausgeschlossen sein, dass das Hilfsteil und das den Abstandshalterbereich aufweisende Kunststoffteil von einer integralen und gegebenenfalls einstückigen Komponente gebildet sind.

Gemäß einer zweckmäßigen Ausgestaltung kann das Hilfsteil einen in eine Halteöffnung oder Halteaussparung des laschenartigen Metallteils eingefügten oder einfügbaren Halteabschnitt und wenigstens einen mit diesem einteilig verbundenen Anpassungs- oder/und Anschlagabschnitt aufweisen.

Im Hinblick auf die vorstehend angesprochene Anpassungsfunktion wird weiterbildend vorgeschlagen, dass das Set von Komponenten wenigstens ein laschenartiges Metallteil und einen Satz von alternativ mit diesem kombinierbaren Hilftsteilen umfasst, die an unterschiedliche Einsatz- oder Montagesituationen angepasst sind. So kann das laschenartige Metallteil zur Montage eines hinteren Schaltwerks des ersten Typs an Rahmen unterschiedlicher Typen verwendet werden, die sich hinsichtlich der Schnittstelle des zugeordneten hinteren Halterungsabschnitts oder/und hinsichtlich der als Anschlagflächen in Frage kommenden Oberflächen des hinteren Halterungsabschnitts unterscheiden.

Ein Halterungselement (Schaltauge) der vorstehend angesprochenen Art ist von Interesse, da es völlig unabhängig von der Möglichkeit, Fahrräder mit einer ein hinteres Schaltwerk des neuen (zweiten) Typs aufweisenden Kettenschaltung auszurüsten, für die optimale Montage eines hinteren Schaltwerks des herkömmlichen (ersten) Typs an einem Fahrradrahmen vorteilhaft ist.

Die Erfindung schlägt deshalb ein Halterungselement vor, welches an einer axialen Innenseite eines zugeordneten Halterungsabschnitts der für die Halterung einer Achse einer Hinterradachsanordnung eines hinteren Laufrads dienenden hinteren Halterungsabschnitte eines Fahrradrahmens positionierbar ist, um ein hinteres Schaltwerk einer Kettenschaltung an dem Fahrradrahmen zu montieren, umfassend einen ersten Abschnitt, der eine der Achse zugeordnete Öffnung oder Aussparung aufweist und im montierten Zustand unter Mitwirkung weiterer Komponenten einer zwischen den hinteren Halterungsabschnitten wirkenden Spannkraft ausgesetzt ist, und umfassend einen zweiten Abschnitt, der eine gegenüber der Öffnung oder Aussparung im montierten Zustand gegenüber der Achse radial versetzte Montageöffnung aufweist, an der ein Anschlussende eines Basiselements des hinteren Schaltwerks festlegbar ist. Das vorgeschlagene Halterungselements zeichnet sich erfindungsgemäß dadurch aus, dass eine die Montageöffnung umgebende Anlagefläche des zweiten Abschnitts, die dafür vorgesehen ist, eine Auflagerfläche für das Anschlussende des montierten Basiselements zu bilden, gegenüber einer die Öffnung oder Aussparung umgebenden Anlagefläche des ersten Abschnitts auf der gleichen Seite des Halterungselements in Richtung zur anderen Seite des Halterungselements versetzt ist. So kann auf einfache Weise einerseits eine optimale axiale Montageposition für das Basiselement des hinteren Schaltwerks des herkömmlichen (ersten) Typs in Bezug auf das zugeordnete Ritzelpaket gewährleistet werden, und anderseits ist zugleich eine hinreichend stabile Ausführung oder/und eine hinreichende axiale Dicke zur Erzielung der nötigen Spannkraft des im montierten Zustand der Spannkraft ausgesetzten Abschnitts des Halterungselements ermöglicht.

Weiterbildend wird vorgeschlagen, dass die andere Seite des Halterungselements über einen zumindest einen Oberflächenabschnitt des ersten Abschnitts und zumindest einen Oberflächenabschnitt des zweiten Abschnitts umfassenden Oberflächenbereich plan ausgeführt ist oder/und dass der erste Bereich axial dicker als der zweite Bereich ist. Ein solches Halterungselement kann einfach hergestellt werden.

Das Halterungselement kann in einem Randbereich des ersten Abschnitts auf der anderen Seite mit einem axial vorstehenden Kragen ausgeführt ist. Ein solcher Kragen kann auf die Geometrie einer Schnittstelle des zugeordneten hinteren Halterungsabschnitts zu dem Halterungselement, etwa einer Aufnahme für einen zugordneten Bereich des Halterungselements, abgestimmt sein und auch als Montagehilfe dienen, etwa indem der Kragen des schon montierten Halterungselements bei der weiteren Montage als Positionierungsführung oder Einfädelschräge für wenigstens eine Komponente der Hinterradachsanordnung benutzt wird.

Nach einer besonders bevorzugten Ausgestaltung ist das Halterungselement mehrteilig ausgeführt, mit einem vorzugsweise beidseitig planen laschenartigen Metallteil, welches in einem dem ersten Abschnitt zugeordneten ersten Bereich eine der Achse zugeordnete Öffnung oder Aussparung aufweist und in einem dem zweiten Abschnitt zugeordneten zweiten Bereich die Montageöffnung aufweist, und mit wenigstens einer weiteren, dem Metallteil zugeordneten Komponente. So kann als dem Metallteil zugeordnete Komponente vorteilhaft wenigstens ein mit dem Metallteil an dessen ersten Bereich kombiniertes oder kombinierbares Kunststoffteil vorgesehen sein, welches einen dem ersten Abschnitt zugeordneten, vorzugsweise beidseitig planen Abstandshalterbereich aufweist, der eine der Achse zugeordnete Öffnung oder Aussparung aufweist und im montierten Zustand auf dem ersten Bereich des Metallteils aufliegt, um den ersten Abschnitt des Halterungselements zu bilden. Vorteilhaft kann das Kunststoffteil den axial vorstehenden Kragen (wenn vorgesehen) aufweisen und mit einem Übergangsbereich zwischen dem Kragen und dem Abstandshalterbereich einen Randbereich des Metallteils zumindest abschnittsweise überdecken. Das Kunststoffteil ermöglicht in Bezug auf ein gegebenes Metallteil eine Anpassung an die Geometrie einer/der Schnittstelle des zugeordneten hinteren Halterungsabschnitts für das Halterungselement, etwa einer/der Aufnahme für einen zugordneten Bereich des Halterungselements, sowie auch eine Anpassung an den Axialabstand zwischen den hinteren Halterungsabschnitten eines gegebenen Fahrradrahmens zur Erzielung der gewünschten Spannkraft im montierten Zustand. Mittels des Kragens und des Abstandshalterbereichs kann eine Einspann- oder Einschnappverbindung mit dem vorzugsweise zumindest an einem Randbereich dazwischen aufgenommenen bzw. aufnehmbaren ersten Bereich des Metallteils vorgesehen sein, so dass das resultierende Halterungselement als eine Einheit handhabbar ist.

Vorteilhaft kann das laschenartige Metallteil eine Gewindeanordnung, etwa ein Innengewinde, zum Verschrauben mit einem Befestigungselement zum Festlegen an dem hinteren Halterungsabschnitt des Rahmens aufweisen. Alternativ kann aber auch das Kunststoffteil mit solch einer Gewindeanordnung, insbesondere einem Innengewinde, zum Verschrauben mit einem Befestigungselement zum Festlegen an dem hinteren Halterungsabschnitt des Rahmens ausgeführt sein. In diesem Zusammenhang kann das Kunststoffteil vorteilhaft einen axial vorstehenden und in eine Rahmenöffnung des zugeordneten hinteren Halterungsabschnitts einführbaren Hülsenabschnitt mit einem Innengewinde für diese Verschraubung aufweisen.

Alternativ oder zusätzlich kann als dem Metallteil zugeordnete Komponente vorteilhaft wenigstens ein mit dem Metallteil an dessen ersten Bereich oder an einem zu diesem benachbarten dritten Bereich des Metallteils kombiniertes oder kombinierbares Hilfsteil vorgesehen sein, welches zur Anpassung an eine Schnittstelle des zugeordneten hinteren Halterungsabschnitts oder/und als Drehanschlag zur Abstützung von Drehkräften in an wenigstens einer zugeordneten Anschlagfläche des zugeordneten hinteren Halterungsabschnitts dient und vorzugsweise als Kunststoffteil ausgeführt ist. Es wird dabei vor allem daran gedacht, dass das Hilfsteil im Falle der Ausführung als Kunststoffteil ein gegenüber dem den Abstandshalterbereich aufweisenden Kunststoffteil gesondertes Kunststoffteil ist, sofern das den Abstandshalterbereich aufweisende Kunststoffteil vorhanden ist. Es soll aber nicht ausgeschlossen sein, dass das Hilfsteil und das den Abstandshalterbereich aufweisende Kunststoffteil von einer integralen und gegebenenfalls einstückigen Komponente gebildet sind.

Gemäß einer zweckmäßigen Ausgestaltung kann das Hilfsteil einen in eine Halteöffnung oder Halteaussparung des laschenartigen Metallteils eingefügten oder einfügbaren Halteabschnitt und wenigstens einen mit diesem einteilig verbundenen Anpassungs- oder/und Anschlagabschnitt aufweisen.

Im Hinblick auf die vorstehend angesprochene Anpassungsfunktion stellt die Erfindung auch ein Set von Komponenten bereit, welches wenigstens ein laschenartiges Metallteil umfasst sowie einen Satz von alternativ mit dem Metallteil kombinierbaren Kunststoffteilen umfasst, die an unterschiedliche Einsatz- oder Montagesituationen angepasst sind, oder/und einen Satz von alternativ mit dem Metallteil kombinierbaren Hilfsteilen umfasst, die an unterschiedliche Einsatz- oder Montagesituationen angepasst sind. So kann das laschenartige Metallteil zur Montage eines hinteren Schaltwerks des ersten Typs an Rahmen unterschiedlicher Typen verwendet werden, die sich hinsichtlich der Schnittstelle des zugeordneten hinteren Halterungsabschnitts oder/und hinsichtlich des axialen Abstands der hinteren Halterungsabschnitte oder/und hinsichtlich der als Anschlagflächen in Frage kommenden Oberflächen des hinteren Halterungsabschnitts unterscheiden. Die Kombination aus dem laschenartigen Metallteil und einem jeden der Kunststoffteile ergibt jeweils ein erfindungsgemäßes Halterungselement. Die Kombination aus dem laschenartigen Metallteil und einem jeden der Hilfsteile ergibt jeweils ein erfindungsgemäßes Halterungselement. Die Kombination aus dem laschenartigen Metallteil und einem der jeweiligen Einsatz- oder Montagesituation zugeordneten Kunststoffteil der Kunststoffteile und einem der jeweiligen Einsatz- oder Montagesituation zugeordneten Hilfsteil der Hilfsteile ergibt jeweils ein einfindungsgemäßes Halterungselement.

Ferner stellt die Erfindung ein Fahrrad bereit, welches einen Fahrradrahmen mit einem linken hinteren Halterungsabschnitt und einen rechten hinteren Halterungsabschnitt für eine Achse einer Hinterradachsanordnung eines hinteren Laufrads aufweist, welche einen vorbestimmten definierten Axialabstand längs einer geometrischen Achse der mittels der Halterungsabschnitte an dem Rahmen montierten Achse aufweisen und jeweils ein Gegenlager für eine an der Achse angeordnete, im montierten Zustand zwischen den Halterungsabschnitten eingespannte Komponentengruppe bilden. Das erfindungsgemäße Fahrrad ist mit einer Kettenschaltung ausgestattet, deren hinteres Schaltwerk nicht-koaxial in Bezug auf die geometrische Achse am Rahmen montiert ist, wobei ein Basiselement des hinteren Schaltwerks ein Anschlussende aufweist, welches mittels eines gegenüber dem Rahmen gesonderten, an einer axialen Innenseite eines zugeordneten der hinteren Halterungsabschnitte positionierten Halterungselements gegenüber der geometrischen Achse radial versetzt am Fahrradrahmen montiert ist. Erfindungsgemäß ist als Halterungselement ein Halterungselement gemäß der Erfindung verbaut oder/und ist das Fahrrad erfindungsgemäß unter Verwendung ausgewählter Komponenten einschließlich des Fahrradrahmens, des Halterungselements und des hinteren Schaltwerks des ersten Typs eines Sets von Komponenten aufgebaut oder aufbaubar. Das Fahrrad kann sich durch weitere vorstehend erwähnte Merkmale auszeichnen, die sich auf die Komponenten des Sets von Komponenten oder/und den montierten Zustand im Zusammenhang mit der Verwendung des hinteren Schaltwerks des ersten Typs beziehen.

Ferner wird ein Fahrrad bereitgestellt, welches einen Fahrradrahmen mit einem linken hinteren Halterungsabschnitt und einem rechten hinteren Halterungsabschnitt für eine Achse einer Hinterradachsanordnung eines hinteren Laufrads aufweist, welche einen vorbestimmten definierten Axialabstand längs einer geometrischen Achse der mittels der Halterungsabschnitte an dem Rahmen montierten Achse aufweisen und jeweils ein Gegenlager für eine an der Achse angeordnete, im montierten Zustand zwischen den Halterungsabschnitten eingespannte Komponentengruppe bilden;
wobei das Fahrrad mit einer Kettenschaltung ausgestattet ist, deren hinteres Schaltwerk koaxial in Bezug auf die geometrische Achse am Rahmen montiert ist. Das Fahrrad ist unter Verwendung ausgewählter Komponenten einschließlich des Fahrradrahmens und des hinteren Schaltwerks des zweiten Typs eines Sets von Komponenten aufgebaut oder aufbaubar. Das Fahrrad kann sich durch weitere vorstehend erwähnte Merkmale auszeichnen, die sich auf die Komponenten des Sets von Komponenten oder/und den montierten Zustand im Zusammenhang mit der Verwendung des hinteren Schaltwerks des zweiten Typs beziehen.

Weiterhin wird ein Verfahren zum Herstellen eines Fahrrads vorgeschlagen, umfassend:
- Bereitstellen oder Vorhalten von Fahrradkomponenten, die zusammen ein Set von Komponenten umfassen;
- Entscheiden, ob das Fahrrad mit einer ein hinteres Schaltwerk des ersten Typs oder mit einer ein hinteres Schaltwerk des zweiten Typs aufweisenden Kettenschaltung bereitgestellt werden soll;
- Aufbau des Fahrrads mit Montage des hinteren Schaltwerks des ersten Typs des Sets von Komponenten unter Verwendung des Halterungselements des Sets von Komponenten oder mit Montage des hinteren Schaltwerks des zweiten Typs des Sets von Komponenten an dem Fahrradrahmen des Sets von Komponenten, je nach der getroffenen Entscheidung.

Die Erfindung wird im Folgenden anhand der beigefügten Zeichnungen und darin gezeigten Ausführungsbeispielen von Komponenten eines beispielhaften Sets von Komponenten näher erläutert.

Die Figuren 1 bis 12 und 14 bis 26 beziehen sich auf eine Fahrradkettenschaltung mit einem hinteren Schaltwerks eines neuen (zweiten) Typs und Figur 13 bezieht sich eine Kettenschaltung des Stands der Technik mit einen hinteren Schaltwerk eines herkömmlichen (ersten) Typs. Von diesen Figuren zeigt
- Fig. 1: eine perspektivische Außenansicht eines hinteren Schaltwerks des neuen (zweiten) Typs in an einem Fahrradrahmen montierten Zustand;
- Fig. 2: eine Schnittdarstellung des hinteren Schaltwerks von Fig. 1 entlang der Achse A ohne die in Fig. 1 gezeigte Nabenanordnung;
- Fig. 3: eine Seitenansicht des hinteren Schaltwerks des neuen (zweiten) Typs;
- Fig. 4: eine perspektivische Innenansicht auf ein an dem Rahmen montiertes Basiselement des hinteren Schaltwerks des neuen (zweiten) Typs;
- Fig. 5: einen perspektivischer Teilschnitt des Basiselements aus Fig. 4 mit einem zugeordneten, in einer Rahmenöffnung montierten Adapter;
- Fig. 6: eine vergrößerte Ansicht des Basiselements von Fig. 5 ohne in Fig. 4 gezeigte Elemente der Nabenanordnung;
- Fig. 7: eine Vollschnittdarstellung der Anordnung aus Fig. 6 ;
- Fig. 8: eine Explosionsdarstellung des Basiselements mit dem Adapter der Figuren 5 bis 7;
- Fig. 9a: eine perspektivische Außenansicht des Basiselements;
- Fig. 9b: eine perspektivische Innenansicht des Basiselements
- Fig. 10: einen Teilschnitt durch eine erste Ausführungsvariante (zweite Ausführungsform) des hinteren Schaltwerks des neuen (zweiten) Typs in an dem Fahrradrahmen montierten Zustand, welches sich durch eine Einstellhilfe auszeichnet;
- Fig. 11: eine Innenansicht einer zweiten Ausführungsvariante (dritte Ausführungsform) des hinteren Schaltwerks des neuen (zweiten) Typs in an dem Fahrradrahmen montierten Zustand, und zwar in einer inneren Anschlagposition;
- Fig. 12: eine Rückansicht der zweiten Ausführungsvariante in einer äußeren Anschlagposition;
- Fig. 13: ein Fahrrad mit einem Schaltwerk eines herkömmlichen (ersten) Typs, welches mittels eines Schaltauges an einem Fahrradrahmen montiert ist;
- Fig. 14: eine Schnittdarstellung einer dritten Ausführungsvariante (vierte Ausführungsform) des hinteren Schaltwerks des neuen (zweiten) Typs in an dem Fahrradrahmen montierten Zustand;
- Fig. 15a: eine Schnittdarstellung einer vierten Ausführungsvariante (fünfte Ausführungsform) des hinteren Schaltwerks des neuen (zweiten) Typs in an dem Fahrradrahmen montierten Zustand;
- Fig. 15b: eine perspektivische Außenansicht auf das Schaltwerk mit einem zugehörigen Adapter gemäß Fig. 15a;
- Fig. 16: eine vergrößerte Ansicht auf ein Detail aus Fig. 15b;
- Fig. 17: eine Ansicht auf ausgewählte Teile aus Fig. 16;
- Fig. 18: eine weitere Ansicht auf ausgewählte Teile aus Fig. 16
- Fig. 19: eine vergrößerte Explosionsdarstellung des Adapters der vierten Ausführungsvariante;
- Fig. 20a: eine Steckachse gemäß der vierten Ausführungsvariante;
- Fig. 20b: eine Schnittdarstellung der Steckachse aus Fig. 20a;
- Fig. 21: eine Schnittdarstellung der gesamten Hinterradachsanordnung mit Steckachse gemäß der vierten Ausführungsvariante (fünfte Ausführungsform);
- Fig. 22: eine Schnittdarstellung ausgewählter Teile der Hinterradachsanordnung aus Fig.21;
- Fig. 23: eine Schnittdarstellung ausgewählter Teilen aus Fig. 22;
- Fig. 24a: eine Teilschnittdarstellung ausgewählter Teile einer Hinterradachsanordnung mit einer Steckachse zur Verwendung mit dem hinteren Schaltwerks des neuen (zweiten) Typs gemäß einer fünften Ausführungsvariante (sechste Ausführungsform);
- Fig. 24b: eine perspektivische Außenansicht auf die Anordnung von Fig. 24a;
- Fig. 25a: die Steckachse gemäß der fünften Ausführungsvariante;
- Fig. 25b: eine Schnittdarstellung der Steckachse aus Fig. 25a.
- Fig. 26: zeigt eine Ausführungsbeispiel für das hintere rechte Auffallende eines für die Montage eine hinteren Schaltwerks des neuen (zweiten) Typs vorgesehenen Fahrradrahmens.

Die Figuren 27 bis 34 beziehen sich auf eine Kettenschaltung des Stands der Technik mit einem hinteren Schaltwerk des herkömmlichen (ersten) Typs und speziell auf ein erfindungsgemäßes Halterungselement oder Schaltauge zur Montage eines solchen hinteren Schaltwerks an einen Fahrradrahmen, gegebenenfalls, aber nicht zwingend, an einem eigentlich für die Montage eine hinteren Schaltwerks des neuen (zweiten) Typs vorgesehenen Fahrradrahmen. Von diesen Figuren zeigt

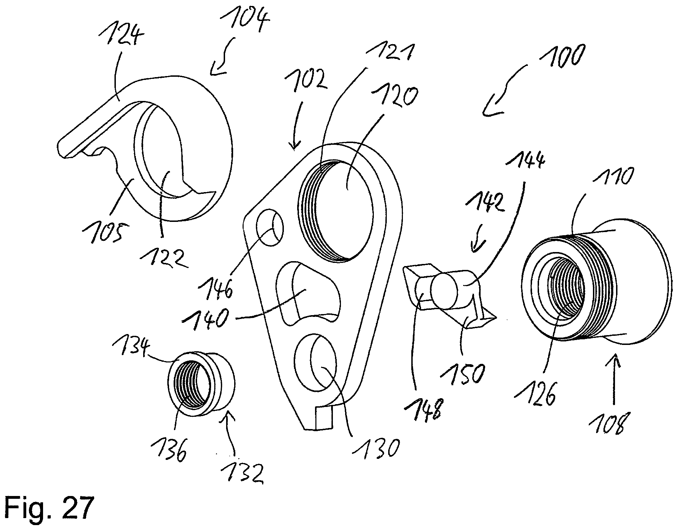

- Fig. 27: eine Explosionsansicht eines mehrteiligen Schaltauges eines ersten Ausführungsbeispiels mit einem zugeordneten Adapter zur Befestigung am Rahmen;

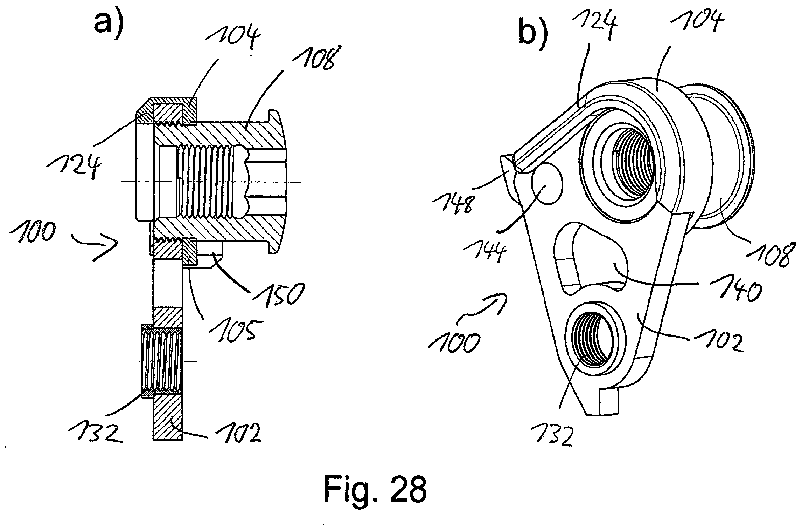

- Fig. 28: das Schaltauge der Figur 27 im mit dem Adapter zusammengefügten Zustand ohne dass zugeordnete Ausfallendes des Rahmens und zwar in Fig. 28 a) in einer geschnittenen Ansicht und in Fíg. 28 b) in einer perspektivischen Ansicht;

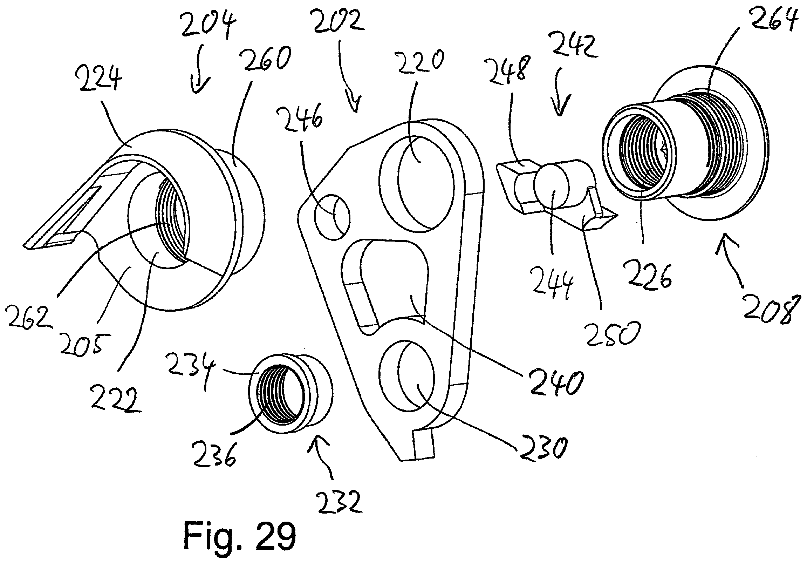

- Fig. 29: eine Explosionsansicht eines mehrteiligen Schaltauges eines zweiten Ausführungsbeispiels mit einem zugeordneten Adapter zur Befestigung am Rahmen;

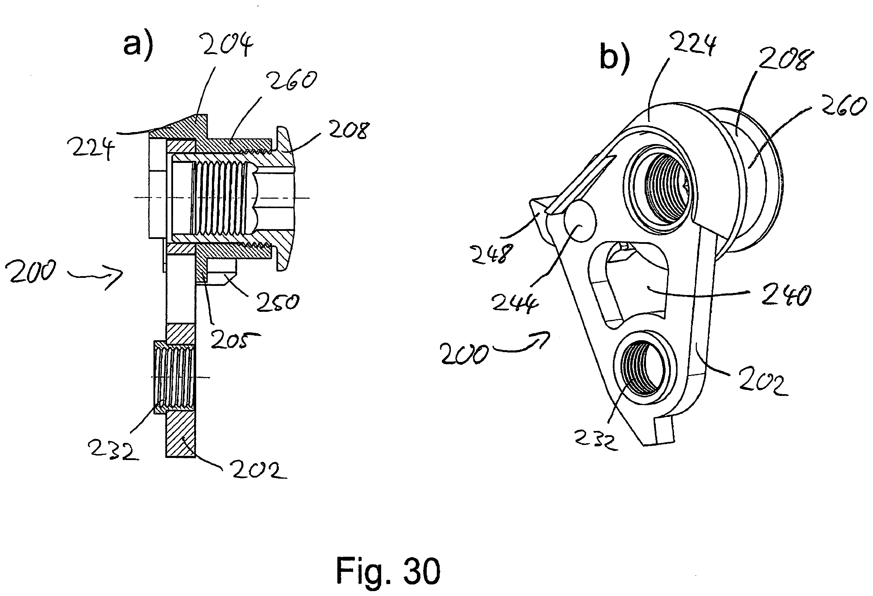

- Fig. 30: das Schaltauge der Figur 29 im mit dem Adapter zusammengefügten Zustand ohne dass zugeordnete Ausfallendes des Rahmens, und zwar in Fig. 30 a) in einer geschnittenen Ansicht und in Fíg. 30 b) in einer perspektivischen Ansicht;

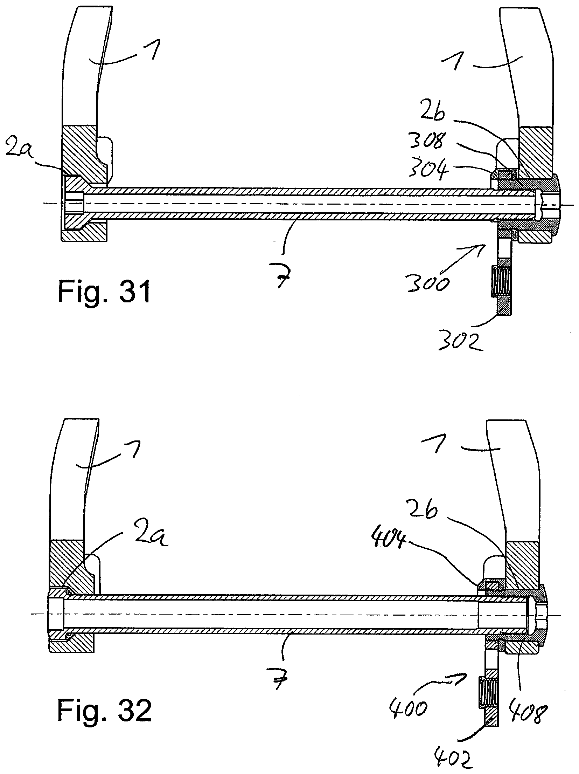

- Fig. 31: ein Schaltauge ähnlich dem Schaltauge der Figuren 27 und 28 im am Rahmen montierten Zustand samt dem zugehörigen Adapter und einer Steckachse.
- Fig. 32: ein Schaltauge ähnlich dem Schaltauge der Figuren 27 und 28 im am Rahmen montierten Zustand samt dem zugehörigen Adapter und einer Steckachse gemäß einer Ausführungsvariante.

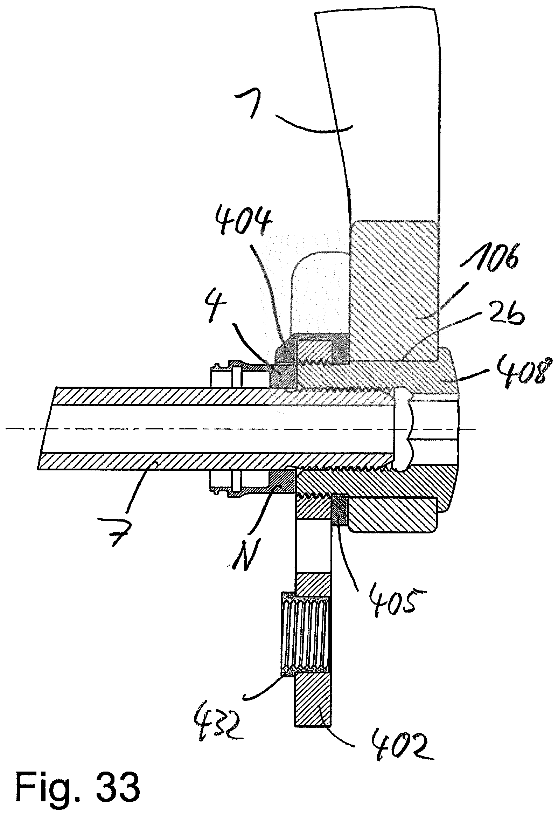

- Fig. 33: zeigt eine vergrößerte Detailansicht der Figur 32 mit einer ergänzten Nabenendkappe.

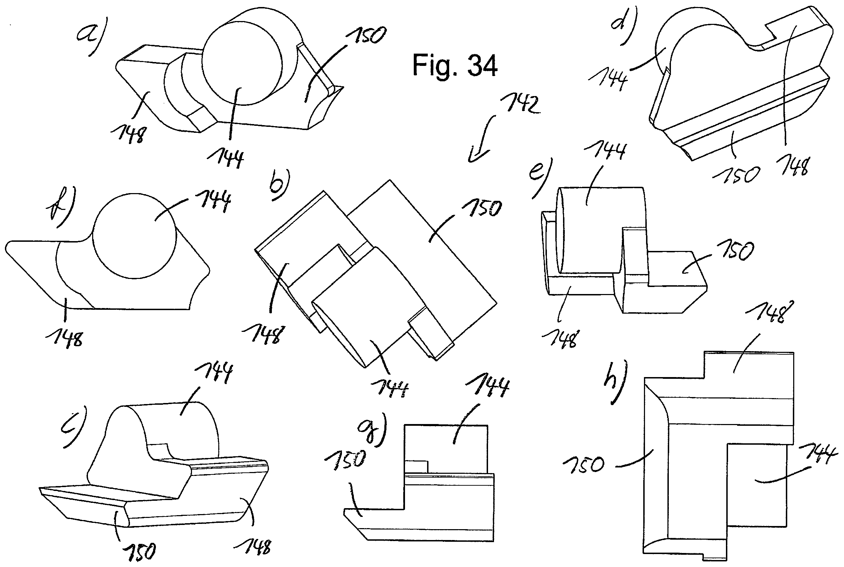

- Fig. 34: zeigt in den Teilfiguren a) bis e) verschiedene perspektivische Ansichten und in den Teilfiguren f) bis h) verschiedene Draufsichten auf verschiedene Seiten eines optional zu einem erfindungsgemäßen Schaltauge zugehörigen Hilfsteils zur Anpassung an eine Rahmenschnittstelle.

Nach einer kurzen Erläuterung des einschlägigen Stands der Technik folgt eine detaillierte Beschreibung bevorzugter Ausführungsformen eines hinteren Schaltwerks eines neuen (zweiten) Typs mit zugehörigen Komponenten, die zu einem Set von Komponenten gehören können.

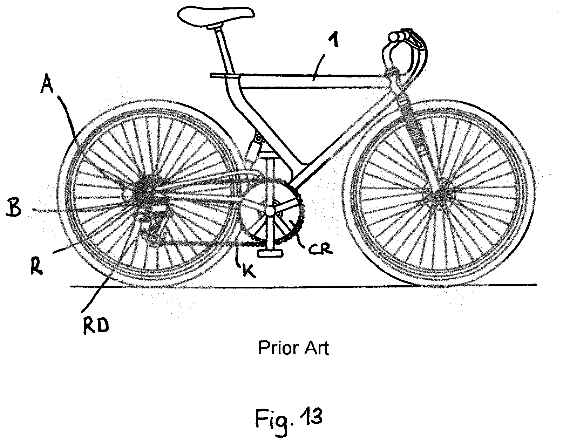

Figur 13 zeigt exemplarisch ein Fahrrad mit einem aus dem Stand der Technik bekannten Fahrradantrieb. Der Fahrradantrieb umfasst ein vorderes Kettenrad CR, ein hinteres Ritzelpaket R und eine Kette K, die mittels des hinteren Schaltwerks RD eines herkömmlichen (ersten) Typs von einem Ritzel zum nächsten bewegt werden kann. Die im Folgenden verwendeten Richtungsangaben rechts/links und vorne/hinten beziehen sich auf ein Fahrrad in Fahrtrichtung. Der Fahrradrahmen 1 hat ein linkes und ein rechtes hinteres Ausfallende, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse A der Mehrfach-Ritzelanordnung R. Das größte Ritzel liegt axial weiter innen als die kleineren Ritzel. Die Zähne sind radial außen an den Ritzeln angeordnet. Der Außendurchmesser eines Ritzels ist das radial äußere Ende, der Innendurchmesser das radial innere Ende des Ritzels. Das hier gezeigte Schaltwerk RD ist auf herkömmliche Weise mit einem gegenüber dem Rahmen gesonderten Schaltauge am rechten Ausfallende des Rahmens befestigt. Damit ist das bekannte Schaltwerk RD von der Hinterradachse A beabstandet und nicht koaxial mit dieser montiert. Das Schaltwerk RD dreht sich um die B-Achse, welche von der Achse A beabstandet ist. Der Schwenkmechanismus des Schaltwerks ist als Schrägparallelogramm ausgeführt.

Für ein besseres Verständnis zeigen die Figuren verschiedene Montagestadien des Schaltwerks des neuen (zweiten) Typs und der Hinterradachsanordnung in unterschiedlich großen Maßstäben.

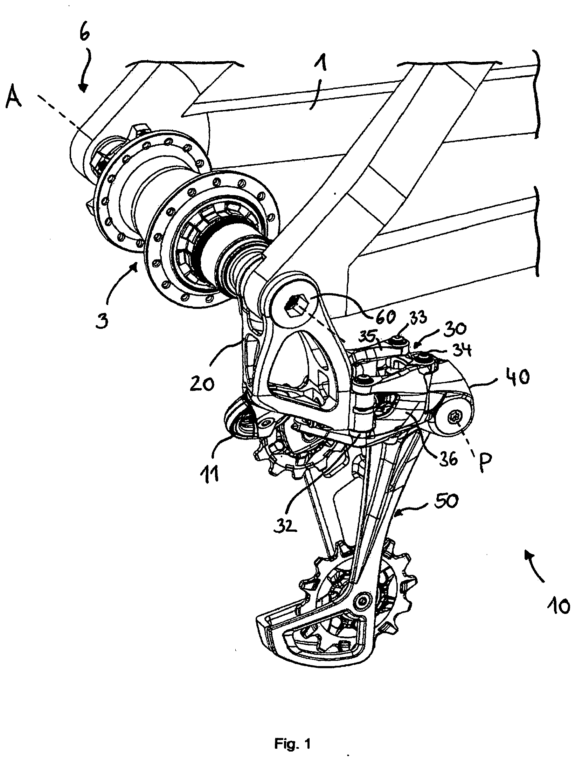

Figur 1 zeigt eine perspektivische Ansicht des koaxial an der Hinterradachse 6 montierten, hinteren Schaltwerks 10. Zur besseren Übersichtlichkeit sind das Hinterrad und das Ritzelpaket nicht dargestellt. Zu sehen ist die zwischen den beiden Ausfallenden des Rahmens 1 angeordnete Hinterradnabe 3 und das, das rechte Ausfallende umgreifende Schaltwerk 10. Das Basiselement 20 ist mittels des Adapters 60 koaxial mit der Achse A am Rahmen 1 montiert.

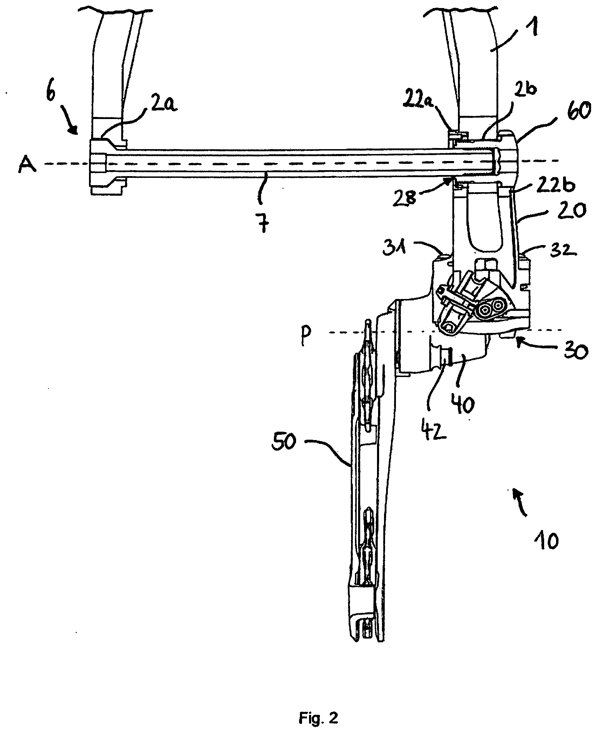

Figur 2 zeigt einen Schnitt entlang der Achse A des in Figur 1 dargestellten Schaltwerks 10 in der Rückansicht. Die geometrische Achse A erstreckt sich entlang der Hinterradachse 6. Einfachheitshalber ist in dieser Darstellung nur die Steckachse 7 und nicht die übrigen Teile der Achs- und Nabenanordnung gezeigt. Das Basiselement 20 ist mittels des Adapters 60 am rechten Ausfallende befestigt. Dazu durchgreift der Adapter 60 die rechte Rahmenöffnung 2b. Die Steckachse 7 ist in die linke Rahmenöffnung 2a eingesteckt und mit dem Adapter 60 verschraubt. Der Adapter 60 dient gleichzeitig als Konter für die Steckachse 7. Wenn die Steckachse 7 angezogen wird, schraubt sie sich weiter in den Adapter 60 und klemmt gegenüber dem Rahmen 1.

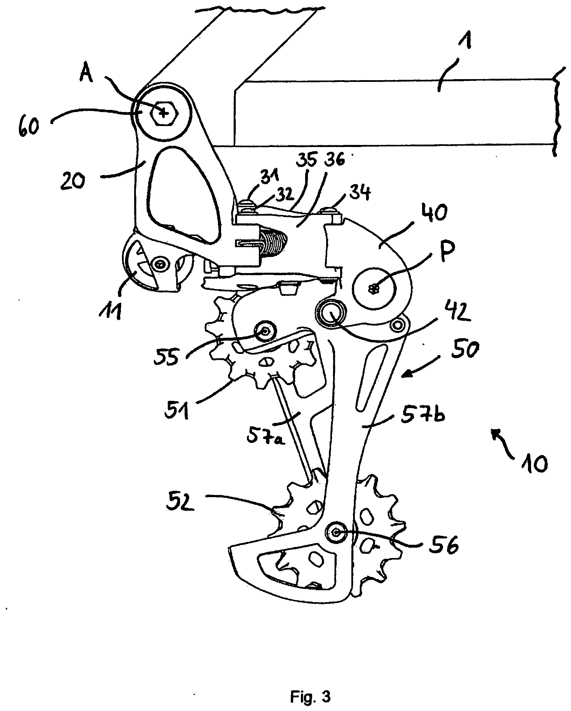

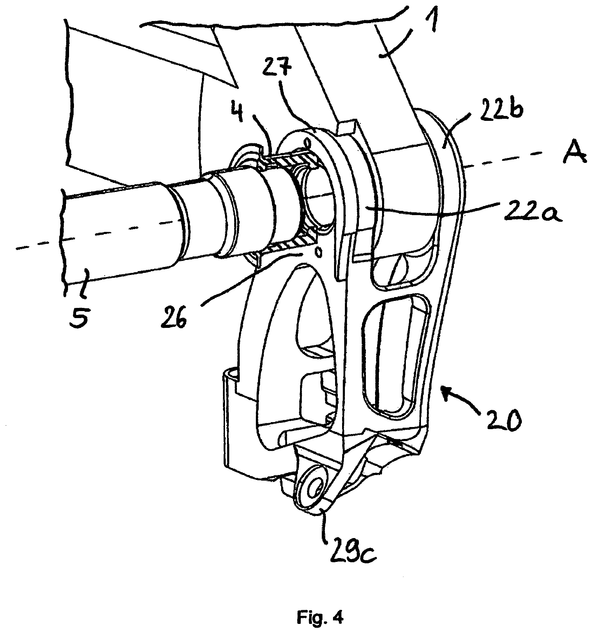

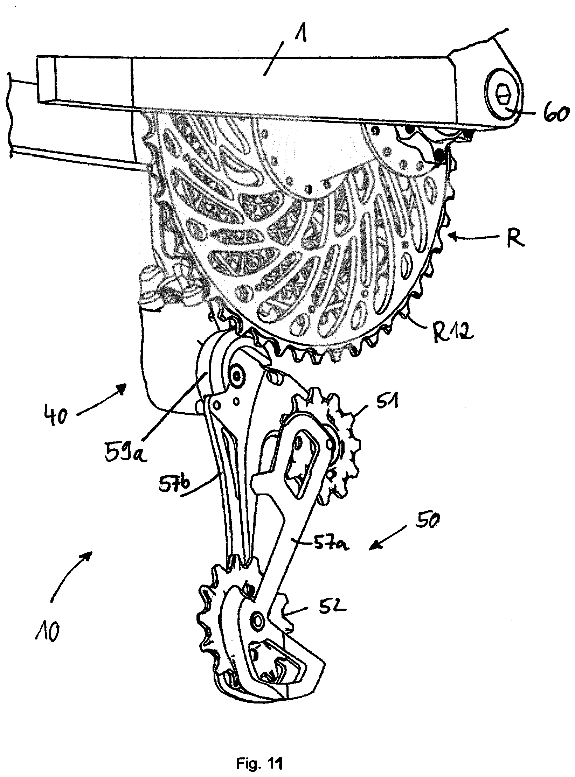

Figur 3 zeigt eine Seitenansicht des am Rahmen 1 montierten Schaltwerks 10 aus Figur 2. Die Figuren 1 bis 3 zeigen jeweils das gesamte Schaltwerk 10 mit dem Basiselement 20, dem Schwenkmechanismus 30, dem beweglichen Element 40 und der Kettenführungsanordnung 50. An dem Basiselement 20 ist eine Seilumlenkung 11, hier in Form einer an der Anschlussstelle 29c drehbar gelagerten Seilumlenkungsrolle angeordnet. Das Basiselement 20 ist an seinem ersten, oberen Anschlussende koaxial mit der Hinterradachse A am Rahmen 1 montiert. Dazu umgreifen zwei in axialer Richtung voneinander beabstandete Arme des Basiselements 20 das Ausfallende des Rahmens 1, so dass ein Arm auf der Innenseite des Rahmens 1 und der andere Arm auf der Außenseite des Rahmens 1 angeordnet ist. Das Basiselement 20 wird mit dem Adapter 60 am Rahmen 1 vormontiert. Weiter ist das Basiselement 20 an seinem zweiten, unteren Anschlussende mit dem Schwenkmechanismus 30 gekoppelt. Der Schwenkmechanismus 30 ist als Parallelogramm-Viergelenk mit einem inneren Schwenkarm 35, einem äußeren Schwenkarm 36 und vier Schwenkachsen 31, 32, 33, 34 ausgebildet. Die vier Schwenkachsen 31, 32, 33, 34 verlaufen jeweils in Ebenen, die die Achse A im rechten Winkel schneiden. Mit anderen Worten liegen die Schwenkachsen 31, 32, 33, 34 in Ebenen, die sich parallel zu den hier nicht gezeigten Ritzelebenen erstrecken (vgl. Figur 11 bis 13). Die erste und zweite Schwenkachse 31, 32 verbindet den Schwenkmechanismus 30 mit dem Basiselement 20. Die dritte und vierte Schwenkachse 33, 34 verbindet den Schwenkmechanismus 30 mit dem beweglichen Element 40. Sowohl das Basiselement 20, als auch das bewegliche Element 40 weisen jeweils zwei Aufnahmen für die Schwenkachsen auf. Die Längsachsen L1, L2 der Aufnahmen am Basiselement 20 und die Längsachsen der Aufnahmen am beweglichen Element 40 sind wie die Schwenkachsen 31, 32, 33, 34 selbst orthogonal zur Hinterradachse 6 bzw. der Achse A ausgerichtet (vgl. Figuren 4 bis 9). Die Kettenführungsanordnung 50 ist um die Achse P drehbar mit dem beweglichen Element 40 verbunden und im UZS (nach hinten) vorgespannt, so dass eine hier nicht gezeigte, die Kettenführung 50 s-förmig durchlaufende Kette gespannt wird. Die Kettenführungsanordnung 50 umfasst ein oberes und ein unteres Ketten-führungsröllchen 51, 52, die jeweils zwischen zwei Käfighälften 57a, 57b drehbar gelagert sind. Das obere Kettenführungsröllchen 51 ist in einem oberen Abstand von der Achse P um die obere Drehachse 55 drehbar angeordnet. Das untere Kettenführungsröllchen 56 ist in einem unteren Abstand von der P-Achse um die untere Drehasche 56 drehbar angeordnet, wobei das obere Kettenführungsröllchen 51 in einem kleineren Abstand von der P-Achse als das untere Kettenführungsröllchen 52 angeordnet ist. Das bewegliche Element 40 weist ein Arretierungselement 42 auf, das es erlaubt, die vorgespannte Kettenführungsanordnung 50 gegenüber dem beweglichen Element 40 festzulegen. So kann das Schaltwerk 20 montiert werden, ohne dass die Kettenführungsanordnung 50 aufgrund der Vorspannung nach hinten schnappt.

Beim Schalten auf ein kleineres Ritzel dreht sich die Kettenführungsanordnung 50 um die Drehachse P des beweglichen Elements 40 im UZS nach hinten. Umgekehrt dreht sich die Kettenführungsanordnung 50 beim Schalten auf ein nächstgrößeres Ritzel um die Drehachse P gegen den UZS nach vorne. Durch die Drehbewegung um die Achse P, wird das obere Kettenführungsröllchen 51 radial auf die Ritzel zu- oder wegbewegt. In axialer Richtung wird die Kettenführungsanordnung 50 bewegt, indem die Schwenkarme 35, 36 um die Schwenkachsen 31, 32, 33, 34 verschwenkt werden. Je nach Schaltrichtung bewegt sich das obere Kettenführungsröllchen 51 zusammen mit der gesamten Kettenführungsanordnung 50 in axialer Richtung nach innen oder außen.

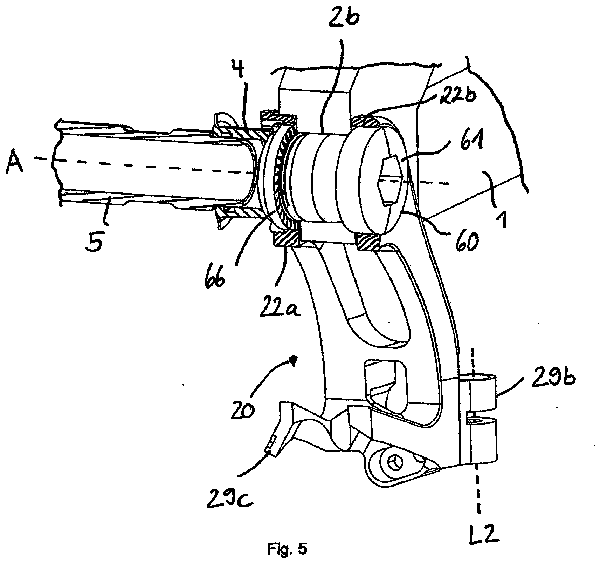

Figur 4 und 5 zeigen jeweils perspektivische Teilschnitte des mit Hilfe des Adapters 60 am Rahmen 1 montierten Basiselements 20 und Teile der Nabenanordnung. Der erste Arm 22a und der zweite Arm 22b sind jeweils auf einer Seite des Rahmens 1 positioniert. Zur Montage des hier nicht gezeigten Hinterrads wird dieses zusammen mit der Nabenanordnung (hier ist nur die Hohlachse 5 gezeigt) und die Nabenendkappe 4 entlang der Nabenführung 27 auf der Innenseite des Basiselements 20 geführt. Die Nabenführung 27 ist als Bund mit aufeinander zulaufenden Führungsflächen ausgebildet. Die Nabenendkappe 4 liegt in ihrer Endposition radial an der Nabenführung 27 an. In axialer Richtung stößt die Nabenendkappe 4 gegen die axiale Nabenanschlagsfläche 26 auf der Innenseite des Basiselements 20. Die Nabenendkappe 4 ist geschnitten dargestellt.

Figur 5 zeigt einen Schnitt durch das Basiselement 20 mit den zwei den Adapter 60 umgreifenden Armen 22a, 22b. Der Adapter 60 besteht aus dem Bolzen 61 und der Mutter 66. Der Bolzen 61 wird in die Mutter 66 eingeschraubt, so dass der Bolzenkopf 62 und die Mutter 66 am Rahmen 1 geklemmt werden. Der Adapter 60 ist so gegenüber dem Rahmen 1 festlegbar. Das Basiselement 20 ist auf dem Adapter 60 zentriert. In fahrbereitem Zustand, bei festgezogener Steckachse 7, ist das Basiselement 20 zwischen der Nabenendkappe 4 und dem Adapter 60 drehfest geklemmt. Das Basiselement 20 liegt in fertig montiertem Zustand in axialer Richtung nur an der Nabenendkappe 4 und am Adapter 60 an. Das Basiselement 20 ist indirekt über den Adapter 60 am Rahmen 1 montiert. Das Basiselement 20 und damit das gesamte Schaltwerk 10 ist an der Nabe 4 referenziert - und nicht wie üblich am Rahmen 1.

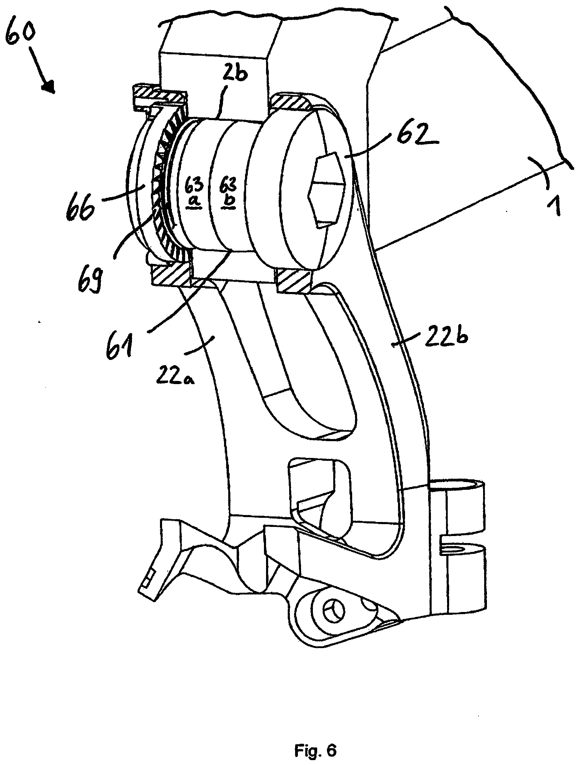

Figur 6 zeigt den vergrößerten Teilschnitt des mit dem Adapter 60 am Rahmen 1 montierten Basiselements 20 aus Figur 5. Der Bolzenkopf 62 und die Mutter 66 sind größer als die Rahmenöffnung 2b bemessen. Wenn der Adapter 60 festgezogen ist, liegen der Bolzenkopf 62 und die Mutter 66 reibschlüssig am Rahmen 1 an. Die Mutter 66 weist eine Rändelfläche 69 auf, um zusätzlich eine formschlüssige Verbindung zum Rahmen 1 herzustellen und einem Verdrehen des Schaltwerks 10 nach vorne (gegen den UZS) entgegenzuwirken. Der Bolzenkörper 63 hat einen Anlagebereich 63a, der an der Rahmenöffnung 2b mit wenig Spiel anliegt und einen Ausgleichsbereich 63b, der gegenüber der Rahmenöffnung 2b mehr Spiel hat. Der Ausgleichsbereich 63b ermöglicht, dass sich der Adapter 60 in der Rahmenöffnung 2b entlang der Achse A ausrichtet. Der Bolzen 61 hat in der Rahmenöffnung 2b Spiel und kann darin etwas verkippen, falls die Rahmenöffnung nicht genau mit der Achse A fluchtet.

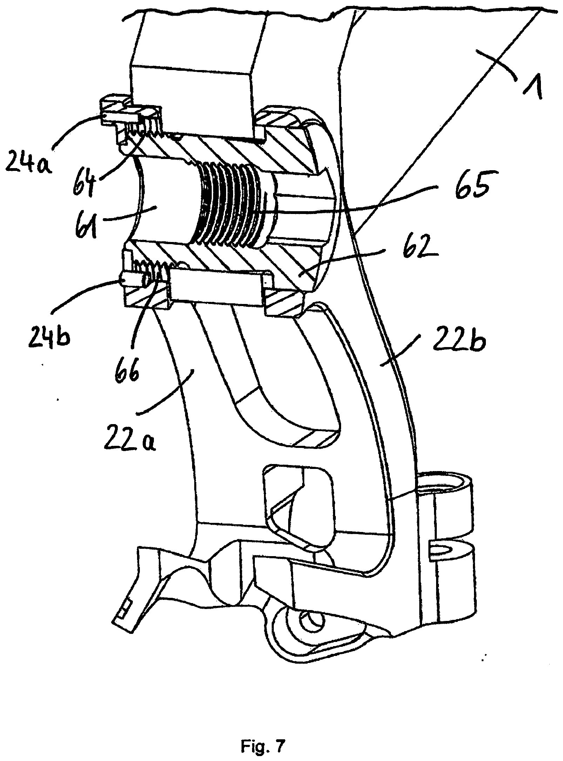

Figur 7 zeigt die Anordnung aus Figur 6 mit geschnittenem Adapter 60. Der Adapter 60 hat zwei Aufgaben: 1) Die Klemmung am Rahmen 1 wird durch die Schraubverbindung zwischen Bolzen 61 und Mutter 66 hergestellt. Alternativ könnte auch die Mutter außen und der Bolzen innen angeordnet sein. Wichtig ist, dass der Adapter 60 gegenüber dem Rahmen 1 festlegbar ist und auf diesen in axialer Richtung anpassbar ist. Bei einem dünneren Rahmen wird die Schraubverbindung weiter angezogen als bei einem dickeren Rahmen. 2) Der Adapter 60 ist gegenüber dem Basiselement 20 im UZS nur begrenzt verdrehbar und stellt damit eine Verdrehsicherung dar. Dazu sind an der Mutter 66 zwei Anschläge 68a, 68b angeordnet, die mit zwei Stiften 24a, 24b am Basiselement 20 zusammenwirken. Eine Verdrehung des Schaltwerks 10 nach vorne (gegen UZS) ist aufgrund der Verdrehsicherung zwischen Adapter 60 und Basiselement 20 nur begrenzt möglich. Die Verdrehsicherung ersetzt die übliche B-Schraube und schützt vor einem ungewollten Verdrehen des Schaltwerks nach vorne.

Das Außengewinde 64 und das Innengewinde 65 des Bolzens 61 sind in verschiedenen Bereichen entlang des Bolzens 61 angeordnet, um so Kräfte besser aufnehmen zu können. Die Steckachse 7 wird in das Innengewinde 65 eingeschraubt und zieht den Adapter 60, insbesondere den Bolzenkopf 62, gegen die Außenseite des Rahmens 1. Im gezeigten Ausführungsbeispiel ist eine Unterlegscheibe zwischen dem Bolzenkopf 62 und dem Rahmen 1 angeordnet.

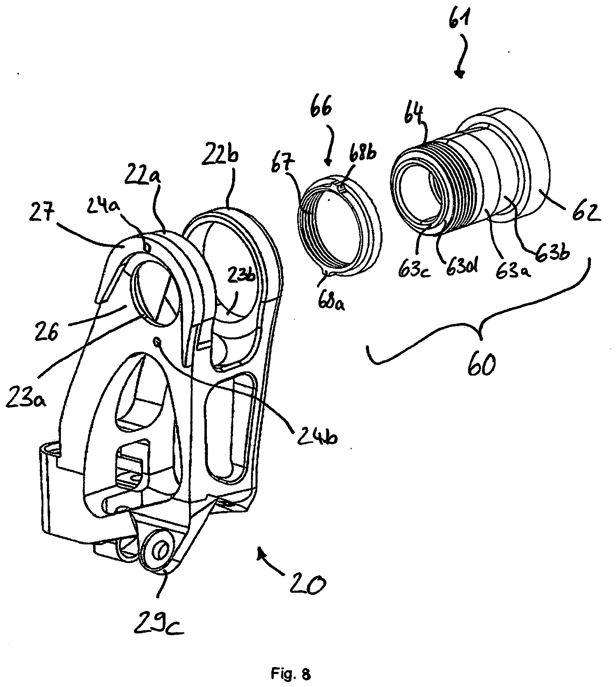

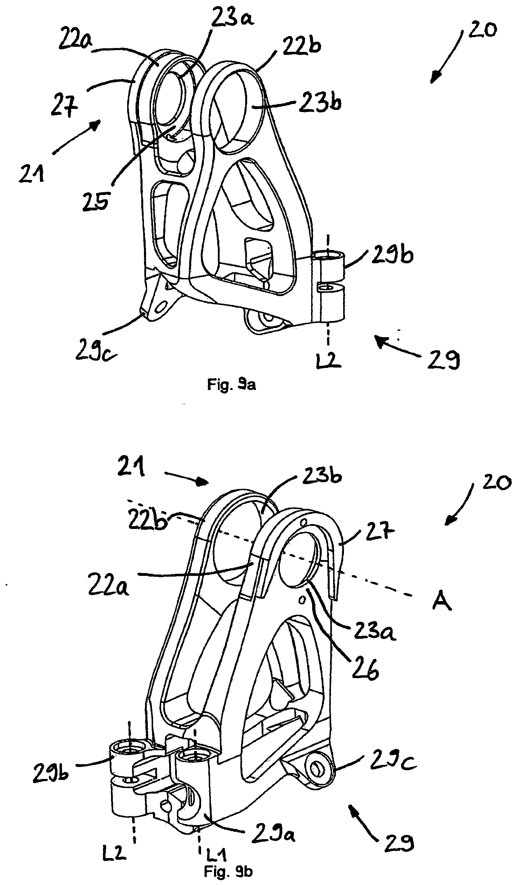

Vergleiche hierzu auch Figur 8, eine Explosionsdarstellung des nicht montierten Basiselements 20 und des Adapters 60 aus Figur 7. In dieser Ansicht ist das Innengewinde 67 der Mutter 66 und das Außengewinde 64 des Bolzens 61, die zusammen die Schraubverbindung des Adapters 60 bilden, gut zu erkennen. Alternativ könnte der Bolzen auch direkt in ein Gewinde der Rahmenöffnung eingeschraubt werden. Dann würden sich Rahmentoleranzen aber direkt auf das Schaltwerk auswirken, was es zu vermeiden gilt. Weiterhin ist der auf die erste Zentrieröffnung 23a abgestimmte Bolzenfuß 63c und der auf die zweite Zentrieröffnung 23b abgestimmte Bolzenkopf 62 zu sehen. Die Anschlagsfläche 63d des Bolzens 61 wirkt mit der hier abgewendeten Außenseite des ersten Arms 22a des Basiselements 20 zusammen (vgl. Figur 9a).

Figur 9a und 9b zeigen eine perspektivische Außen- und Innenansicht des Basiselements 20 mit der ersten und zweiten Zentrieröffnung 23a, 23b. Die erste Zentrieröffnung 23a ist auf den Außendurchmesser des Bolzenfußes 63c des Bolzens 61 abgestimmt. Die zweite Zentrieröffnung 23b ist auf den Außendurchmesser des Bolzenkopfes 61 abgestimmt. Auf der Außenseite des ersten Arms 22a ist die Adapteranschlagsfläche 25 zu sehen, die mit der Anschlagsfläche 63d des Bolzens 61 zusammenwirkt. Auf der gegenüberliegenden Innenseite des ersten Arms 22a ist die Nabenanschlagsfläche 26 angeordnet. In fahrbereitem Zustand wird der Bolzen 61 mit der Bolzenanschlagsfläche 63d gegen die Außenseite und die Nabenendkappe 4 gegen die Innenseite des Basiselements 20 geklemmt. Am unteren Anschlussende des Basiselements 20 befindet sich die Anschlussstelle 29c für eine Seilumlenkung 11. Des Weiteren befinden sich am unteren Anschlussende des Basiselements 20 die erste Aufnahme 29a für die erste Schwenkachse 31 und die zweite Aufnahme 29b für die zweite Schwenkachse 32 des hier nicht gezeigten Schwenkmechanismus 30. Die Längsachsen L1, L2 der ersten und zweiten Aufnahmen 29a, 29b verlaufen in Ebenen, die die Hinterradachse A jeweils im rechten Winkel schneiden. Die vier Schwenkachsen 31, 32, 33, 34 des Parallelogramm-Viergelenks 30 sind also unabhängig von der gewählten Relativstellung des Schaltwerks 10 orthogonal zur gemeinsamen Ritzelachse A ausgerichtet.

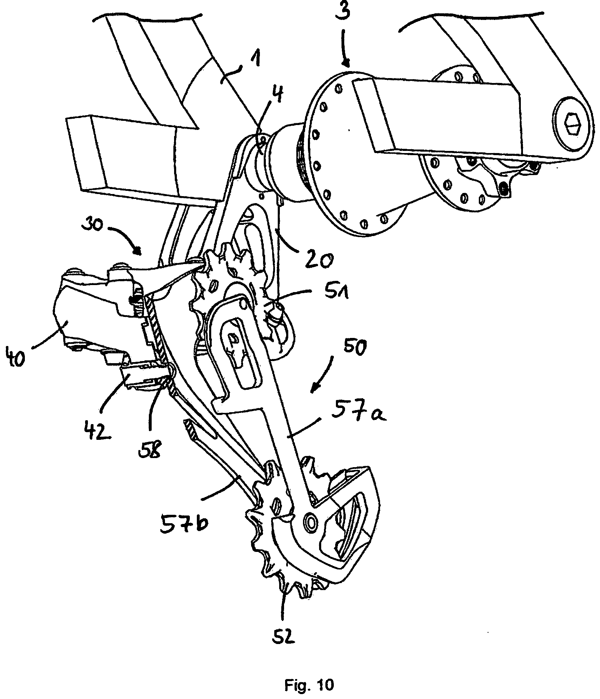

Figur 10 zeigt einen Teilschnitt durch die zweite Ausführungsform des Schaltwerks 10 mit einer Einstellhilfe. Der Schnitt verläuft durch das bewegliche Element 40 und die Kettenführungsanordnung 50. Die Einstellhilfe ist in Form des Arretierungselements 42 ausgebildet, das in die Arretierungsöffnung 58 in der äußeren Käfighälfte 57b eingreift. Mittels der Einstellhilfe wird die im UZS vorgespannte Kettenführungsanordnung 50 gegenüber dem beweglichen Element 40 in einer vorbestimmten Drehposition festgelegt. Die vorbestimmte Dreh- oder Winkelposition legt das obere Kettenführungsröllchen 51 in einem idealen Abstand zu einem Referenzritzel des hier nicht gezeigten Ritzelpakets fest. Zum Einstellen des Schaltwerks 10 wird dieses mittels der Einstellhilfe arretiert. Nach dem Einstellen wird die Arretierung gelöst, so dass sich die Kettenführungsanordnung 50 relativ zum beweglichen Element 40 drehen kann.

Im Folgenden werden die Montageschritte und die Einstellung des Schaltwerks 10 mit Bezugnahme auf die Figuren 1 bis 10 beschrieben.
i) Das Schaltwerk 10 wird mittels des Basiselements 20 und dem Adapter 60 am Rahmen 1 vormontiert. Dazu umgreift das Basiselement 20 das rechte Ausfallende des Rahmens 1 und der Adapter 60 wird in die Rahmenöffnung 2b und die Zentrieröffnungen 23a, 23b in das Basiselement 20 eingesetzt und verschraubt. Der Adapter 60 wird soweit verschraubt, dass er zusammen mit dem Basiselement 20 noch drehbar am Rahmen 1 gehalten wird (vgl. Figuren 6 und 7).
   Nach dem ersten Montageschritt sind der Adapter 60 und das Basiselement 20 in axialer und radialer Richtung gegenüber dem Rahmen 1 vorpositioniert aber noch nicht festgezogen. Adapter 60 und Basiselement 20 sind gegenüber dem Rahmen 1 um die Achse A drehbar.
ii) Das Hinterrad mit der gesamten Nabenanordnung wird eingesetzt und die Steckachse 7 eingeschraubt aber noch nicht ganz festgezogen (vgl. Figuren 1 bis 3, ohne Darstellung des Hinterrads). Im noch nicht festgezogenen Zustand lässt sich das Schaltwerk 10 noch um die Hinterradachse A drehen.
iii) Der Adapter 60 wird angezogen. Dabei wird der Bolzen 61 solange mit der Mutter 66 im UZS gegenüber dem Basiselement 20 gedreht, bis die Anschläge 68a, 68b der Mutter 66 auf die Gegenanschläge 24a, 24b des Basiselements 20 treffen. Aufgrund der Anschläge wird das Basiselement 20 und das gesamte Schaltwerk 10 beim Weiterdrehen solange mitgenommen, bis die Kette gespannt ist. In der gespannten Position ist sowohl das Basiselement 20, als auch die Mutter 66 festgelegt, so dass sich der Bolzen 61 solange in das Innengewinde 67 der Mutter 66 schraubt, bis sich der Adapter 60 am Rahmen 1 festgezogen hat.
   Optional kann eine Einstellhilfe zum Einsatz kommen. Denkbar wäre eine Einstellarretierung, wie sie in Figur 10 gezeigt ist. Die Arretierung 42/58 legt die um die Achse P drehbare Kettenführungsanordnung 50 in einer bestimmten Winkelposition fest und gibt damit den gewünschten Abstand zwischen dem oberen Kettenröllchen 51 und einem Referenzritzel vor. Dazu wird das Schaltwerk 10 in einen Referenzgang bzw. auf ein Referenzritzel geschalten, die Kettenführung 50 arretiert und das Basiselement 20 zusammen mit dem gesamten Schaltwerk 10 soweit um die Hinterradachse A nach hinten verdreht, bis die ideale Kettenspannung erreicht ist.
iv) In der eingestellten Position wird die Steckachse 7 festgezogen und die Arretierung gelöst. Durch das Festziehen der Steckachse 7 wird der innere Arm 22a zwischen der Nabenendkappe 4 und dem Adapter 60 verklemmt. Dadurch richtet sich der Arm 22a zusammen mit dem gesamten Basiselement 20 und dem Schaltwerk 10 orthogonal zur Nabenendkappe 4 bzw. zur Hinterradachse A aus. Eventuelle Rahmentoleranzen spielen für diese Ausrichtung keine Rolle mehr.
   Diese einfache Einstellung ist nur aufgrund der koaxialen Montage des Schaltwerks 10 mit der Drehachse A und des daraus resultierenden, gleichbleibenden Abstands zwischen einem Referenzritzel und der arretierten, oberen Kettenrolle 51 möglich. Bei einem nicht koaxial montierten Schaltwerk RD würde sich der Abstand zwischen der oberen Kettenrolle und einem Referenzritzel bei einer Drehung um die von der Hinterradachse A beabstandete B-Achse des Basiselements verändern (vgl. Figur 13).

Bei festgezogener Steckachse 7 ist das Basiselement 20 gegenüber dem Rahmen 1 auch rotatorisch fixiert. Lediglich der Schwenkmechanismus 30, das bewegliche Element 40 und die Kettenführungsanordnung 50 des Schaltwerks 10 bewegen sich beim Schalten noch relativ zum Rahmen 1. Bei der Demontage wird die Steckachse 7 gelöst, so dass sich das Schaltwerk 10 wieder nach hinten drehen lässt und das Hinterrad entnommen werden kann.

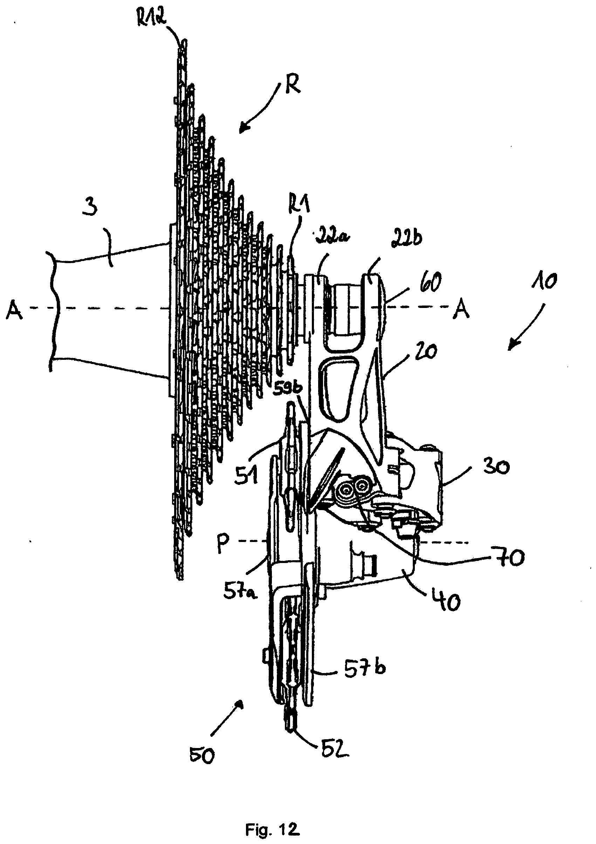

Figur 11 und 12 zeigen dritte Ausführungsbeispiele des Schaltwerks 10 mit Begrenzungsanschlägen 59a und 59b, die es ermöglichen, auf die üblichen Begrenzungsschrauben 70 (limit screws) zu verzichten. Zur Verdeutlichung sind die Begrenzungsschrauben 70 in Figur 12 noch dargestellt.

Das Schaltwerk 10 in Figur 11 ist mit dem größten Ritzel R12 des Ritzelpakets R ausgerichtet. Diese Position stellt die innere Maximalposition dar. Das Schaltwerk 10 soll sich in axialer Richtung nicht weiter nach innen bewegen. Dafür ist der erste Begrenzungsanschlag 59a auf der Kettenführungsanordnung 50, insbesondere auf der Innenseite der äußeren Käfighälfte 57b angeordnet. Der erste Begrenzungsanschlag 59a ist so ausgebildet, dass er mit dem größten Ritzel R12 zusammenwirkt. Dazu ragt der innere Begrenzungsanschlag 59a im Bereich der P-Achse über den Käfig 57b hinaus und stößt in der inneren Maximalstellung gegen die Außenseite des Ritzels R12. Die Kettenführungsanordnung 50 kann dann gegenüber dem größten Ritzel R12 in axialer Richtung nicht weiter nach innen bewegt werden.

Mit anderen Worten erstreckt sich die äußere Käfighälfte 57b der Kettenführungsanordnung 50 in der inneren Maximalposition des Schaltwerks 10 in radialer Richtung in einen Bereich des größten Ritzels R12, welcher sich innerhalb des radialen Außendurchmessers des größten Ritzels R12 befindet. In axialer Richtung erstreckt sich die äußere Käfighälfte 57b in der inneren Maximalposition des Schaltwerks 10 zwischen dem größten Ritzel R12 und seinem benachbarten nächstkleineren Ritzel R11. In der inneren Maximalposition des Schaltwerks 10 befindet sich eine hier nicht gezeigte Kette in Eingriff mit dem größten Ritzel R12. Wird das Schaltwerk 10 über die innere Maximalposition hinweg weiter in axialer Richtung nach innen bewegt, stößt die äußere Käfighälfte 57b bzw. der innere Begrenzungsanschlag 59a gegen das größte Ritzel R12 und begrenzt damit die Bewegung des Schaltwerks 10. Der innere Begrenzungsanschlag 59a ist hier einstückig mit der äußeren Käfighälfte 57b ausgebildet. Mehrteilige Ausführungen von Käfig und Begrenzungsanschlag sind ebenfalls denkbar.

Alternativ kann anstelle der Käfiganordnung auch das bewegliche Element (P-Knuckle) derart ausgebildet sein, dass es in der vorgesehenen, inneren Maximalposition des Schaltwerks als innerer Begrenzungsanschlag wirkt. Der innere Begrenzungsanschlag wirkt mit dem Ritzelpaket, insbesondere einem Ritzel oder einem anderen dem Ritzelpaket zugeordneten geeigneten Element, zum Beispiel einer Kettenschutzscheibe zusammen.

In Figur 12 ist das Schaltwerk 10 mit dem kleinsten Ritzel R1 des Ritzelpakets R ausgerichtet. Im Vergleich zu Figur 11 ist die Kettenführungsanordnung 50 viel weiter nach hinten (im UZS) gedreht. Das obere Kettenführungsröllchen 51 ist in radialer Richtung etwa gleich weit vom Ritzel R1 entfernt, wie in Figur 12 vom Ritzel R12. Die gezeigte Position stellt die äußere Maximalposition des Schaltwerks 10 dar. Das Schaltwerk 10 soll sich in axialer Richtung nicht weiter nach außen bewegen. Dafür ist der zweite Begrenzungsanschlag 59b auf der Kettenführungsanordnung 50, insbesondere der Außenseite der äußeren Käfighälfte 57b angeordnet. Der zweite Begrenzungsanschlag 59a ist so ausgebildet, dass er mit dem Basiselement 20 zusammenwirkt. Genauer gesagt wirkt die Außenseite der äußeren Käfighälfte 57b im Bereich der oberen Kettenführungsrolle 51 als zweiter Begrenzungsanschlag 59b. Der zweite Begrenzungsanschlag 59b stößt in der äußeren Maximalposition gegen die Innenseite des Basiselements 20. Die Innenseite des Basiselements 20 ist gleichzeitig die Innenseite des ersten Arms 22a. Die Kettenführungsanordnung 50 kann dann gegenüber dem Basiselement 20 in axialer Richtung nicht weiter nach außen bewegt werden.

Vorteilhaft an den Begrenzungsanschlägen 59a, 59b ist, dass diese festen Anschläge nicht mehr eingestellt werden müssen, sondern bereits auf das Ritzelpaket R abgestimmt sind. Die Begrenzungsschrauben 70 zum Einstellen der Anschläge sind nicht mehr nötig.

Gerade in Verbindung mit dem in Figur 11 und 12 dargestellten Ritzelpaket R mit einer hohen Anzahl von zwölf Ritzeln R1 - R12 und einer großen Spreizung von hier zehn Zähnen auf dem kleinsten Ritzel R1 und 50 Zähnen auf dem größten Ritzel R12, sind die Vorteile des Schaltwerks 10 besonders groß.

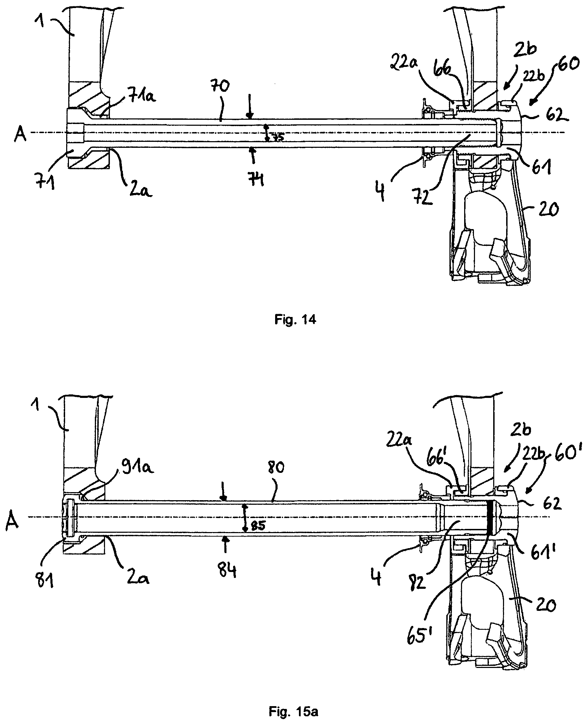

Figur 14 zeigt eine Schnittdarstellung eines vierten Ausführungsbeispiels entlang der Achse A in der Rückansicht. Aus Gründen der besseren Übersicht sind in dieser Darstellung nur der Rahmen 1, die Steckachse 70, die rechte Nabenendkappe 4 und ausgewählte Teile des Schaltwerks gezeigt. Alle zu sehenden Teile sind geschnitten dargestellt.

Das Basiselement 20 ist mittels des Adapters 60 am rechten Ausfallende befestigt. Dazu durchgreift der Bolzen 61 die rechte Rahmenöffnung 2b und wird mit der Mutter 66 verschraubt. Die Steckachse 70 ist mit ihrem ersten Ende 71 in die linke Rahmenöffnung 2a eingesteckt und mit ihrem zweiten Ende 72 in den Bolzen 61 des Adapters 60 eingeschraubt. Der Adapter 60 bzw. der Bolzen 61 dient gleichzeitig als Konter für die Steckachse 70. Wenn die Steckachse 70 angezogen wird, schraubt sie sich weiter in den Bolzen 61 und klemmt diesen gegenüber dem Rahmen 1. Der Außendurchmesser 74 der Steckachse 70 ist kleiner bemessen als die Rahmenöffnung 2a. Der Zwischenraum wird mit einer Buchse 71a ausgeglichen. Das erste Steckachsenende 71 weist einen Kopf mit einem größeren Durchmesser als die Rahmenöffnung 2a auf, und kann nicht durch die Rahmenöffnung 2a rutschen. Der Kopfdurchmesser verringert sich kontinuierlich vom ersten Ende 71 zum Körper oder Schaft der Steckachse 70 hin bis auf den Außendurchmesser 74. Der Übergang verläuft in einem 45 Grad Winkel. Andere Winkelmaße, insbesondere 90 Grad, sind ebenfalls denkbar. Wie in den vorhergehenden Ausführungsbeispielen, ist der innere Arm 22a des Basiselements 20 in axialer Richtung zwischen der rechten Nabenendkappe 4 und dem Bolzen 61 festgelegt. Außerdem wird der innere Arm 22a des Basiselements 20 in radialer Richtung auf dem Zentrierbereich des Bolzens 61 (vgl. Details in Figur 7 und 8) und der äußere Arm 22b auf dem Bolzenkopf 62 zentriert. Die gezeigte Steckachse 70 weist einen Außendurchmesser 74 von 12 mm und einen Innendurchmesser 75 von 7 mm auf. Daraus ergibt sich eine Steckachsenwandstärke von 2,5 mm. Das Ausführungsbeispiel der Steckachse 70 in Figur 14 entspricht im Wesentlichen den vorherigen Figuren, wird hier aber noch einmal direkt einer Steckachse 80 gemäß Figur 15a mit einem vergrößerten Außendurchmesser 84 und einer sich unterscheidenden Zentrierung gegenübergestellt.

Figur 15a zeigt eine Schnittdarstellung eines fünften Ausführungsbeispiels, welches sich aufgrund der Steckachse 80 mit einem vergrößerten Außendurchmesser 84 in mehreren Punkten von der vorherigen Ausführungsform unterscheidet. Die gezeigte Steckachse 80 weist einen Außendurchmesser 84 von 15 mm und einen ersten Innendurchmesser 85 von 12 mm auf. Dies führt zu einer ersten Wandstärke W85 von 1,5 mm. Alle gezeigten Teile sind geschnitten dargestellt.

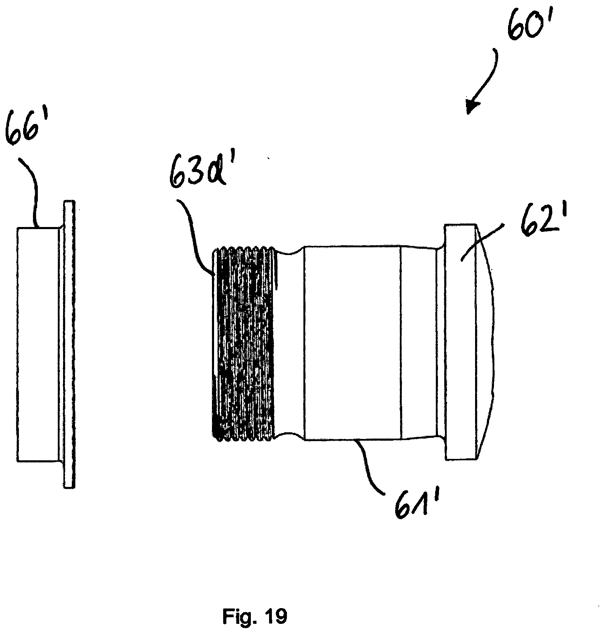

Der Rahmen 1 mit seinen Rahmenöffnungen 2a und 2b, die hier nur teils gezeigte Nabenanordnung mit der Nabenendkappe 4 und das Basiselement 20 des Schaltwerks sind unverändert. Nur der Adapter 60' muss auf den vergrößerten Außendurchmesser 84 der Steckachse 80 angepasst werden. Um die Steckachse 80 aufnehmen zu können, wird der Durchmesser des Innengewindes 65' des Bolzens 61' auf deren Außendurchmesser 84 angepasst. Außerdem fällt der Zentrierbereich (vgl. Zentrierbereich 63c der vorhergehenden Ausführungsformen) am Bolzen 61' weg. Dies führt dazu, dass das Basiselement 20 die äußere Umfangsfläche der Steckachse 80 direkt kontaktiert. Das heißt, der innere Arm 22a des Basiselements 20 zentriert sich direkt auf der Steckachse 80, und nicht wie in den vorherigen Beispielen auf dem Adapter 60. Der äußere Arm 22b des Basiselements zentriert sich unverändert auf dem Außenumfang des Bolzenkopfes 62'. Die Referenzierung des Basiselements 20 in axialer Richtung und in radialer Richtung erfolgt unabhängig vom Rahmen 1. In axialer Richtung ist das Basiselement 20 zwischen Nabenendkappe 4 und dem Adapter 60', insbesondere der Anschlagsfläche 63d' des Bolzens 61' (siehe Figur 19), festgelegt. In radialer Richtung wird der innere Arm 22a des Basiselements 20 direkt auf der Steckachse 80 und der äußere Arm 22b auf dem Adapter 60', insbesondere auf dem Bolzenkopf 62', zentriert. Die weitgehende Unabhängigkeit von Rahmentoleranzen erlaubt eine präzise Ausrichtung des Schaltwerks selbst dann, wenn die beiden Rahmenöffnungen 2a und 2b nicht genau fluchten. Der Übergang zwischen dem Kopf am ersten Ende 81 der Steckachse 80 zum Steckachsenkörper mit dem Außendurchmesser 84 ist hier rechtwinklig. Der Außendurchmesser 84 der Steckachse 80 entspricht in etwa der Rahmenöffnung 2a. Die Steckachse 80 ist mit weniger Spiel durch die Öffnung 2a geführt. Die Buchse 91a weist einen 45 Grad Winkel auf und dient der Zentrierung der Steckachse 80 in der Rahmenöffnung 2a. Auch diese Buchse könnte in einem anderen Winkel ausgebildet sein.

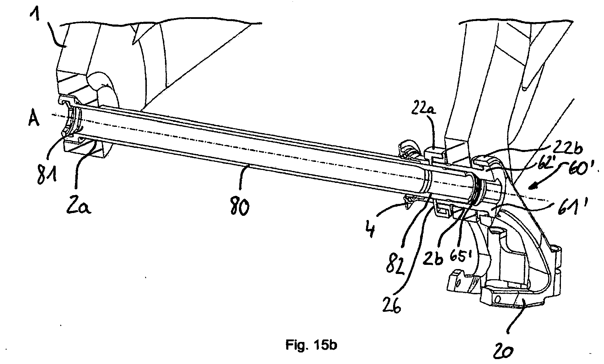

Zur Verdeutlichung zeigt Figur 15b eine perspektivische Außenansicht der Schnittdarstellung aus Figur 15a. Die Nabenendkappe 4 liegt axial an der Nabenanschlagsfläche 26 des Basiselements 20 an.

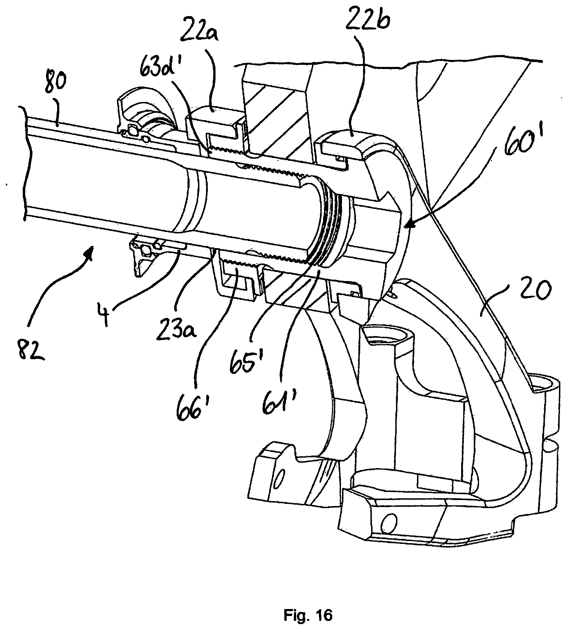

In der Figur 16 ist eine vergrößerte Detailansicht des rechten Ausfallendes des Rahmens 1 aus Figur 15b dargestellt. Das zweite Ende 82 der Steckachse 80 ist in das Innengewinde 65' des Bolzens 61' des Adapters 60' eingeschraubt. Hier wird der direkte Kontakt zwischen Basiselement 20 und Steckachse 80 besonders deutlich. Der innere Arm 22a des Basiselements 20 liegt mit seiner ersten Zentrieröffnung 23a in radialer Richtung direkt auf dem Außenumfang der Steckachse 80 an. In axialer Richtung ist der innere Arm 22a zwischen der Nabenendkappe 4 und der Anschlagsfläche 63d' des Bolzens 61' festgelegt. Die Mutter 66' entspricht im Wesentlichen den vorherigen Ausführungsbeispielen.

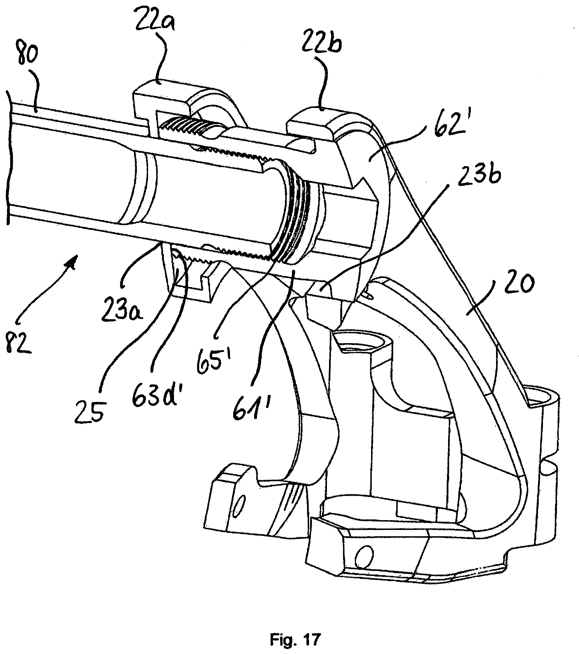

Figur 17 entspricht der Ansicht aus Figur 16, wobei zur besseren Übersichtlichkeit die Nabenendkappe und die Adaptermutter ausgeblendet wurden. Der Bolzen 61' schlägt in axialer Richtung mit seiner Anschlagsfläche 63d' an der Gegenanschlagsfläche 25 des inneren Arms 22a an. Der äußere Arm 22b des Basiselements 20 zentriert sich unverändert mit seiner zweiten Zentrieröffnung 23b auf dem Außenumfang des Bolzenkopfes 62'.

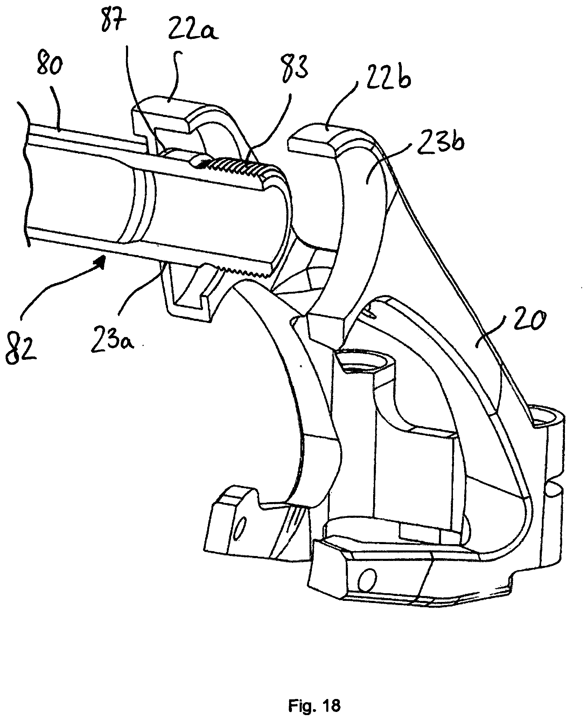

Figur 18 zeigt die Anordnung aus Figur 17 ohne den Bolzen. Hier wird die Zentrierung des Basiselements 20 auf der Steckachse 80 besonders deutlich. Das zweite Ende 82 der Steckachse 20 durchgreift den inneren Arm 22a des Basiselements 20. Das Außengewinde 83 der Steckachse 80 liegt in montiertem Zustand zwischen dem ersten und dem zweiten Arm 22a, 22b des Basiselements 20. Um eine möglichst präzise Zentrierung des Basiselements 20 auf der Steckachse 80 zu erreichen, ist die Oberfläche 87 der Steckachse 80 zumindest im Kontaktbereich zwischen Basiselement 20 und Steckachse 80 bearbeitet. Diese Zentrieroberfläche 87 wird beispielsweise feingedreht, geschliffen und/oder beschichtet. Aufgrund der aufwendigen Bearbeitung wird die Zentrieroberfläche 87 möglichst schmal gehalten. Die Zentrieroberfläche 87 muss jedoch mindestens so breit, wie die erste Zentrieröffnung 23a des ersten Arms 22a des Basiselements 20 sein.

Insbesondere reicht die Zentrieroberfläche 87 der Steckachse 80 in montiertem Zustand zumindest bis in den Bereich des Bolzens 61' hinein, so dass der Bolzenfuß auf der Zentrieroberfläche 87 zum Liegen kommt. Diese Ausführung erlaubt eine genaue Zentrierung des Bolzens 61' auf der Steckachse 80. Die Zentrierung durch das Einschrauben des Außengewindes 83 der Steckachse 80 in das Innengewinde 65' des Bolzens 61' alleine ist aufgrund des Gewindespiels nicht präzise genug. Die Zentrieroberfläche 87 nimmt das Spiel zwischen Bolzen 61' und Steckachse 80 heraus. So ist eine besonders steife Verbindung zwischen der Steckachse 80 und dem Bolzen 61' möglich. Die Zentrieroberfläche 87 sollte eine Mindestbreite aufweisen, damit Toleranzen je nach Einschraubtiefe, abhängig von der Nabenanordnung und Rahmenbreite, ausgeglichen werden können und das Basiselement 20 immer auf der Oberfläche 87 zum Liegen kommt. Eine axiale Breite der Zentrieroberfläche 87 von etwa 2,5 mm (oder mehr) ist ausreichend breit und kann relativ schnell und kostengünstig gefertigt werden.

Eine weitere Zentrieroberfläche könnte am äußersten zweiten Ende der Steckachse angebracht werden, welche ebenfalls mit dem Bolzen zusammenwirkt und zu einer noch steiferen Verbindung führt. Die äußere Oberfläche von besonders hochwertigen Steckachsen könnte auch vollständig nachbearbeitet sein.

Figur 19 zeigt eine vergrößerte Explosionsdarstellung in der ungeschnittenen Rückansicht des Adapters 60', bestehend aus dem Bolzen 61' und der Mutter 66'. Der Adapter 60' entspricht im Wesentlichen dem Adapter 60 des vorhergehenden Ausführungsbeispiels in den Figuren 1 bis 12, weshalb hier nur noch auf die Unterschiede eingegangen wird. Das in seinem Durchmesser vergrößerte und auf die 15 mm Steckachse 80 angepasste Innengewinde ist in der Rückansicht nicht sichtbar. Der Anschlag 63d' bildet das innere axiale Ende des Bolzens 61'. Die übrigen Außenmaße des Bolzens 61' sind unverändert und auf das Basiselement 20 abgestimmt.

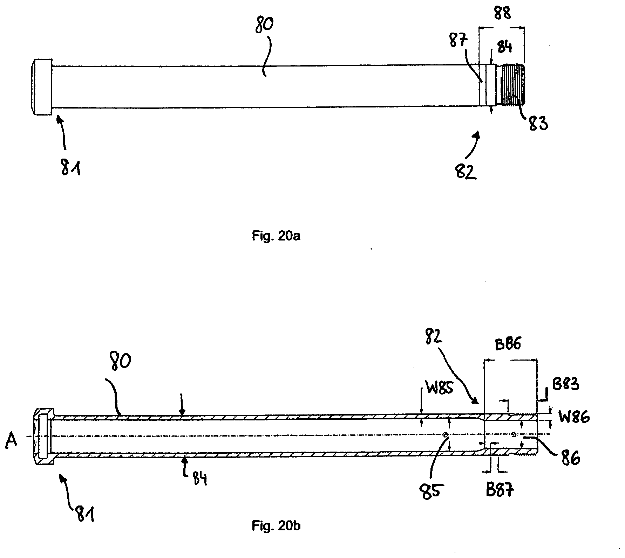

Eine Steckachse 80 gemäß des fünften Ausführungsbeispiels ist in einer ungeschnittenen Rückansicht in Figur 20a und in einer Schnittansicht entlang der Achse A in Figur 20b gezeigt. Die Steckachse 80 weist einen Außendurchmesser 84 von 15 mm auf. Die axiale Gesamtbreite vom ersten Ende 81 bis zum zweiten Ende 82 variiert je nach verwendetem Nabenstandard und den Rahmenbedingungen. Typische Nabenbreiten von linker bis rechter Nabenendkappe liegen bei 142 bis 148 mm. Das Außengewinde 83 und die Zentrieroberfläche 87 sind im Bereich des zweiten Steckachsenendes 82 angeordnet. Die Zentrieroberfläche 87 liegt axial weiter innen als das Außengewinde 83. Die Zentrieroberfläche 87 beginnt in einem Abstand 88 von etwa 13,5 mm und endet in einem Abstand 88 von etwa 16 mm vom zweiten Steckachsenende 82. Die Zentrieroberfläche 87 hat eine axiale Breite B87 von etwa 2,5 mm. Die axiale Breite B83 des Außengewindes 83 misst etwa 10 mm.

Die Steckachse 80 weist einen Außendurchmesser 84 von 15 mm auf. Lediglich das erste Ende 81 hat einen größeren Kopfdurchmesser. Ein erster Innendurchmesser 85 der Steckachse 80 beträgt 12 mm. Daraus ergibt sich eine erste Wandstärke W85 von etwa 1,5 mm. Die erste Wandstärke W85 erstreckt sich über einen Großteil der axialen Breite der Steckachse 80. Im Bereich des zweiten Steckachsenendes 82 weist sie einen zweiten Innendurchmesser 86 auf, der etwa 10 mm beträgt. Der zweite Innendurchmesser 86 ist kleiner als der erste Innendurchmesser 85. Aus dem zweiten Innendurchmesser 86 ergibt sich eine zweite Wandstärke W86, die größer als die erste Wandstärke W85 ist. Im gezeigten Ausführungsbeispiel ist die zweite Wandstärke W86 mit etwa 2,4 mm bemessen. Der zweite Innendurchmesser 86 beziehungsweise die vergrößerte zweite Wandstärke W86 ist gerade in den Bereichen der Steckachse 80 angeordnet, die stark belastet werden. Insbesondere im Bereich des Außengewindes 83. Auch der Bereich der Zentrieroberfläche 87 weist eine vergrößerte Wandstärke W86 auf, weil hier das Basiselement 20 auf der Steckachse 80 aufliegt und entsprechend größere Kräfte wirken. Der Übergang zwischen dem ersten und zweiten Innendurchmesser W85, W86 ist kontinuierlich. Der zweite Innendurchmesser 86 erstreckt sich vom äußersten zweiten Steckachsenende 82 in axialer Richtung über eine Breite B86 von etwa 18 mm.

Vom ersten Ende 81 bis zum zweiten Ende 82 der Steckachse 80 reihen sich folgende Bereiche aneinander: erstes Ende 81 mit vergrößertem Kopfdurchmesser, rechtwinkliger Übergang zum Außendurchmesser 84, erster Innendurchmesser 85 mit der sich daraus ergebenden Wandstärke W85, Übergang vom ersten Innendurchmesser 85 zum zweiten Innendurchmesser 86 mit der sich daraus ergebenden Wandstärke W86, Zentrieroberfläche 87, Außengewinde 86 und zweites Steckachsenende 82.

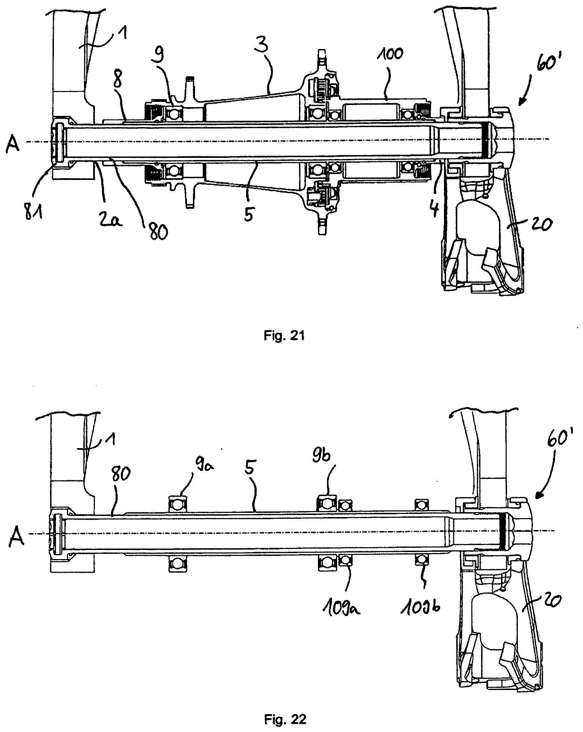

Die Figur 21 zeigt eine Schnittdarstellung einer Hinterradachsanordnung mit einer Steckachse 80 gemäß dem fünften Ausführungsbeispiel. Alle Teile sind geschnitten dargestellt. Die Steckachse 80 durchgreift in montiertem Zustand die Rahmenöffnung 2a, die Nabenanordnung und den Antreiber 100 und ist in das Schaltwerk, insbesondere den Adapter 60' eingeschraubt. Das Schaltwerk (hier nur teilweise gezeigt) wird über das Basiselement 20 und den Adapter 60' am rechten Ausfallende des Rahmens 1 befestigt. Mit der Steckachse 80 wird die Nabenanordnung am Rahmen 1 befestigt. Durch das Eindrehen der Steckachse 80 in das Gewinde des Adapters 60' wird das Basiselement 20 gegen die Nabenanordnung, insbesondere die rechte Nabenendkappe 4 in axialer Richtung verspannt. Wird die Steckachse 80 entfernt, verbleibt das Schaltwerk samt Adapter 60' und Basiselement 20 am Rahmen 1. Die Nabenanordnung umfasst unter anderem die linke Nabenendkappe 8, die Nabenlagerung 9, die Nabenhülse 3, die Nabenachse 5 und die rechte Nabenendkappe 4.

Figur 22 zeigt ausgewählte Teile der Hinterradachsanordnung aus Figur 21. Zur besseren Übersichtlichkeit wurden hier der Antreiber und die meisten Teile der Nabenanordnung entfernt. Lediglich die Nabenachse 5 und die Nabenlagerung 9, bestehend aus den als Wälzlager ausgebildeten Nabenlagern 9a, 9b der Nabenanordnung sind dargestellt. Die Steckachse 80 ist mit wenig Spiel in die Nabenachse 5 eingesteckt. Die Nabenlager 9a, 9b und die Antreiberlager 109a, 109b sind auf die Nabenachse 5 gesteckt. Alle Teile sind geschnitten dargestellt.

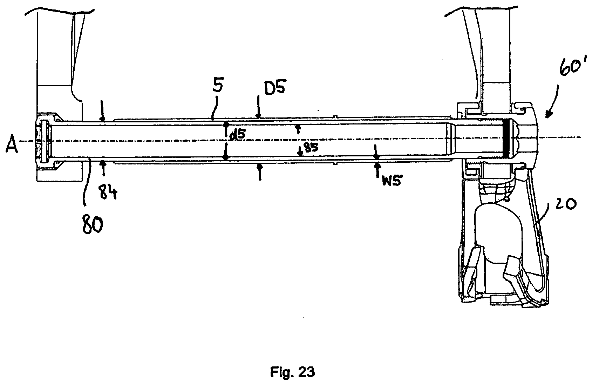

Figur 23 zeigt die Schnittdarstellung der Hinterradachsanordnung aus Figur 22 ohne die Lager. Die Steckachse 80 mit einem Außendurchmesser 84 von 15 mm ist in die Nabenachse 5 mit wenig Spiel eingesteckt. Der Innendurchmesser d5 der Nabenachse 5 beträgt etwas mehr als 15 mm. Der Außendurchmesser D5 der Nabenachse 5 beträgt etwa 17 mm. Daraus ergibt sich eine Wandstärke W5 der Nabenachse 5 von etwa 1 mm. Die Wandstärke W85 der Steckachse 80 ist größer als die Wandstärke W5 der Nabenachse 5. Insbesondere beträgt die Wandstärke W85 der Steckachse 80 etwa 1,5 mm und damit das 1,5-fache der Nabenachse 5. Dies führt zu einem relativ ausgewogenen Verhältnis der Flächenträgheitsmomente.

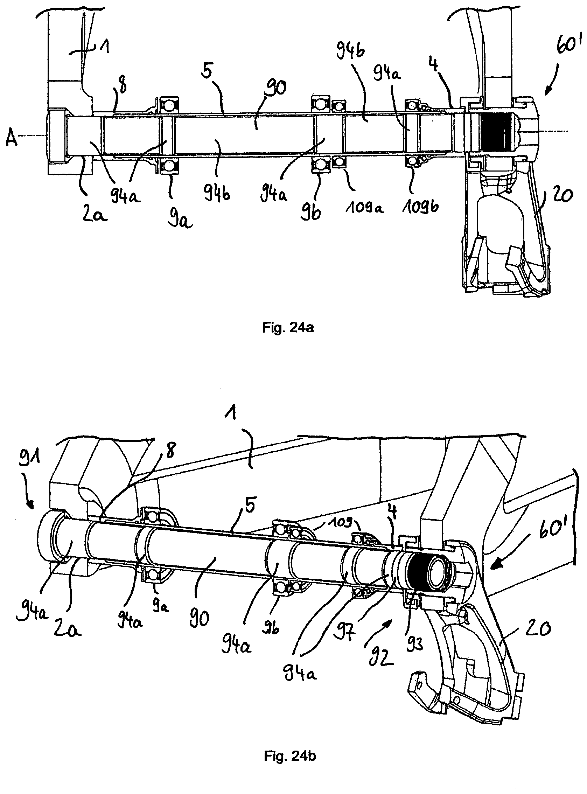

Figur 24a zeigt einen Teilschnitt durch ausgewählte Teile einer Hinterradachsanordnung mit einer Steckachse 90 gemäß dem sechsten Ausführungsbeispiel. Ausgenommen der Steckachse 90 sind alle Teile geschnitten dargestellt. Figur 24b zeigt den Teilschnitt aus Figur 24a in einer perspektivischen Außenansicht. Die Steckachse 90 durchgreift die linke Rahmenöffnung 2a, die Nabenendkappen 8, 4 und die Nabenachse 5 mit geringem Spiel. Das zweite Steckachsenende 92 ist mit dem Außengewinde 93 in den Adapter 60' des Schaltwerks eingeschraubt. Der erste Außendurchmesser 94a der Steckachse 90 ist etwas kleiner als der Innendurchmesser der Nabenachse 5. Die Steckachse 90 weist in den Bereichen mit erhöhter Belastung den ersten Außendurchmesser 94a auf. Dies sind insbesondere die Steckachsenenden 91, 92 und die Bereiche der Lager 9a, 9b, 109a, 109b. Die übrigen Bereiche der Steckachse 90 weisen einen zweiten, reduzierten Außendurchmesser 94b auf.

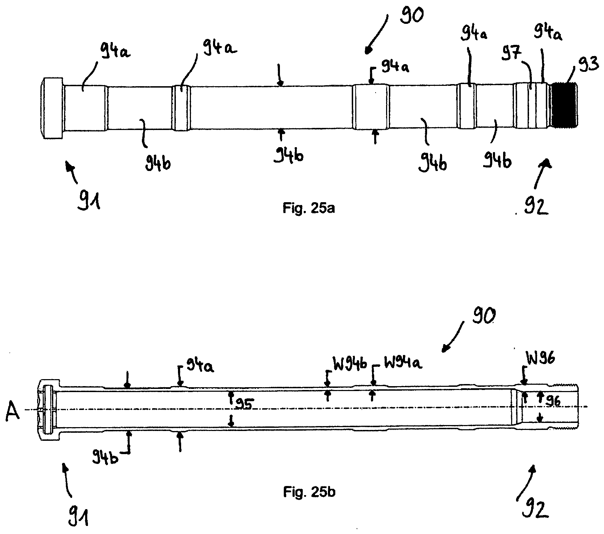

Die Steckachse 90 gemäß der sechsten Ausführungsform ist in einer ungeschnittenen Rückansicht in Figur 25a und in einer Schnittansicht entlang der Achse A in Figur 25b gezeigt.

Die Steckachse 90 unterscheidet sich von der Steckachse 80 in erster Linie dadurch, dass sie zur Gewichtseinsparung in großen Bereichen eine reduzierte Wandstärke W94b aufweist. Die Steckachse 90 weist einen ersten Außendurchmesser 94a von 15 mm und einen ersten Innendurchmesser 95 von 12 mm auf. Der erste Außendurchmesser 94a von 15 mm wurde auf einen zweiten Außendurchmesser 94b von 14 mm reduziert. Der erste Innendurchmesser 95 bleibt unverändert. Daraus ergibt sich im Bereich des ersten Außendurchmessers 94a eine erste Wandstärke W94a von 1,5 mm und im Bereich des reduzierten Außendurchmessers 94b eine zweite, reduzierte Wandstärke W94b von 1 mm. Die Steckachse 90 weist nur in den axialen Bereichen, die einer größeren Belastung unterliegen, den größeren Außendurchmesser 94a und die größere Wandstärke W94b auf.

Wie bei der vorhergehenden Ausführungsform weist die Steckachse 90 im Bereich des zweiten Endes 92 einen zweiten kleineren Innendurchmesser 96 auf, der etwa 10 mm beträgt. Aus dem zweiten Innendurchmesser 96 ergibt sich eine dritte Wandstärke W96, die größer als die erste und die zweite Wandstärke W94a, W94b ist. Der zweite Innendurchmesser 96 bzw. die vergrößerte zweite Wandstärke W96 ist in dem stark belasteten Bereich des Außengewindes 93 und der Zentrieroberfläche 97 angeordnet.

Vom ersten Ende 91 bis zum zweiten Ende 92 der Steckachse 90 reihen sich folgende Bereiche aneinander: erstes Ende 91 mit vergrößertem Kopfdurchmesser, rechtwinkliger Übergang zum ersten Außendurchmesser 94a, erster Innendurchmesser 95 mit der sich daraus ergebenden Wandstärke W94a in den stärker belasteten Bereichen, dazwischen der reduzierte Außendurchmesser 94b mit der sich daraus ergebenden reduzierten Wandstärke W94b, Übergang vom reduzierten Außendurchmesser 94b zum zweiten Innendurchmesser 96 mit der sich daraus ergebenden Wandstärke W96, Zentrieroberfläche 97, Außengewinde 96 und zweites Steckachsenende 92.

Der reduzierte Außendurchmesser 94b kann besonders einfach durch Abdrehen des überschüssigen Materials an der Außenseite der Steckachse 90 hergestellt werden.

Alternativ könnte eine reduzierte Wandstärke auch durch einen dritten, vergrößerten Innendurchmesser verwirklicht werden. Dabei wird Material an der Innenseite der Steckachse und nicht an der Außenseite entfernt bzw. eingespart. Der Effekt der Gewichtseinsparung wäre derselbe.

Grundsätzlich ist anzumerken, dass die Steckachsen 80, 90 mit einem vergrößerten Außendurchmesser von 15 mm trotz einer geringeren Wandstärken von 1 mm bis 2 mm ein stark erhöhtes Flächenträgheitsmoments im Vergleich zu der Steckachsen 70 mit einem 12 mm Außendurchmesser aufweisen. Die Steifigkeit wird erhöht und/oder das Gewicht verringert.

Im Vergleich zu herkömmlichen Hinterradachsanordnungen kann mit der Steckachse 80 gemäß dem fünften Ausführungsbeispiel ein etwa 30 % höheres Flächenträgheitsmoment des Gesamtsystems und gleichzeitig ein etwas 21 % geringeres Gewicht erzielt werden.

Ein weiteres hier nicht gezeigtes Ausführungsbeispiel, wie es speziell für E-Bikes zum Einsatz kommen könnte, ist eine Steckachse mit einem Außendurchmesser von 15 mm und einem Innendurchmesser von 11 mm. Im Vergleich zu herkömmlichen Hinterradachsanordnungen für E-Bikes mit einer deutlich größeren Wandstärke wird das Flächenträgheitsmoment zwar etwas verringert, aber deutlich an Gewicht gespart. Zusätzlich führt die gleichmäßigere Verteilung des Flächenträgheitsmoments auf die Steckachse und Nabenachse zu einer insgesamt stabileren Achsanordnung, weil die Maximalspannungen an der Außenhaut der Nabenachse geringer sind.

Ein weiterer Faktor ist die Verteilung von Zug- und Druckspannungen, welche sich mit den Biegespannungen überlagern. Die Zug- und Druckspannungen sind auch abhängig von der Gewindesteigung des Außengewindes der Steckachse. Eine Gewindesteigung von 1 mm Axialbewegung pro Umdrehung hat sich bei einem üblichen Anzugsmoment als vorteilhaft erwiesen. Eine Gewindesteigung 1,5 mm wäre schlechter, weil bei gleichem Anzugsmoment eine geringere Zugspannung in der Steckachse aufgebaut wird. Die Zugspannung in der Steckachse gleicht sich mit der Druckspannung in der Nabenachse aus. Es besteht eine hohe Druckspannung auf der Nabenachse, weil diese eine dünnere Wandstärke bzw. einen kleineren Querschnitt aufweist.

Durch die Auswahl des Materials können sowohl die Steifigkeit, als auch das Gewicht weiter beeinflusst werden. Bevorzugte Materialien für die Steckachse sind Aluminium, Titan oder Stahl.

Das modulare System erlaubt einen einfachen und kostengünstigen Wechsel der Steckachse 70, 80, 90. Je nach Fahrradtyp und Belastung kann entweder eine steifere oder leichtere Steckachse gewählt werden. Lediglich der Adapter 60, 60' muss auf die gewählte Steckachse 70, 80, 90 angepasst werden, Die Nabenanordnung, der Antreiber 100, das Basiselement 20 und die restlichen Teile des Schaltwerks können unverändert genutzt werden und werden vom Wechsel der Steckachse nicht beeinflusst.

Die in den oben beschriebenen Ausführungsbeispielen genannten Wandstärken der Naben- und Steckachsen sind auf eine Fertigung aus Aluminium ausgelegt. Die gemachten Aussagen zum Flächenträgheitsmoment bestehen materialunabhängig fort. Solange für die Steckachse und die Nabenachse dasselbe Material verwendet wird, können die genannten Wandstärkenverhältnisse beibehalten werden.

Werden unterschiedliche Materialien für die Nabenachse und die Steckachse verwendet, können die Wandstärken entsprechend der maximalen Spannungen angepasst werden. Beispielsweise könnte eine Steckachse aus Titan und eine Nabenachse aus Aluminium gefertigt werden. Dann könnte die Steckachse entsprechend der zulässigen Streckgrenzen dünnwandiger ausgebildet werden.

Anzumerken ist, dass die vorstehend beschriebenen Ausführungsvarianten des hinteren Schaltwerks des neuen (zweiten) Typs 10 schwerlich an einem herkömmlichen Fahrradrahmen montiert werden können, der für die Anbringung eines herkömmlichen hinteren Schaltwerks mittels eines Schaltauges nicht-koaxial zur Achse konzipiert ist. Ein hinteres Schaltwerk des neuen Typs (im Folgenden vor allem als hinteres Schaltwerk des zweiten Typs angesprochen) wird also das herkömmliche hintere Schaltwerk des Fahrrads gemäß Figur 13 (im Folgenden vor allem als hinteres Schaltwerk des ersten Typs angesprochen) nicht ersetzen können. Neben dem hinteren Schaltwerk 10 des zweiten Typs selbst lassen sich auch zugehörige Komponenten, wie speziell der Adapter 60, nicht am herkömmlichen Rahmen der Figur 13 montieren. Auch die Steckachse 7, die Hohlachse 5 und die Nabenendkappe 4 und damit die gesamte Nabenanordnung und in Folge das Hinterrad der beschriebenen Ausführungsformen werden mangels der Montierbarkeit des Adapters 60 nicht am herkömmlichen Fahrradrahmen der Figur 13 montiert werden können.

Die dem hinteren Schaltwerk des zweiten Typs zu Grunde liegende implizit also eine spezielle Auslegung des mit diesem zu verwendenden Fahrradrahmens 1 an dessen hinteren Halterungsabschnitten (Ausfallenden) für die Hinterradachsanordnung, um den Adapter 60 montieren zu können und um den innen angeordneten ersten Arm 22a des Basiselements 20 gemeinsam mit den übrigen, der Nabe zugehörigen bzw. zugeordneten Komponenten zwischen den Ausfallenden aufnehmen und montieren zu können. Hierbei ist zu beachten, dass bei einer fachmännisch dimensionierten Ausführungsform der erste Arm 20a des Basiselements 20 regelmäßig axial dicker sein wird (beispielsweise mit einer axialen Dicke im Bereich von etwa 7 bis 9 mm, konkreter beispielsweise mit einer axialen Dicke von etwa 8 mm, jeweils mit üblichen Toleranzen) als ein auf der Innenseite des zugeordneten Ausfallendes zu positionierendes herkömmliches Schaltauge, welches typischerweise eine axiale Dicke von etwa 4,5 bis 5,5 mm, beispielsweise eine axiale Dicke von etwa 5 mm aufweisen könnte. Ausgehend von dem Rahmen der Figur 13 ist also nicht nur das rechte Ausfallende so weiterzubilden, dass der Adapter in eine Rahmenöffnung montiert werden kann, sondern es ist auch der axiale Abstand der beiden Ausfallenden zu vergrößern, wenn man von der gleichen Hinterradachsanordnung für beide Typen von hinteren Schaltwerken ausgeht. Im Falle einer hier angenommenen Steckachse könnte der axiale Abstand zwischen den die Einspannkräfte zwischen den Ausfallenden aufnehmenden Anschlagelementen der Hinterradachsanordnung (beispielsweise die Enden der Hohlachse oder die sogenannten Nabenendkappen oder Achsmuttern oder vergleichbare Funktionsteile) typischerweise etwa 142 mm betragen, um auch hierfür ein Beispiel zu geben.

Es wird nicht nur das hintere Schaltwerk 10 des zweiten Typs mit dem Adapter 60 als vorteilhafte Neuerungen bereitgestellt, sondern zumindest implizit auch der für die Montage des Adapters 60 und des hinteren Schaltwerks 10 des zweiten Typs vorgesehenen Fahrradrahmen 1. Auf Grundlage dieser Komponenten wird ein Set von Komponenten bereitgestellt und unter Bezugnahme auf die Figuren 1 bis 12 und 14 bis 26 mehrere Ausführungsbeispiele für ein solches Set, die jeweils wenigstens ein hinteres Schaltwerks 10 des zweiten Typs, wenigstens einen Adapter 60 und einen für die Montage dieser Komponenten geeigneten Fahrradrahmen 1 umfassen offenbart. Zu dem jeweiligen Set von Komponenten können auch die zugeordneten weiteren Komponenten der Naben- und Hinterradachsanordnung gehören, wie die Steckachse 7, die Hohlachse 5 und die Nabenendkappe 4 der Ausführungsform der Figuren 1 bis 9b bzw. der entsprechenden Komponenten der übrigen Ausführungsformen. Auf Grundlage eines solchen Sets von Komponenten kann ein Fahrrad bereitgestellt werden, das mit einer mit einem hinteren Schaltwerk des zweiten Typs ausgeführten Kettenschaltung ausgestattet ist.

Wie ausgeführt, kann der herkömmliche Fahrradrahmen gemäß Figur 13 schwerlich mit einem hinteren Schaltwerk des zweiten Typs ausgestattet werden. Umgekehrt kann der bereitgestellte, für die Montage des hinteren Schaltwerks des zweiten Typs ausgelegte Fahrradrahmen schwerlich mit einem hinteren Schaltwerk des ersten Typs ausgestattet werden, zumindest unter Verwendung eines herkömmlichen Schaltauges. Ein herkömmliches Schaltauge wird nämlich keine hinreichende axiale Dicke aufweisen, um zwischen den Ausfallenden die nötige Spannkraft zum Einspannen der Hinterradachsanordnung aufbringen zu können. Auch dürften herkömmliche Schaltaugen mangels geeigneter, auf einander bezogener Schnittstellen des Schaltauges einerseits und des zugeordneten Ausfallendes andererseits kaum passend an der Innenseite des Ausfallendes positionierbar und ordnungsgemäß montierbar sein.

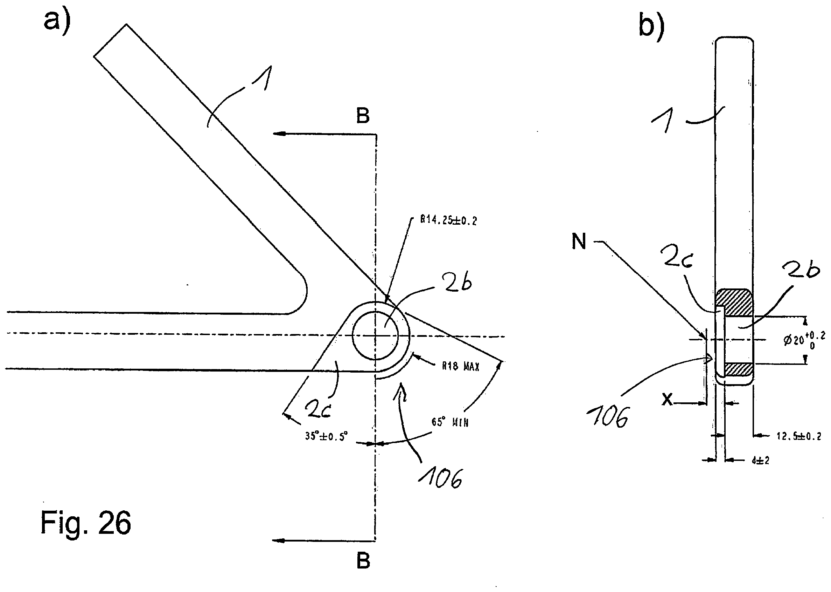

Figur 26 zeigt ein Beispiel für eine bevorzugte Ausgestaltung des hinteren rechten Ausfallendes eines Fahrradrahmens, der für die Montage des hinteren Schaltwerks des neuen (zweiten) Typs vorgesehen ist. Es ist eine Montageöffnung 2b mit einem Öffnungsdurchmesser von etwa 20 mm vorgesehen, die sich unter Ausbildung einer senkrecht stehenden Körperkante auf der Innenseite zu einer Aufnahmeaussparung 2c erweitert, welche eine Schnittstelle für den ersten (inneren) Arm 22a des Basiselements 22 bildet. Die Aussparung 2c kann beispielsweise eine axiale Tiefe von etwa 4 mm aufweisen, und der die Öffnung 2b aufweisende Bereich des Ausfallendes kann beispielsweise eine axiale Tiefe von etwa 12,5 mm aufweisen, entsprechend einer Gesamtdicke des Ausfallendes in diesem Bereich von etwa 16,5 mm. Betreffend das axiale Maß x zwischen der die Aussparung 2c bereichsweise begrenzenden Körperkante und dem die Einspannkraft zwischen den Ausfallenden aufnehmenden Anschlagelement N der Hinterradachsanordnung (beispielsweise das diesseitige Ende der Hohlachse oder Nabenendkappe oder Achsmutter oder ein vergleichbares Funktionsteil) wird entsprechend der oben erwähnten Ausgestaltungsmöglichkeiten für ersten (inneren) Arm 20a des Basiselements 20 an einen axialen Abstand von etwa 7 bis 9 mm, konkreter beispielsweise an einen axialen Abstand von etwa 8 mm zwischen der Körperkante und dem Anschlagelement N gedacht. Speziell eine Dicke von 8 mm für den ersten Arm des Basiselements 20, also ein Maß x von 8 mm, wird besonders favorisiert. Der erste Arm 20a ist im Bereich der Aussparung 2c bevorzugt so ausgeführt, dass im noch nicht festgezogenen Vormontagezustand eine Verdrehbarkeit des Basiselements 20 über einen gewissen Winkelbereich relativ zu dem in der Montageöffnung 2b aufgenommenen Adapter 60 bzw. relativ zu dem Ausfallende gegeben ist, wie oben beschrieben.

Ein bereitgestelltes Set von Komponenten umfasst zusätzlich auch ein hinteres Schaltwerk des herkömmlichen ersten Typs (etwa gemäß Figur 13), sowie ein zugehöriges Schaltauge, welches eine ordnungsgemäße Montage des hinteren Schaltwerks des ersten Typs an dem eigentlich für die Montage eines hinteren Schaltwerks des zweiten Typs vorgesehenen Rahmen ermöglicht. Die Erfindung stellt hierzu speziell das gewissermaßen eine Adapterfunktion zur Adaptierung des hinteren Schaltwerks des ersten Typs an den für die Montage des hinteren Schaltwerks des zweiten Typs ausgelegten Fahrradrahmen erfüllende Schaltauge (hier auch als Halterungselement bezeichnet) bereit. Ein solches von Erfindung bereitgestelltes Schaltauge ist aber auch unabhängig von dieser Adapterfunktion vorteilhaft und von Interesse, sodass die Erfindung nach einem von der Bereitstellung des hinteren Schaltwerks des zweiten Typs und des zugeordneten Fahrradrahmens unabhängigen Aspekt dieses Schaltauge auch allgemein für die nicht-koaxiale Montage in Bezug auf die Hinterradachse von herkömmlichen hinteren Schaltwerken (des ersten Typs) an einem Fahrradrahmen vorschlägt. Ein solcher Fahrradrahmen braucht nicht für die Montage eines hinteren Schaltwerks des zweiten Typs geeignet zu sein.

Die Figuren 27 und 28 zeigen ein bevorzugtes Ausführungsbeispiel für ein erfindungsgemäßes Halterungselement oder Schaltauge 100. Nach diesem Ausführungsbeispiel ist das Schaltauge 100 vorteilhaft mehrteilig ausgeführt, mit einem laschenartigen Metallteil 102 und einem die axiale Dicke des Schaltauges100 im Bereich der Einspannung zwischen den Halterungsabschnitten oder Ausfallenden des Rahmens vergrößernden Abstandsteil 104, welches einen auf der Innenseite des Metallteils aufliegenden Abstandshalterabschnitt 105 aufweist. Vorliegend ist das Abstandsteil gemäß einer besonders bevorzugten, aber nicht zwingenden Ausgestaltung als Kunststoffteil ausgeführt, und es kann neben der Funktion der Anpassung der axialen Dicke an die Gegebenheiten des jeweiligen Fahrradrahmens auch vorteilhafte Zusatzfunktionen erfüllen, wie bei diesem Ausgangsbeispiel realisiert. So dient das Abstandsteil oder Kunststoffteil 104 zur Anpassung an die Schnittstelle des zugeordneten hinteren Ausfallendes 106 des Rahmens. Bezugnehmend auf das Beispiel der Figur 26 dient das Kunststoffteil 104 zur Anpassung an die Geometrie der Aussparung 2c. Hierzu weist das Kunststoffteil 104 einen Außenumfang auf, der gerade in den Innenumfang der Aussparung 2c passt, sodass das Schaltauge 102 im am Rahmen montierten Zustand gegen eine Verdrehung relativ zum Rahmen gesichert ist. Die Befestigung des Schaltauges 102 am Rahmen erfolgt durch einen schraubbolzenartigen Adapter 108, der von der Außenseite des Rahmens mit seinem Außengewindeabschnitt 110 in ein Innengewinde 121 einer Montageöffnung 120 des Metallteil 102 eingeschraubt wird und sich hierzu durch eine zugeordnete Durchlassöffnung 122 des Abstandshalterabschnitts 105 des Kunststoffteils 104 erstreckt.

Das Kunststoffteil 104 weist einen in axialer Richtung zum anderen hinteren Ausfallende vorstehenden Kragen 124 auf, der als Montage- und Positionierungshilfe für die Nabenanordnung bzw. deren Hohlachse im Zuge der Montage des Hinterrads dient. Der mit dem Abstandshalterabschnitt 105 einteilig zusammenhängende und einen Rand des Metallteils 102 übergreifende Kragen 124 stellt hierzu eine Führung- und Positionierungsfläche bereit, an der die Hohlachse abgleiten kann, um diese in die richtige Position zu bringen, in der dann die Montage durch Einführen der zugeordneten, vorzugsweise als Steckachse ausgeführten inneren Achse durch die Hohlachse und Verschrauben der Steckachse mit dem Adapter 108 abgeschlossen werden kann. Die Steckachse wird hierbei mit einem Einschraubende in ein Innengewinde 126 des Adapters 108 eingeschraubt, analog wie dies bei der beschriebenen Montage eines hinteren Schaltwerks des neuen (zweiten) Typs erfolgt.

Auf an sich bekannte Art und Weise weist das Metallteil 102 eine Halteöffnung 130 in einem unteren Bereich auf, in die eine Einschraubhülse 132 festgelegt wird bzw. festgelegt ist, beispielsweise im Presssitz gehalten ist. Die Einschraubhülse 132 weist an einem axial inneren Ende einen radial vorstehenden Bund 134 auf, der auf der Innenseite des Metallteils 102 aufsitzt und so ein Festschrauben des Basiselements eines hinteren Schaltwerks des herkömmlichen (ersten) Typs auf der Außenseite des Metallteils 102 auf an sich bekannte Art und Weise ermöglicht. Die Verschraubung erfolgt mit dem Innengewinde 136 der Einschraubhülse 132. Je nach Dicke und Material des Metallteils 102 könnte aber auch eine Verschraubung mit einem Innengewinde der Halteöffnung 130 vorgesehen sein, unter Verzicht auf die Einschraubhülse.

Das Metallteil 102 kann - wie beim Ausführungsbeispiel realisiert - eine oder mehrere Öffnungen oder Aussparungen aufweisen, die zur Gewichtsersparnis dienen. Eine solche Öffnung 140 ist in den Figuren in einem mittleren Bereich des Schaltauges 100 gezeigt. Je nach der Schnittstelle des hinteren Ausfallendes kann wenigstens ein weiteres, dem Schaltauge zugehöriges Zusatzteil vorgesehen sein, wie beim Ausgangsbeispiel anhand des auch als Hilfsteil bezeichneten Zusatzteils 142 veranschaulicht. Es kann sich ebenfalls um ein Kunststoffteil handeln. Beim Ausgangsbeispiel ist das Hilfsteil 142 mit einem Halteabschnitt 144 ausgeführt, welcher in eine neben der Montageöffnung 120 vorgesehene Halteöffnung 146 des Metallteils 102 eingefügt wird bzw. ist. Dieses Hilfsteil 142 dient ebenfalls zu Anpassung an die Schnittstelle des Ausfallendes und speziell zur Abstützung von Drehkräften am Rahmen, die am Schaltauge relativ zum Ausfallende wirken. Hierzu weist das Hilfsteil 142 von dem Halteabschnitt 144 vorstehende Anpassungs- und Anschlagabschnitte 148 und 150 auf.

Man kann in Bezug auf einen Typ von laschenartigem Metallteil 102 mehrere alternative Abstandsteile 104 oder/und mehrere alternative Hilfsteile 142 vorsehen, um an unterschiedliche Rahmenschnittstellen anpassen zu können. So könnten die Abstandsteile 124, insbesondere Kunststoffteile 124, unterschiedliche axiale Dicken des Abstandshalterabschnitts 105 und unterschiedliche gestaltete Kragen 124 aufweisen.

Das das tragende Teil des Schaltauges 100 darstellende Metallteil 102 ist vorzugsweise als Stanzteil ausgeführt und beispielsweise aus etwa 5 mm starkem Blech gestanzt. Allgemein wird daran gedacht, die Wandstärkenverhältnisse derart auszulegen, dass auch hochwertige Legierungen (z.B. AL 7075 T6) verarbeitet werden können. In einem typischen Versagensfall, nämlich Verbiegen oder Brechen des Metallteils 102 im Bereich zwischen der Nabenachse und dem Basiselement des Schaltwerks, braucht nur das universelle und billige Stanzteil 102 ausgetauscht werden. Die schon angesprochene Öffnung 140 im mittleren Bereich des Metallteils 102 kann auch eine gezielte Schwächungsfunktion erfüllen, um eine Art Sollbruchstelle oder Sollbiegestelle für das Metallteil 102 vorzusehen, so dass Beschädigungen an anderer Stelle, speziell des Schaltwerks und des Fahrradrahmens, möglichst vermieden werden.

Bezugnehmend auf den Fahrradrahmen der Figur 26 wird vorgeschlagen, dass die gemeinsame axiale Dicke des Metallteils 102 mit dem Abstandshalterabschnitt 105 gerade dem axialen Abstandsmaß x entspricht, sodass das Schaltauge 100 den ersten (inneren) Arm 20a des Basiselements 20 des neuen (zweiten) Typs ersetzen kann, unter Gewährleistung im wesentlichen identischer Einspann- und Festspannverhältnisse. Beim Ausgangsbeispiel der Figuren 27 und 28 ist das innere Ende des auch als Achsbolzen bezeichenbaren Adapters 108 bündig mit der Innenseite des Metallteils 102. Das Anschlagelement N der Hinterradachsanordnung kann dann an dem inneren Ende des Adapters 108 oder/und an der Innenseite des Metallteils 102 anschlagen. Bevorzugt schlägt das Anschlagelement N an einer Anschlagfläche des inneren Endes des Adapters 108 an.

Man kann auch alternative Typen von Adaptern bzw. Achsbolzen 108 bereitstellen, um eine Anpassung an unterschiedliche Steckachsen vorzusehen, beispielsweise an eine Steckachse mit einem Durchmesser von 12 mm und alternativ an eine Steckachse mit einem Durchmesser von 15 mm.

Die Figuren 29 und 30 zeigen ein weiteres Ausführungsbeispiel. Es sind in diesen Figuren gegenüber den Figuren 27 und 28 die gleichen Bezugszeichen jeweils erhöht um 100 verwendet, und es werden im Folgenden nur die Unterschiede gegenüber dem Ausführungsbeispiel der Figuren 27 und 28 erläutert.

Bei diesem Ausführungsbeispiel ist auf das Innengewinde in der Öffnung 220 des Metallteils 202 verzichtet. Stattdessen ist das Abstandsteil 204, insbesondere Kunststoffteil 204, mit einem in die die zugeordnete Rahmenöffnung 2b einzuführenden bzw. eingeführten, gegebenenfalls durch diese hindurchzuführenden bzw. hindurchgeführten Hülsenabschnitt 260 ausgeführt, welcher ein Innengewinde 262 aufweist, in welches ein Außengewinde 264 des Adapters bzw. Achsbolzens 208 eingeschraubt wird bzw. ist.

Anstelle der beim Ausführungsbeispiel der Figuren 27 und 28 vorgesehenen Klemmung des Kunststoffteils 104 an seinem Abstandabschnitt 105 zwischen dem Rahmen und dem Metallteil 102 vermittels des Adapters 108 ist eine unmittelbare Festklemmung des Kunststoffteils 204 an dem Rahmen vermittels des Adapters 208 realisiert. Das Metallteil 202 wird dabei nicht vermittels des Adapters 208 festgeklemmt. Das Kunststoffteil 204 hält das Metallteil aber in einer definierten rotatorischen Stellung in Bezug auf das Ausfallende des Rahmens. Die Klemmung des Metallteils 202 erfolgt im montierten Zustand vermittels der Steckachse und des am Metallteil 202 anschlagenden Anschlagelements N der Hinterradachsanordnung. Das innere Ende Adapters 108 ist nicht bündig mit der Innenseite des Metallteils 202, sondern gegenüber dieser etwas in Richtung nach außen versetzt. Es ergibt sich aufgrund des Verzichts auf das Innengewinde in der Öffnung 220 des Metallteils 201 eine Kostenreduktion sowie aufgrund einer Reduzierung der Wandstärke des Adapters 208 eine Gewichtsreduktion gegenüber dem Ausführungsbeispiel der Figuren 27 und 28.

Die Figuren 31 und 32 zeigen zwei weitere Ausführungsvarianten eines Halterungselements oder Schaltauges 300 bzw. 400, die sehr ähnlich zur Ausführungsform der Figuren 27 und 28 ausgeführt sind. Der Rahmen 1 ist an seinem hinteren rechten Ausfallende etwas anderes ausgeführt als beim Ausführungsbeispiel der Figur 26. Es ist jeweils eine durch eine linke Rahmenöffnung 2a eingesteckte und mit dem in die rechte Rahmenöffnung 2b eingesteckten Adapter 308 bzw. 408 verschraubte Steckachse 7 gezeigt, die sich durch unterschiedliche Außendurchmesser und Wandstärken unterscheiden. Dementsprechend ist auch die Wandstärke der Adapter 308 und 408 unterschiedlich. Figur 33 ist eine vergrößerte Darstellung des Bereichs des rechten Ausfallendes, wobei zusätzlich eine Nabenendkappe 4 als Anschlagelement N der Hinterradachsanordnung dargestellt ist. Die Nabenendkappe 4 liegt an einer inneren Anschlagfläche am inneren Ende des Adapters 408 an und stützt die wirkende Spannkraft an diesem Adapter ab, der die Spannkraft seinerseits über das Metallteil 402 und den Abstandshalterabschnitt 405 des Kunststoffteils 404 an der Innenseite des Ausfallendes des Rahmens 1 abstützt.

Betreffend die Komponenten des Schaltauges oder Halterungselements 304 und 404 sind in den Figuren 31 bis 33 wieder die Bezugszeichen der vorangehenden Ausführungsbeispiele jeweils vermehrt um 100 verwendet. Die numerisch einstelligen Bezugszeichen verweisen auf entsprechende Komponenten der Ausführungsbeispiele der Figuren 1 bis 26.

Mittels des erfindungsgemäßen Schaltauges bzw. Halterungselements kann ein herkömmliches hinteres Schaltwerks des angesprochenen ersten Typs zuverlässig und positionsgerecht an einem Fahrradrahmen montiert werden, der eigentlich für die Montage eines hinteren Schaltwerks des angesprochenen neuen zweiten Typs vorgesehen ist. Aus der vorangehenden Beschreibung sollte aber deutlich geworden sein, dass ein erfindungsgemäßes Halterungselement bzw. Schaltauge auch unabhängig von einem hinteren Schaltwerk des zweiten Typs und eines speziell hierfür ausgelegten Fahrradrahmens vorteilhaft ist und somit als unabhängiger eigenständiger Aspekt der Erfindung anzusehen ist. Besonders interessierende, da generell vorteilhafte Aspekte sind dabei unter anderem die unterschiedlichen axialen Dicken des vorzugsweise mehrteilig ausgeführten Haltungselement, die Adaption eines die eigentliche Tragfunktion ausführenden laschenartigen Metallteils durch wenigstens ein zugehöriges Zusatzteil insbesondere aus Kunststoff sowie die unterschiedlichen Befestigungsweisen des Haltungselements am Rahmen. Zu dem optional vorzusehenden Hilfsteil 142 bzw. 242 der Ausführungsbeispiele der Figuren 27 bis 30 wird ergänzend auf die Figur 34 verwiesen, die ein solches Hilfsteil ohne Beschränkung der Allgemeinheit in verschiedenen Ansichten zeigt. Je nach zugeordneter Ausfallende-Schnittstelle kann ein solches Hilfsteil auch eine völlig andere Gestalt aufweisen.

## Patentansprüche

1. Halterungselement (100; 200; 300; 400), welches an einer axialen Innenseite eines zugeordneten Halterungsabschnitts der für die Halterung einer Achse (7; 70; 80) einer Hinterradachsanordnung (4, 5, 6, 7, 8) eines hinteren Laufrads dienenden hinteren Halterungsabschnitte eines Fahrradrahmens (1) positionierbar ist, um ein hinteres Schaltwerk (RD) einer Kettenschaltung an dem Fahrradrahmen zu montieren,
umfassend einen ersten Abschnitt, der eine der Achse zugeordnete Öffnung oder Aussparung (120, 122; 220, 222) aufweist und im montierten Zustand unter Mitwirkung weiterer Komponenten einer zwischen den hinteren Halterungsabschnitten wirkenden Spannkraft ausgesetzt ist, und
umfassend einen zweiten Abschnitt, der eine gegenüber der Öffnung oder Aussparung im montierten Zustand gegenüber der Achse radial versetzte Montageöffnung (130; 230) aufweist, an der ein Anschlussende eines Basiselements des hinteren Schaltwerks (RD) festlegbar ist,
**dadurch gekennzeichnet, dass** eine die Montageöffnung (130; 230) umgebende Anlagefläche des zweiten Abschnitts, die dafür vorgesehen ist, eine Auflagefläche für das Anschlussende des montierten Basiselements zu bilden, gegenüber einer die Öffnung oder Aussparung (120, 122; 220, 222) umgebenden Anlagefläche des ersten Abschnitts auf einer axialen Außenseite des Halterungselements in Richtung zu einer axialen Innenseite des Halterungselements versetzt ist.

2. Halterungselement nach Anspruch 1, **dadurch gekennzeichnet, dass** die axiale Innenseite des Halterungselements (100; 200; 300; 400) über einen zumindest einen Oberflächenabschnitt des ersten Abschnitts und zumindest einen Oberflächenabschnitt des zweiten Abschnitts umfassenden Oberflächenbereich plan ausgeführt ist oder/und dass der erste Bereich axial dicker als der zweite Bereich ist.

3. Halterungselement nach Anspruch 1 oder 2, **dadurch gekennzeichnet, dass** das Halterungselement (100; 200; 300; 400) in einem Randbereich des ersten Abschnitts auf der axialen Innenseite mit einem axial vorstehenden Kragen (124; 224) ausgeführt ist.

4. Halterungselement nach Anspruch 3, **dadurch gekennzeichnet, dass** das Halterungselement (100; 200; 300; 400) mehrteilig ausgeführt ist, mit einem vorzugsweise beidseitig planen laschenartigen Metallteil (102; 202; 302; 304), welches in einem dem ersten Abschnitt zugeordneten ersten Bereich eine der Achse (7; 70; 80) zugeordnete Öffnung oder Aussparung (120; 220) aufweist und in einem dem zweiten Abschnitt zugeordneten zweiten Bereich die Montageöffnung (130; 230) aufweist, und mit wenigstens einem mit dem Metallteil an dessen ersten Bereich kombinierten oder kombinierbaren Kunststoffteil (104; 204; 304; 404), welches einen dem ersten Abschnitt zugeordneten, vorzugsweise beidseitig planen Abstandshalterbereich aufweist, der eine der Achse zugeordnete Öffnung oder Aussparung (122; 222) aufweist und im montierten Zustand auf dem ersten Bereich des Metallteils aufliegt, um den ersten Abschnitt des Halterungselements zu bilden.

5. Halterungselement nach Anspruch 4, **dadurch gekennzeichnet, dass** das Kunststoffteil (104; 204; 304; 404) den axial vorstehenden Kragen (124; 204) aufweist und mit einem Übergangsbereich zwischen dem Kragen und dem Abstandshalterbereich einen Randbereich des Metallteils (102; 202; 302; 402) zumindest abschnittsweise überdeckt.

6. Halterungselement nach Anspruch 4 oder 5, **dadurch gekennzeichnet, dass** das laschenartige Metallteil (102; 302; 402) eine Gewindeanordnung zum Verschrauben mit einem Befestigungselement (108; 308; 408) zum Festlegen an dem hinteren Halterungsabschnitt des Rahmens aufweist.

7. Halterungselement nach Anspruch 4 oder 5, **dadurch gekennzeichnet, dass** das Kunststoffteil (204) eine Gewindeanordnung (262) zum Verschrauben mit einem Befestigungselement (208) zum Festlegen an dem hinteren Halterungsabschnitt des Rahmens aufweist.

8. Halterungselement nach Anspruch 7, **dadurch gekennzeichnet, dass** das Kunststoffteil (204) einen axial vorstehenden und in eine Rahmenöffnung (2b) des zugeordneten hinteren Halterungsabschnitts einführbaren Hülsenabschnitt (260) mit einem Innengewinde (262) für die Verschraubung mit dem Befestigungselement (208) aufweist.

9. Halterungselement nach einem der Ansprüche 1 bis 3, **dadurch gekennzeichnet, dass** das Halterungselement (100; 200) mehrteilig ausgeführt ist, mit einem vorzugsweise beidseitig planen laschenartigen Metallteil (102; 203), welches in einem ersten Bereich eine der Achse (7; 70; 80) zugeordnete Öffnung oder Aussparung (120; 220) aufweist, und welches in einem zweiten Bereich die Montageöffnung (130; 230) aufweist, und mit wenigstens einem mit dem Metallteil an dessen ersten Bereich oder an einem zu diesem benachbarten dritten Bereich des Metallteils kombinierten oder kombinierbaren Hilfsteil (142; 242), welches zur Anpassung an eine Schnittstelle des zugeordneten hinteren Halterungsabschnitts oder/und als Drehanschlag zur Abstützung von Drehkräften in an wenigstens einer zugeordneten Anschlagfläche des zugeordneten hinteren Halterungsabschnitts dient und vorzugsweise als Kunststoffteil ausgeführt ist.

10. Halterungselement nach einem der Ansprüche 4 bis 8, **dadurch gekennzeichnet, dass** das Halterungselement (100; 200) mehrteilig ausgeführt ist, mit dem vorzugsweise beidseitig planen laschenartigen Metallteil (102; 203), welches in dem ersten Bereich die der Achse (7; 70; 80) zugeordnete Öffnung oder Aussparung (120; 220) aufweist, und welches in dem zweiten Bereich die Montageöffnung (130; 230) aufweist, und mit wenigstens einem mit dem Metallteil an dessen ersten Bereich oder an einem zu diesem benachbarten dritten Bereich des Metallteils kombinierten oder kombinierbaren Hilfsteil (142; 242), welches zur Anpassung an eine Schnittstelle des zugeordneten hinteren Halterungsabschnitts oder/und als Drehanschlag zur Abstützung von Drehkräften in an wenigstens einer zugeordneten Anschlagfläche des zugeordneten hinteren Halterungsabschnitts dient und vorzugsweise als Kunststoffteil ausgeführt ist.

11. Halterungselement nach Anspruch 9 oder 10, **dadurch gekennzeichnet, dass** das Hilfsteil (142; 242) einen in eine Halteöffnung oder Halteaussparung (146; 246) des laschenartigen Metallteils eingefügten oder einfügbaren Halteabschnitt (146; 246) und wenigstens einen mit diesem einteilig verbundenen Anpassungs- oder/und Anschlagabschnitt (148, 150; 248, 250) aufweist.

12. Halterungselement nach Anspruch 11 und nach Anspruch 10, **dadurch gekennzeichnet, dass** das Hilfsteil (142; 242) ein gegenüber dem den Abstandshalterbereich (105; 205) aufweisenden Kunststoffteil (104; 204) gesondertes Kunststoffteil ist.

13. Set von Komponenten, umfassend wenigstens ein laschenartiges Metallteil (102; 202; 302; 404) und einen Satz von alternativ mit dem Metallteil kombinierbaren Kunststoffteilen (104; 204; 304; 404), die an unterschiedliche Einsatz- oder Montagesituationen angepasst sind, wobei die Kombination aus dem laschenartigen Metallteil und einem jeden der Kunststoffteile jeweils ein Halterungselement (100; 200; 300; 400) gemäß einem der Ansprüche 4 bis 8 oder 10 bis 12 ergibt.

14. Fahrrad, welches einen Fahrradrahmen (1) mit einem linken hinteren Halterungsabschnitt und einem rechten hinteren Halterungsabschnitt für eine Achse (7; 70; 80) einer Hinterradachsanordnung (4, 5, 6, 7, 8) eines hinteren Laufrads aufweist, welche einen vorbestimmten definierten Axialabstand längs einer geometrischen Achse (A) der mittels der Halterungsabschnitte an dem Rahmen montierten Achse aufweisen und jeweils ein Gegenlager für eine an der Achse angeordnete, im montierten Zustand zwischen den Halterungsabschnitten eingespannte Komponentengruppe (4, 5, 8) bilden;
wobei das Fahrrad mit einer Kettenschaltung ausgestattet ist, deren hinteres Schaltwerk (RD) nicht-koaxial in Bezug auf die geometrische Achse (A) am Rahmen montiert ist, wobei ein Basiselement des hinteren Schaltwerks ein Anschlussende aufweist, welches mittels eines gegenüber dem Rahmen gesonderten, an einer axialen Innenseite eines zugeordneten der hinteren Halterungsabschnitte positionierten Halterungselements (100; 200; 300; 400) gegenüber der geometrischen Achse radial versetzt am Fahrradrahmen montiert ist,
**dadurch gekennzeichnet, dass** als Halterungselement ein Halterungselement (100; 200; 300; 400) gemäß einem der Ansprüche 1 bis 12 verbaut ist.

## Claims

1. Bracket element (100; 200; 300; 400) which is positionable on an axial inner side of an associated bracket portion of the rear bracket portions, which serve for holding an axle (7; 70; 80) of a rear-wheel axle arrangement (4, 5, 6, 7, 8) of a rear wheel, of a bicycle frame (1) for the purposes of installing a rear gearshift mechanism (RD) of a derailleur system on the bicycle frame,
comprising a first portion, which has an opening or aperture (120, 122; 220, 222) assigned to the axle and which, in the installed state, with the cooperation of further components, is subjected to a clamping force which acts between the rear bracket portions, and
comprising a second portion, which second portion has an installation opening (130; 230) which is radially offset in relation to the opening or aperture in the installed state with respect to the axis and to which an attachment end of a base element of the rear gearshift mechanism (RD) is fixable,
**characterized in that** an abutment surface of the second portion, which abutment surface surrounds the installation opening (130; 230) and is provided for forming a support surface for the attachment end of the installed base element, is offset in relation to an abutment surface of the first portion, which abutment surface surrounds the opening or aperture (120, 122; 220, 222) and is on an axial outer side of the bracket element, said offset being in the direction of the axial inner side of the bracket element.

2. Bracket element according to Claim 1, **characterized in that** the axial inner side of the bracket element (100; 200; 300; 400) is of planar design over a surface region which encompasses at least one surface portion of the first portion and at least one surface portion of the second portion, and/or in that the first region is axially thicker than the second region.

3. Bracket element according to Claim 1 or 2, **characterized in that** the bracket element (100; 200; 300; 400) is designed with an axially projecting collar (124; 224) in an edge region of the first portion on the axial inner side.

4. Bracket element according to Claim 3, **characterized in that** the bracket element (100; 200; 300; 400) is of multi-part design, having a lug-like metal part (102; 202; 302; 304) which is planar preferably on both sides, which metal part, in a first region assigned to the first portion, has an opening or aperture (120; 220) assigned to the axle (7; 70; 80), and in a second region assigned to the second portion, has the installation opening (130; 230), and having at least one plastics part (104; 204; 304; 404), which plastics part is combined or combinable with the metal part at its first region and has a spacer region, which spacer region is assigned to the first portion and is planar preferably on both sides and has an opening or aperture (122; 222) assigned to the axle and which spacer region, in the installed state, lies on the first region of the metal part in order to form the first portion of the bracket element.

5. Bracket element according to Claim 4, **characterized in that** the plastics part (104; 204; 304; 404) has the axially projecting collar (124; 204) and, with a transition region between the collar and the spacer region, overlaps an edge region of the metal part (102; 202; 302; 402) at least in portions.

6. Bracket element according to Claim 4 or 5, **characterized in that** the lug-like metal part (102; 302; 402) has a thread arrangement for screwing together with a fastening element (108; 308; 408) for the purposes of fixing to the rear bracket portion of the frame.

7. Bracket element according to Claim 4 or 5, **characterized in that** the plastics part (204) has a thread arrangement (262) for screwing together with a fastening element (208) for the purposes of fixing to the rear bracket portion of the frame.

8. Bracket element according to Claim 7, **characterized in that** the plastics part (204) has an axially projecting sleeve portion (260) which is insertable into a frame opening (2b) of the associated rear bracket portion and which has an internal thread (262) for screwing together with the fastening element (208).

9. Bracket element according to any of Claims 1 to 3, **characterized in that** the bracket element (100; 200) is of multi-part design, having a lug-like metal part (102; 203) which is planar preferably on both sides, which metal part, in a first region, has an opening or aperture (120; 220) assigned to the axle (7; 70; 80), and which metal part, in a second region, has the installation opening (130; 230), and having at least one auxiliary part (142; 242) which is combined or combinable with the metal part at its first region or at a third region, adjacent to said first region, of the metal part, which auxiliary part serves for adaptation to an interface of the associated rear bracket portion and/or as a rotational abutment for the support of rotational forces in on at least one associated abutment surface of the associated rear bracket portion, and is preferably formed as a plastics part.

10. Bracket element according to any of Claims 4 to 8, **characterized in that** the bracket element (100; 200) is of multi-part design, having the lug-like metal part (102; 203) which is planar preferably on both sides, which metal part, in the first region, has the opening or aperture (120; 220) assigned to the axle (7; 70; 80), and which metal part, in the second region, has the installation opening (130; 230), and having at least one auxiliary part (142; 242) which is combined or combinable with the metal part at its first region or at a third region, adjacent to said first region, of the metal part, which auxiliary part serves for adaptation to an interface of the associated rear bracket portion and/or as a rotational abutment for the support of rotational forces in on at least one associated abutment surface of the associated rear bracket portion, and is preferably formed as a plastics part.

11. Bracket element according to Claim 9 or 10, **characterized in that** the auxiliary part (142; 242) has a holding portion (146; 246), which is inserted or insertable into a holding opening or holding aperture (146; 246) of the lug-like metal part, and at least one adaptation and/or abutment portion (148, 150; 248, 250), which is connected integrally to said holding portion.

12. Bracket element according to Claim 11 and according to Claim 10, **characterized in that** the auxiliary part (142; 242) is a plastics part that is separate from the plastics part (104; 204) that has the spacer region (105; 205).

13. Set of components, comprising at least one lug-like metal part (102; 202; 302; 404) and a set of plastics parts (104; 204; 304; 404) which are alternatively combinable with the metal part and which are adapted to different use or installation situations, wherein the combination of the lug-like metal part and any of the plastics parts yields in each case one bracket element (100; 200; 300; 400) according to any of Claims 4 to 8 or 10 to 12.

14. Bicycle, which has a bicycle frame (1) having a left-hand rear bracket portion and a right-hand rear bracket portion for an axle (7; 70; 80) of a rear-wheel axle arrangement (4, 5, 6, 7, 8) of a rear wheel, which bracket portions have a predetermined defined axial spacing along a geometrical axis (A) of the axle installed on the frame by means of the bracket portions, and which bracket portions form in each case one counterbearing for a component group (4, 5, 8) which is arranged on the axle and which in the installed state is clamped between the bracket portions;
wherein the bicycle is equipped with a derailleur system, the rear gearshift mechanism (RD) of which is installed on the frame non-coaxially in relation to the geometrical axis (A), wherein a base element of the rear gearshift mechanism has an attachment end which is installed on the bicycle frame, so as to be radially offset with respect to the geometrical axis, by means of a bracket element (100; 200; 300; 400) which is separate with respect to the frame and which is positioned on an axial inner side of an associated one of the rear bracket portions,
**characterized in that**, as bracket element, a bracket element (100; 200; 300; 400) according to any of Claims 1 to 12 is installed.

## Revendications

1. Élément de support (100; 200 ; 300 ; 400), qui peut être positionné sur un côté intérieur axial d'une section de support associée des sections de support arrière d'un cadre de bicyclette (1) servant au support d'un axe (7 ; 70 ; 80) d'un agencement d'axe de roue arrière (4, 5, 6, 7, 8) d'une roue arrière, afin de monter un dispositif de commutation arrière (RD) d'un dérailleur sur le cadre de bicyclette,
comprenant une première section, qui présente une ouverture ou un évidement (120, 122 ; 220, 222) associé à l'axe et qui, à l'état monté, est soumise à une force de serrage agissant entre les sections de support arrière, avec le concours d'autres composants, et comprenant une deuxième section, qui présente une ouverture de montage (130 ; 230) décalée radialement par rapport à l'ouverture ou à l'évidement à l'état monté par rapport à l'axe, sur laquelle peut être immobilisée une extrémité de raccordement d'un élément de base du dispositif de commutation arrière (RD),
**caractérisé en ce qu'**une surface d'appui de la deuxième section, entourant l'ouverture de montage (130 ; 230), qui est prévue pour former une surface d'appui pour l'extrémité de raccordement de l'élément de base monté, est décalée par rapport à une surface d'appui de la première section, entourant l'ouverture ou l'évidement (120, 122 ; 220, 222), sur un coté extérieur axial de l'élément de support en direction d'un côté intérieur axial de l'élément de support.

2. Élément de support selon la revendication 1, **caractérisé en ce que** le côté intérieur axial de l'élément de support (100 ; 200 ; 300 ; 400) est réalisé sous forme plane sur une zone de surface comprenant au moins une section de surface de la première section et au moins une section de surface de la deuxième section ou/et **en ce que** la première zone est axialement plus épaisse que la deuxième zone.

3. Élément de support selon la revendication 1 ou 2, **caractérisé en ce que** l'élément de support (100 ; 200 ; 300 ; 400) est réalisé dans une zone de bord de la première section sur le côté intérieur axial avec un collet (124 ; 224) faisant saillie axialement.

4. Élément de support selon la revendication 3, **caractérisé en ce que** l'élément de support (100 ; 200 ; 300 ; 400) est réalisé en plusieurs parties, avec une partie métallique (102 ; 202 ; 302 ; 304) en forme de patte, de préférence plane des deux côtés, qui présente dans une première zone associée à la première section une ouverture ou un évidement (120 ; 220) associé à l'axe (7 ; 70 ; 80) et dans une deuxième zone associée à la deuxième section l'ouverture de montage (130 ; 230), et avec au moins une partie en matière plastique (104 ; 204 ; 304 ; 404) combinée ou combinable avec la partie métallique au niveau de sa première zone, qui présente une zone d'écartement associée à la première section, de préférence plane des deux côtés, qui présente une ouverture ou un évidement (122 ; 222) associé à l'axe et qui, à l'état monté, repose sur la première zone de la partie métallique afin de former la première section de l'élément de support.

5. Élément de support selon la revendication 4, **caractérisé en ce que** la partie en matière plastique (104 ; 204 ; 304 ; 404) présente le collet (124 ; 204) faisant saillie axialement et recouvre au moins par sections une zone de bord de la partie métallique (102 ; 202 ; 302 ; 402) avec une zone de transition entre le collet et la zone d'écartement.

6. Élément de support selon la revendication 4 ou 5, **caractérisé en ce que** la partie métallique en forme de patte (102 ; 302 ; 402) présente un agencement fileté pour le vissage avec un élément de fixation (108 ; 308 ; 408) pour l'immobilisation sur la section de support arrière du cadre.

7. Élément de support selon la revendication 4 ou 5, **caractérisé en ce que** la partie en matière plastique (204) présente un agencement fileté (262) pour le vissage avec un élément de fixation (208) pour l'immobilisation sur la section de support arrière du cadre.

8. Élément de support selon la revendication 7, **caractérisé en ce que** la partie en matière plastique (204) présente une section de manchon (260) faisant saillie axialement et pouvant être insérée dans une ouverture de cadre (2b) de la section de support arrière associée, avec un filetage intérieur (262) pour le vissage avec l'élément de fixation (208).

9. Élément de support selon l'une quelconque des revendications 1 à 3, **caractérisé en ce que** l'élément de support (100 ; 200) est réalisé en plusieurs parties, avec une partie métallique (102 ; 203) en forme de patte, de préférence plane des deux côtés, qui présente dans une première zone une ouverture ou un évidement (120 ; 220) associé à l'axe (7 ; 70 ; 80), et qui présente dans une deuxième zone l'ouverture de montage (130 ; 230), et avec au moins une partie auxiliaire (142 ; 242) combinée ou combinable avec la partie métallique au niveau de sa première zone ou au niveau d'une troisième zone de la partie métallique voisine de celle-ci, qui sert à l'adaptation à une interface de la section de support arrière associée ou/et de butée de rotation pour soutenir des forces de rotation dans à au moins une surface de butée associée de la section de support arrière associée et qui est de préférence réalisée sous forme de partie en matière plastique.

10. Élément de support selon l'une quelconque des revendications 4 à 8, **caractérisé en ce que** l'élément de support (100 ; 200) est réalisé en plusieurs parties, avec la partie métallique (102 ; 203) en forme de patte, de préférence plane des deux côtés, qui présente dans la première zone l'ouverture ou l'évidement (120 ; 220) associé à l'axe (7 ; 70 ; 80), et qui présente dans la deuxième zone l'ouverture de montage (130 ; 230), et avec au moins une partie auxiliaire (142 ; 242) combinée ou combinable avec la partie métallique au niveau de sa première zone ou au niveau d'une troisième zone de la partie métallique voisine de celle-ci, qui sert à l'adaptation à une interface de la section de support arrière associée ou/et de butée de rotation pour soutenir des forces de rotation dans à au moins une surface de butée associée de la section de support arrière associée et qui est de préférence réalisée sous forme de partie en matière plastique.

11. Élément de support selon la revendication 9 ou 10, **caractérisé en ce que** la partie auxiliaire (142 ; 242) présente une section de support (146 ; 246) insérée ou insérable dans une ouverture de support ou un évidement de support (146 ; 246) de la partie métallique en forme de patte et au moins une section d'adaptation ou/et de butée (148, 150 ; 248, 250) reliée d'un seul tenant à celle-ci.

12. Élément de support selon la revendication 11 et selon la revendication 10, **caractérisé en ce que** la partie auxiliaire (142 ; 242) est une partie en matière plastique séparée de la partie en matière plastique (104 ; 204) présentant la zone d'écartement (105 ; 205) .

13. Ensemble de composants, comprenant au moins une partie métallique en forme de patte (102 ; 202 ; 302 ; 404) et un jeu de parties en matière plastique (104 ; 204 ; 304 ; 404) combinables alternativement avec la partie métallique, qui sont adaptées à différentes situations d'utilisation ou de montage, la combinaison de la partie métallique en forme de patte et de chacune des parties en matière plastique donnant respectivement un élément de support (100 ; 200 ; 300 ; 400) selon l'une quelconque des revendications 4 à 8 ou 10 à 12.

14. Bicyclette, qui présente un cadre de bicyclette (1) ayant une section de support arrière gauche et une section de support arrière droite pour un axe (7 ; 70 ; 80) d'un agencement d'axe de roue arrière (4, 5, 6, 7, 8) d'une roue arrière, qui présentent une distance axiale définie prédéterminée le long d'un axe géométrique (A) de l'axe monté sur le cadre au moyen des sections de support, et qui forment chacune un contre-appui pour un groupe de composants (4, 5, 8) agencé sur l'axe, serré entre les sections de support à l'état monté ;
la bicyclette étant équipée d'un dérailleur, dont le dispositif de commutation arrière (RD) est monté sur le cadre de manière non coaxiale par rapport à l'axe géométrique (A), un élément de base du dispositif de commutation arrière présentant une extrémité de raccordement, qui est montée sur le cadre de bicyclette au moyen d'un élément de support (100 ; 200 ; 300 ; 400) séparé du cadre, positionné sur un côté intérieur axial d'une des sections de support arrière associées, de manière décalée radialement par rapport à l'axe géométrique,
**caractérisé en ce qu'**un élément de support (100 ; 200 ; 300 ; 400) selon l'une quelconque des revendications 1 à 12 est utilisé en tant qu'élément de support.
